(19) Europäisches Patentamt / European Patent Office / Office européen des brevets

(11) **EP 4 616 940 A1**

(12) **EUROPEAN PATENT APPLICATION**


(43) Date of publication:
**17.09.2025 Bulletin 2025/38**

(21) Application number: **25158468.6**

(22) Date of filing: **18.02.2025**

(51) International Patent Classification (IPC):
***B01J 20/08*** *(2006.01)* ***B01D 53/02*** *(2006.01)*
***B01J 20/10*** *(2006.01)* ***B01J 20/22*** *(2006.01)*
***B01J 20/28*** *(2006.01)* ***B01J 20/32*** *(2006.01)*
***B01J 20/34*** *(2006.01)*

(52) Cooperative Patent Classification (CPC):
**B01J 20/226; B01D 53/02; B01J 20/08; B01J 20/103; B01J 20/28004; B01J 20/28011; B01J 20/28014; B01J 20/3204; B01J 20/3217; B01J 20/3483; B01J 20/3491;** B01D 2253/202; B01D 2253/204; B01D 2253/25; B01D 2253/306;
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2024 US 202418606176**



(71) Applicant: **GE Vernova Technology GmbH**
**5400 Baden (CH)**

(72) Inventors:
- **ANTONIO, Alexandra**
  **Niskayuna, 12309 (US)**
- **LIU, Jie Jerry**
  **Niskayuna, 12309 (US)**
- **GOSWAMI, Subhadip**
  **Niskayuna, 12309 (US)**
- **O'BRIEN, Michael Joseph**
  **Niskayuna, 12309 (US)**
- **CHAABAN, Maya**
  **Niskayuna, 12309 (US)**
- **SHI, Xiaolei**
  **Niskayuna, 12309 (US)**
- **GLASER, Paul Burchell**
  **Suwanee, 30024 (US)**
- **MOORE, David Roger**
  **Niskayuna, 12309 (US)**

(74) Representative: **Openshaw & Co.**
**8 Castle Street**
**Farnham, Surrey GU9 7HR (GB)**


(54) **SOLID SORBENT MATERIALS FUNCTIONALIZED WITH POLYAMINES HAVING OXYGEN-CONTAINING UNITS SELECTED FROM CARBONYL UNITS, HYDROXYL UNITS, AND COMBINATIONS THEREOF**


(57) Described herein are sorbents functionalized with polyamines having oxygen-containing units selected from carbonyl units, hydroxyl units, and combinations thereof, methods of making same, and methods of using same.


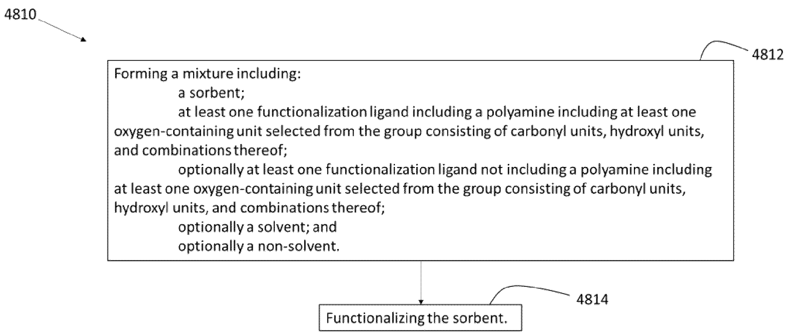


FIG. 48

EP 4 616 940 A1

(52) Cooperative Patent Classification (CPC): (Cont.)
B01D 2256/245; B01D 2257/504; B01D 2258/0283

## Description

FIELD OF DISCLOSURE

Described herein are sorbents functionalized with polyamines having oxygen-containing units selected from carbonyl units, hydroxyl units, and combinations thereof. The sorbents may be metal-organic framework sorbents or non-metal-organic framework sorbents. The sorbent materials developed in this disclosure exhibit low adsorption for water, high adsorption capacities for carbon dioxide and low desorption residuals under mild desorption conditions.

BACKGROUND

Using solid sorbent materials for carbon capture offers a viable and superior techno-economic alternative to traditional liquid-amine based carbon dioxide ($CO_2$) capture processes. Solid adsorbents tend to have better adsorption capacity, lower regeneration energy requirements, reduced system complexity and environmental and safety risks with respect to active liquid amines.

There are two types of sorbent materials based on their underlying adsorption mechanisms. One is physisorbent and the other chemisorbent. Physisorbents, such as activated carbon and zeolites, rely on van der Waals interactions to adsorb gaseous species such as $CO_2$ and water ($H_2O$). Chemisorbents, in particular, amine functionalized silica particles and metal-organic frameworks (MOF) etc., adsorb $CO_2$ through reversible chemical reactions and formation of ammonium carbamate, ammonium carbonate and/or ammonium bicarbonate. Although physisorbent materials are relatively mature as compared to chemisorbent materials, one of the key drawbacks of physisorbent materials is their significantly reduced $CO_2$ adsorption capacity due to interference by other polar molecules such as $H_2O$, which are inevitably present in the atmosphere and flue gases. By contrast, as a result of chemical bonding, chemisorbent materials generally have superior selectivity of $CO_2$ adsorption over other interfering species such as nitrogen ($N_2$), oxygen ($O_2$), methane and carbon monoxide (CO), etc with respect to their physisorbent counterparts.

An ideal chemisorbent material should have good adsorption capacity for $CO_2$, fast adsorption kinetics, easy and fast desorption properties under practical desorption conditions and good thermal and hydrothermal stability.

However, conventional sorbents for $CO_2$ tend to have high water uptakes. For instance, MOF-274 functionalized with spermine has water uptake of approximately 35% by weight under conditions such as 25°C and 50%RH relevant to direct air capture. Impact of water uptake on techno-economic analysis has generally been under-emphasized because the amount of adsorbed and desorbed water would add significant energy cost to any $CO_2$ capture plant at scale. For example, every ton of $H_2O$ adsorbed for every ton of $CO_2$ captured would add at least of 725 kWh energy cost due to the latent heat associated with desorption of $H_2O$, assuming the heat of sorption for $H_2O$ is 47kJ/mol. Thus, there is a need for sorbents that have low water uptakes.

In this disclosure, solid sorbent materials functionalized with polyamines having oxygen-containing units selected from carbonyl units, hydroxyl units, and combinations thereof are developed and demonstrated. The sorbent materials developed in this disclosure exhibit high adsorption capacities for carbon dioxide, low adsorption capacities for water, and low desorption residuals under mild desorption conditions.

BRIEF DESCRIPTION

In one aspect, a functionalized sorbent is provided. The functionalized sorbent includes a sorbent and at least one functionalization ligand including a polyamine including at least one oxygen-containing unit selected from the group consisting of carbonyl units, hydroxyl units, and combinations thereof.

In another aspect, a method of making a functionalized sorbent is provided. The method includes: (I) forming a mixture including: a sorbent; at least one functionalization ligand including a polyamine including at least one oxygen-containing unit selected from the group consisting of carbonyl units, hydroxyl units, and combinations thereof; optionally at least one functionalization ligand not including a polyamine including at least one oxygen-containing unit selected from the group consisting of carbonyl units, hydroxyl units, and combinations thereof; optionally a solvent; and optionally a non-solvent; and (II) functionalizing the sorbent.

In another aspect, a method of modifying a functionalized sorbent is provided. The method includes: (I) forming a mixture including: a sorbent functionalized with at least one functionalization ligand not including a polyamine including at least one oxygen-containing unit selected from the group consisting of carbonyl units, hydroxyl units, and combinations thereof; and a reaction agent; and (II) reacting the reaction agent with the sorbent functionalized with at least one functionalization ligand not including a polyamine including at least one oxygen-containing unit selected from the group consisting of carbonyl units, hydroxyl units, and combinations thereof to produce a sorbent functionalized with at least one functionalization ligand including a polyamine including at least one oxygen-containing unit selected from the group consisting of carbonyl units, hydroxyl units, and combinations thereof.

In yet another aspect, a method of capturing at least one gas is provided. The method includes: (I) receiving a gas source including the at least one gas at a functionalized sorbent, wherein the functionalized sorbent includes a sorbent and at least one functionalization ligand including a polyamine including at least one oxygen-containing unit selected from the group consisting of carbonyl units, hydroxyl units, and combinations thereof; and (II) capturing an amount of the at least one gas with the functionalized sorbent.

BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:

Figure 1 depicts an $^1$H NMR analysis of $Mg_2(dobpdc)_1(IPA)_{1.92}$ after digestion with 20 μL of 20% DCl in $D_2O$, 200 μL of $D_2O$, and 600 μL of DMSO-$d_6$ in accordance with the present disclosure;

Figure 2 depicts scanning electron microscope (SEM) images of exemplary MOF-274 made using salicylic acid (left) and fluoro-salicylic acid (right) as crystal-growth inhibitors in accordance with the present disclosure;

Figure 3 depicts powder X-ray diffraction spectra of MOF-274 synthesized using 4,4'-biphenol as crystal-growth inhibitor in accordance with the present disclosure;

Figure 4 depicts SEM images of exemplary MOF-274 made without (left) and with 9.24 wt% 4,4'-biphenol incorporation (right) in accordance with the present disclosure;

Figure 5 depicts powder X-ray diffraction spectra of MOF-274 synthesized using BPYDC as crystal-growth inhibitor in accordance with the present disclosure;

Figure 6 depicts SEM images of exemplary MOF-274 made using BPYDC as crystal-growth inhibitor (0.13wt%, 2.29wt% and 24.78wt%) incorporation in accordance with the present disclosure;

Figure 7 depicts powder X-ray diffraction spectra of MOF-274 synthesized using BPYDM as crystal-growth inhibitor in accordance with the present disclosure;

Figure 8 depicts SEM images of exemplary MOF-274 made using BPYDM as crystal-growth inhibitor (1.17wt%, 3.43wt% and 6.80wt% incorporation) in accordance with the present disclosure;

Figure 9 depicts an $^1$H NMR analysis performed on $Mg_2(dobpdc)_1(spermine)_{1.01}$ after digestion with 20 μL of 20% DCl in $D_2O$, 200 μL of $D_2O$, and 600 μL of DMSO-$d_6$ in accordance with the present disclosure. $^1$H NMR (DMSO-$d_6$, $D_2O$) δ 7.84 (dd, 2H), 7.67 (dd, 2H), 6.98 (dd, 2H), 2.90 (m, 12H), 1.93 (m, 4H), 1.65 (s, 4H);

Figure 10 depicts an $^1$H NMR analysis of 1,2-epoxybutane:spermine (O/N) in 600 μL of $CD_3OD$ with residual methanol (3.35 ppm) in accordance with the present disclosure. $^1$H NMR ($CD_3OD$) δ 3.58 (m, 1.06H), 2.67-2.4 (m, 14.08H), 1.66 (m, 4H), 1.54 (m, 6.28H), 0.96 (m, 3.24H);

Figure 11 depicts an $^1$H NMR analysis of β-methylhydroxyl-tetraamine in 600 μL of $D_2O$ in accordance with the present disclosure. $^1$H NMR ($D_2O$) δ 3.6-3.5 (dd, 1.91H), 3.01 (m, 0.99H), 2.55-2.95 (m, 9.94H), 1.82 (m, 2H), 1.65 (m, 4.10H);

Figure 12 depicts an $^1$H NMR analysis of HC:Spermine in 600 μL of $CD_3OD$ with residual methanol (3.35 ppm) in accordance with the present disclosure. The peaks used to estimate the amount of functionalization- $^1$H NMR ($CD_3OD$): δ 2.94-2.74 (10H, Spermine) and 0.94 (t, 3H, HC). The structure is drawn for simplification. The O/N ratio is 0.38 (see calculation below);

Figure 13 depicts an $^1$H NMR analysis performed on $Mg_2(dobpdc)_1(0.48\ HC{:}spermine)_{0.52}$ after digestion with 20 μL of 20% DCl in $D_2O$, 200 μL of $D_2O$, and 600 μL of DMSO-$d_6$ in accordance with the present disclosure. $^1$H NMR (DMSO-$d_6$, $D_2O$) δ 7.87 (dd, 2H), 7.71 (dd, 2H), 7.01 (d, 2H), 2.99-2.87 (m, 12H), 1.97-1.91 (m, 4H), 0.79-0.75 (6H). The integration of the peaks used to estimate the loading of amine are shown. Peaks due to solvent toluene (*), peaks due to spermine fragment of the amine (#) and the peak due to -$CH_3$ peak from hexyl chain (triangle) are labeled as

indicated;

Figure 14 depicts a synthesis scheme for covalent functionalization of amine to $\gamma$-$Al_2O_3$ in accordance with the present disclosure;

Figure 15 depicts TGA traces of $\gamma$-$Al_2O_3$ and GLYMO functionalized $\gamma$-$Al_2O_3$ in different solvents in accordance with the present disclosure. In Toluene, the GLYMO functionalization is about 14wt% (Green trace). In ethanol, varied loadings of GLYMO (25, 50 and 100 wt%) showed loaded GLYMO between 18-20 wt%;

Figure 16 depicts TGA traces of pure $\gamma$-$Al_2O_3$ and $\gamma$-$Al_2O_3$ functionalized with different amines in accordance with the present disclosure;

Figure 17 depicts TGA traces of pure $\gamma$-$Al_2O_3$ and one-pot synthesized $\gamma$-$Al_2O_3$ modified with GLYMO and further functionalized with spermine (GE324-1A) in accordance with the present disclosure;

Figure 18 depicts water isotherms at 25°C ($gH_2O$/gSorbent) for sorbents functionalized with pristine Amine 2-3-2 and 1,2-epoxybutane modified Amine 2-3-2 in accordance with the present disclosure;

Figure 19 depicts water isotherms at 25°C (number of $H_2O$ per amine group) for sorbents functionalized with pristine Amine 2-3-2 and 1,2-epoxybutane modified Amine 2-3-2 in accordance with the present disclosure;

Figure 20 depicts water isotherms at 25°C ($gH_2O$/gSorbent) for sorbents functionalized with pristine Amine 2-3-2 and (2,2,2-trifluoroethyl)oxirane (TFEO) modified Amine 2-3-2 in accordance with the present disclosure;

Figure 21 depicts water isotherms at 25°C (number of $H_2O$ per amine group) for sorbents functionalized with pristine Amine 2-3-2 and TFEO modified Amine 2-3-2 in accordance with the present disclosure;

Figure 22 depicts water isotherms at 25°C ($gH_2O$/gSorbent) for sorbents functionalized with spermine and epoxide modified spermines in accordance with the present disclosure;

Figure 23 depicts water isotherms at 25°C (expressed as the number of $H_2O$ per amine group) for sorbents functionalized with spermine and epoxide modified spermines in accordance with the present disclosure;

Figure 24 depicts water isotherms at 25°C ($gH_2O$/gSorbent) for sorbents functionalized with spermine vs post-synthesis modification by epoxides in accordance with the present disclosure;

Figure 25 depicts water isotherms at 25°C (number of $H_2O$ per amine group) for sorbents functionalized with spermine vs post-synthesis modification by epoxides in accordance with the present disclosure;

Figure 26 depicts a water isotherm at 25°C ($gH_2O$/gSorbent) for the sorbent functionalized with $\beta$-methylhydroxyl-tetraamine (GE327-A3117D) in accordance with the present disclosure;

Figure 27 depicts the IUPAC classification of isotherms.

Figure 28 depicts a water isotherm at 25°C (gH2O/gSorbent) for $\gamma$-$Al_2O_3$ functionalized with spermine (GE320-184A) in accordance with the present disclosure;

Figure 29 depicts a water isotherm at 25°C (gH2O/gSorbent) for $\gamma$-$Al_2O_3$ functionalized with spermine modified by 1,2-epoxybutane (GE321-184B) in accordance with the present disclosure;

Figure 30 depicts a water isotherm at 25°C ($gH_2O$/gSorbent) for the one-pot synthesized $\gamma$-$Al_2O_3$ modified with GLYMO and further functionalized with spermine (GE324-1A) in accordance with the present disclosure;

Figure 31 depicts dry $CO_2$ isotherms of GE302 (Amine 2-3-2): solid circles (25°C) and open circles (120°C) vs dry $CO_2$ isotherms of GE314 (-OH containing Amine 2-3-2): solid squares (25°C) and open square (120°C) in accordance with the present disclosure;

Figure 32 depicts $CO_2$ isotherms at 25°C ($gCO_2$/gSorbent) for sorbents functionalized with spermine and epoxide

modified spermines in accordance with the present disclosure;

Figure 33 depicts $CO_2$ isotherms at 25°C (expressed as the number of $CO_2$ per amine group) for sorbents functionalized with spermine and epoxide modified spermines in accordance with the present disclosure;

Figure 34 depicts $CO_2$ isotherms at 25°C ($gCO_2$/gSorbent) for sorbents functionalized with pristine Amine 2-3-2 and 1,2-epoxybutane modified Amine 2-3-2 in accordance with the present disclosure;

Figure 35 depicts $CO_2$ isotherms at 25°C (expressed as the number of $CO_2$ per amine group) for sorbents functionalized with pristine Amine 2-3-2 and 1,2-epoxybutane modified Amine 2-3-2 in accordance with the present disclosure;

Figure 36 depicts $CO_2$ isotherms at 25°C ($gCO_2$/gSorbent) for sorbents functionalized with pristine Amine 2-3-2 and TFEO modified Amine 2-3-2 in accordance with the present disclosure;

Figure 37 depicts $CO_2$ isotherms at 25°C (expressed as the number of $CO_2$ per amine group) for sorbents functionalized with pristine Amine 2-3-2 and TFEO modified Amine 2-3-2 in accordance with the present disclosure;

Figure 38 depicts a $CO_2$ isotherm at 25°C ($gCO_2$/gSorbent) for $\gamma$-$Al_2O_3$ functionalized with spermine (GE320-184A) in accordance with the present disclosure;

Figure 39 depicts a $CO_2$ isotherm at 25°C ($gCO_2$/gSorbent) for $\gamma$-$Al_2O_3$ functionalized with spermine modified by 1,2-epoxybutane (GE321-184B) in accordance with the present disclosure;

Figure 40 depicts $CO_2$ uptake and $H_2O$ uptake over adsorption time for a GE314 film in accordance with the present disclosure;

Figure 41 depicts a desorption profile of a MOF-based sorbent functionalized with pristine spermine (GE5-A369) in accordance with the present disclosure;

Figure 42 depicts a desorption profile of a MOF-based sorbent functionalized with -OH containing spermine (GE296-A366A) in accordance with the present disclosure;

Figure 43 depicts a desorption profile of a MOF-based sorbent functionalized with -OH containing spermine (GE301-A370A) in accordance with the present disclosure;

Figure 44 depicts a desorption profile of a MOF-based sorbent functionalized with pristine Amine 2-3-2 (GE302-A377) in accordance with the present disclosure;

Figure 45 depicts a desorption profile of a MOF-based sorbent functionalized with -OH containing Amine 2-3-2 (GE314) (powder) in accordance with the present disclosure;

Figure 46 depicts a desorption profile of a MOF-based sorbent functionalized with -OH containing Amine 2-3-2 (GE314) (film) in accordance with the present disclosure;

Figure 47 is an exemplary method flow chart in accordance with the present disclosure;

Figure 48 is an exemplary method flow chart in accordance with the present disclosure;

Figure 49 is an exemplary method flow chart in accordance with the present disclosure;

Figure 50 is an exemplary method flow chart in accordance with the present disclosure; and

Figure 51 is an exemplary method flow chart in accordance with the present disclosure.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill

in the art to be required for the practice of the embodiments disclosed herein.

DETAILED DESCRIPTION

Described herein are solid sorbent materials functionalized with polyamines having oxygen-containing units selected from carbonyl units, hydroxyl units, and combinations thereof. The sorbent materials developed in this disclosure exhibit high adsorption capacities for carbon dioxide, low adsorption capacities for water, and low desorption residuals under mild desorption conditions.

Generally, functionalized sorbents in accordance with the present disclosure may be used with any suitable compositions, systems, and methods known in the art that facilitate the functionalized sorbents. The functionalized sorbents are not limited to any particular embodiment disclosed herein. Exemplary compositions, systems, and methods are found in PCT/US2023/082729, the contents of which are incorporated by reference herein.

In some embodiments, the functionalized sorbent includes a first type of functionalization ligand, wherein the first type of functionalization ligand includes at least one functionalization ligand comprising a polyamine comprising at least one oxygen-containing unit selected from the group consisting of carbonyl units, hydroxyl units, and combinations thereof. Generally, the at least one functionalization ligand that includes a polyamine including at least one oxygen-containing unit selected from the group consisting of carbonyl units, hydroxyl units, and combinations thereof may include any such suitable ligand that facilitates the functionalized sorbent described herein. The at least one functionalization ligand that includes a polyamine including at least one oxygen-containing unit selected from the group consisting of carbonyl units, hydroxyl units, and combinations thereof may include only one functionalization ligand that includes a polyamine including at least one oxygen-containing unit selected from the group consisting of carbonyl units, hydroxyl units, and combinations thereof or two or more functionalization ligands that each include a polyamine including at least one oxygen-containing unit selected from the group consisting of carbonyl units, hydroxyl units, and combinations thereof.

**In** some embodiments, the at least one functionalization ligand including a polyamine including at least one oxygen-containing unit selected from the group consisting of carbonyl units, hydroxyl units, and combinations thereof includes at least one amine selected from the group consisting of primary amines, secondary amines, tertiary amines, and combinations thereof. **In** some embodiments, the at least one functionalization ligand including a polyamine including at least one oxygen-containing unit selected from the group consisting of carbonyl units, hydroxyl units, and combinations thereof includes at least one primary amine or at least one secondary amine.

In some embodiments, the at least one functionalization ligand including a polyamine including at least one oxygen-containing unit selected from the group consisting of carbonyl units, hydroxyl units, and combinations thereof includes at least one amine selected from the group consisting of monoamines, diamines, triamines, tetra-amines, penta-amines, hexa-amines, polyamines, and combinations thereof.

Generally, the polyamine may include any number of amine groups known in the art suitable to facilitate the functionalized sorbent. In some embodiments, the polyamine includes a total number of amine groups in a range of from about 2 to about 10. In some embodiments, the polyamine includes a total number of amine groups in a range of from about 2 to about 6. In some embodiments, the polyamine includes a total number of amine groups in a range of from about 2 to about 4. In some embodiments, the polyamine includes 2, 3, 4, 5, 6, 7, 8, 9, or 10 amine groups.

In some embodiments, the at least one oxygen-containing unit is selected from the group consisting of primary hydroxyl units, secondary hydroxyl units, tertiary hydroxyl units, and combinations thereof.

In some embodiments, the at least one functionalization ligand including a polyamine including at least one oxygen-containing unit selected from the group consisting of carbonyl units, hydroxyl units, and combinations thereof is a reaction product. In some embodiments, the reaction product includes a primary hydroxyl unit and is formed from a reaction between a polyamine and an oxetane. In some embodiments, the reaction product includes a secondary hydroxyl unit and is formed from a reaction between a polyamine and an epoxide. In some embodiments, the reaction product includes a tertiary hydroxyl unit and is formed from a direct synthesis reaction.

In some embodiments, the at least one functionalization ligand including a polyamine including at least one oxygen-containing unit selected from the group consisting of carbonyl units, hydroxyl units, and combinations thereof is obtained prior to MOF functionalization by pre-loading modification (PLM). In some embodiments, the at least one functionalization ligand including a polyamine including at least one oxygen-containing unit selected from the group consisting of carbonyl units, hydroxyl units, and combinations thereof is obtained after MOF functionalization by post-synthesis modification (PSM).

In some embodiments, the functionalized sorbent has a class-II, or class-III or class-IV isotherm for pure water. In some embodiments, the functionalized sorbent has a class-II isotherm for pure water. In some embodiments, the functionalized sorbent has a class-III isotherm for pure water. In some embodiments, the functionalized sorbent has a class-IV isotherm for pure water.

In some embodiments, the functionalized sorbent has a water uptake at high relative humidity of average < 1 $H_2O$ molecule per amine. In some embodiments, the high relative humidity refers to relative humidity of 50% and above at

ambient temperatures such as, but not limited to, -20°C to 40°C. In some embodiments, the high relative humidity refers to relative humidity of 60% and above at ambient temperatures such as, but not limited to, -20°C to 40°C. In some embodiments, the high relative humidity refers to relative humidity of 70% and above at ambient temperatures such as, but not limited to -20°C to 40°C. In some embodiments, the high relative humidity refers to relative humidity of 60% and above at temperature ranging from 40°C to 60°C. In some embodiments, the high relative humidity refers to relative humidity of 70% and above at temperature ranging from 40°C to 60°C. In some embodiments, the high relative humidity refers to relative humidity of 70% and above at temperature of 60°C and higher.

In some embodiments, the functionalized sorbent has a desorption temperature of 120 °C or lower, preferably 110 °C or lower, or more preferably 100 °C or lower.

In some embodiments, the at least one functionalization ligand comprising a polyamine comprising at least one oxygen-containing unit selected from the group consisting of carbonyl units, hydroxyl units, and combinations thereof has a LogP of -1.0 or greater. In some embodiments, the at least one functionalization ligand comprising a polyamine comprising at least one oxygen-containing unit selected from the group consisting of carbonyl units, hydroxyl units, and combinations thereof has a LogP of -0.5 or greater. In some embodiments, the at least one functionalization ligand comprising a polyamine comprising at least one oxygen-containing unit selected from the group consisting of carbonyl units, hydroxyl units, and combinations thereof has a LogP of 0 or greater. In some embodiments, the at least one functionalization ligand comprising a polyamine comprising at least one oxygen-containing unit selected from the group consisting of carbonyl units, hydroxyl units, and combinations thereof has a LogP of 0.5 or greater. As used herein, LogP is the logarithm (base 10) of the partition coefficient (P) defined as the ratio of materials' organic (oil)-to-aqueous phase concentrations.

In some embodiments, the functionalized sorbent includes a second type of functionalization ligand, wherein the second type of functionalization ligand includes at least one functionalization ligand that does not include a polyamine including at least one oxygen-containing unit selected from the group consisting of carbonyl units, hydroxyl units, and combinations thereof. In some embodiments, the functionalized sorbent also includes at least one functionalization ligand that does not include a polyamine including at least one oxygen-containing unit selected from the group consisting of carbonyl units, hydroxyl units, and combinations thereof. Generally, the at least one functionalization ligand that does not include a polyamine including at least one oxygen-containing unit selected from the group consisting of carbonyl units, hydroxyl units, and combinations thereof may include any such suitable ligand that facilitates the functionalized sorbent described herein. The at least one functionalization ligand that does not include a polyamine including at least one oxygen-containing unit selected from the group consisting of carbonyl units, hydroxyl units, and combinations thereof may include only one functionalization ligand that does not include a polyamine including at least one oxygen-containing unit selected from the group consisting of carbonyl units, hydroxyl units, and combinations thereof or two or more functionalization ligands that each do not include a polyamine including at least one oxygen-containing unit selected from the group consisting of carbonyl units, hydroxyl units, and combinations thereof.

In some embodiments, the at least one functionalization ligand that does not include a polyamine including at least one oxygen-containing unit selected from the group consisting of carbonyl units, hydroxyl units, and combinations thereof is selected from the group consisting of polyamine ligands including at least one cyclic unit, aminosilicone ligands, amine ligands, monoamine ligands, diamine ligands, triamine ligands, tetra-amine ligands, penta-amine ligands, hexa-amine ligands, polyamine ligands, alkylamine ligands, and amino-alcohol ligands. Exemplary ligands include, but are not limited to, ethylenediamine, N-methylethylenediamine, N-ethylethylenediamine, N,N-dimethylethylenediamine, N,N-diethylethylenediamine, di(N-methyl)ethylene diamine, N-isopropylethylenediamine, N,N-dimethyl-N-methylethylene diamine, di(N,N-dimethyl)ethylene diamine, N,N-diisopropylethylene diamine, 2,2-dimethyl-1,3-diaminopropane, 1,3-diaminopentane, diethylenetriamine, N-(2-aminoethyl)-1,3-propanediamine, bis(3-aminopropyl)amine, N-(3-aminopropyl)-1,4-diaminobutane (spermidine), triethylenetetramine, N,N'-bis(2-aminoethyl)-1,3-propanediamine, 1,2-bis(3-aminopropylamino)ethane, N,N'-bis(3-aminopropyl)-1,3-propanediamine, N,N'-bis(3-aminopropyl)-1,4-diaminobutane (spermine), tetraethylenepentamine, and/or combinations thereof.

In some embodiments, the at least one functionalization ligand including a polyamine including at least one cyclic unit may be any suitable at least one functionalization ligand including a polyamine including at least one cyclic unit known in the art that facilitates the functionalized sorbent described herein.

In some embodiments, the at least one functionalization ligand including a polyamine including at least one cyclic unit includes at least one amine selected from the group consisting of primary amines, secondary amines, tertiary amines, and combinations thereof. In some embodiments, the at least one functionalization ligand including a polyamine including at least one cyclic unit includes at least one primary amine or at least one secondary amine.

In some embodiments, the at least one functionalization ligand including a polyamine including at least one cyclic unit includes at least one amine selected from the group consisting of monoamines, diamines, triamines, tetra-amines, penta-amines, hexa-amines, polyamines, and combinations thereof.

In some embodiments, the at least one functionalization ligand including a polyamine including at least one cyclic unit includes a symmetrical structure. In some embodiments, the at least one functionalization ligand including a

polyamine including at least one cyclic unit includes an asymmetrical structure.

In some embodiments, the at least one cyclic unit is selected from the group consisting of alicyclic units, aromatic units, and combinations thereof.

In some embodiments, described herein is a polyamine including at least one cyclic unit. In some embodiments, the polyamine including at least one cyclic unit is a functionalization ligand. In some embodiments, the polyamine including at least one cyclic unit is a functionalization ligand for functionalizing a sorbent.

In many embodiments, the functionalization ligand including a polyamine includes at least one cyclic unit according to Formula (C-I):

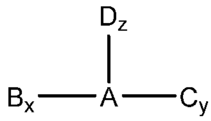
(Formula C-I),

wherein:

B, C, and D each individually comprise at least one amine group;

x, y, and z are each individually 0 or 1; and

A comprises an aromatic ring structure according to Formula (C-II) or an alicyclic structure according to Formula (C-III):

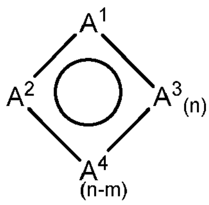
(Formula C-II),

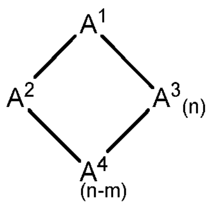
(Formula C-III),

wherein:

n is an integer in a range of from about 3 to about 8;

m is an integer in a range of from about 3 to about 5; and

$A^1$, $A^2$, $A^3$, and $A^4$ each individually comprise at least one of carbon, oxygen, and silicon.

In some embodiments, $A^1$, $A^2$, $A^3$, and $A^4$ are each individually selected from the group consisting of:

carbon substituted with at least one substituent selected from the group consisting of hydrogen, B, C, D, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

unsubstituted oxygen;

silicon substituted with at least one substituent selected from the group consisting of hydrogen, B, C, D, substituted or

unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl; and

combinations thereof.

In some embodiments, B, C, and D each individually include a structure according to Formula (C-IV):

$$E_t\text{-}F_u\text{-}G_v\text{-}H_w \quad \text{(Formula C-IV)}$$

wherein:

t, u, v, and w are each individually integers in a range of from about 0 to about 10; and

E, F, G, and H are each individually selected from the group consisting of:

substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl;

$NH_2$, $NHR_1$, and $NR_1R_2$,

wherein $R_1$ and $R_2$ are each individually selected from the group consisting of substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl; and

combinations thereof.

In some embodiments, the polyamine includes at least two cyclic units, wherein the polyamine includes a multicyclic structure connected by at least one connecting group selected from the group consisting of substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl.

In some embodiments, the polyamine includes at least one bicyclic unit.

In some embodiments, the polyamine includes at least two cyclic units, wherein the polyamine includes a bridged multicyclic structure comprising at least one bridging group selected from the group consisting of substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, and $C_6$ alkyl.

In some embodiments, the polyamine includes at least one bridged cyclic unit.

In some embodiments, t, u, v, and w are each individually 0, 1, 2, 3, 4, 5, 6, 7, 8, 9, or 10.

In some embodiments, n is 3, 4, 5, 6, 7, or 8.

In some embodiments, m is 3, 4, or 5.

In some embodiments, at least one of x, y, and z is 1. In some embodiments, at least two of x, y, and z are 1. In some embodiments, x, y, and z are each 1.

Generally, each of B, C, and D may be bound to any suitable atom of A that facilitates the functionalized sorbents in accordance with the present disclosure. In many embodiments, each of B, C, and D are bound to separate atoms of the cyclic unit of A. In some embodiments, each of B, C, and D are bound to separate atoms of $A^1$, $A^2$, $A^3$, and $A^4$.

In some embodiments, the polyamine includes at least one substituent at a substituent position selected from the group consisting of 1,2 (ortho) positions, 1,3 (meta) positions, 1,4 (para) positions, and combinations thereof.

In some embodiments, at least two of B, C, and D are arranged in an ortho position in the cyclic unit of A. In some embodiments, at least two of B, C, and D are arranged in a meta position in the cyclic unit of A. In some embodiments, at least two of B, C, and D are arranged in a para position in the cyclic unit of A.

In some embodiments, the polyamine includes an isomer selected from the group consisting of *cis* isomers, *trans* isomers, R-enantiomers, S-enantiomers, and combinations thereof.

In some embodiments, at least two of B, C, and D are different. In some embodiments, B, C, and D are different.

In some embodiments, at least two of B, C, and D are identical. In some embodiments, B, C, and D are identical.

In some embodiments, the polyamine includes at least one hetero alicyclic ring unit. In some embodiments, the polyamine includes at least one hetero alicyclic ring unit that does not contain nitrogen. In some embodiments, the polyamine includes at least one hetero alicyclic ring unit, wherein the heteroatom is not nitrogen.

Generally, the polyamine may include any number of amine groups known in the art suitable to facilitate the functionalized sorbent. In some embodiments, the polyamine includes a total number of amine groups in a range of from about 2 to about 10. In some embodiments, the polyamine includes a total number of amine groups in a range of from about 2 to about 6. In some embodiments, the polyamine includes a total number of amine groups in a range of from about 2 to about 4. In some embodiments, the polyamine includes 2, 3, 4, 5, 6, 7, 8, 9, or 10 amine groups.

In some embodiments, the polyamine is a compound selected from the group consisting of

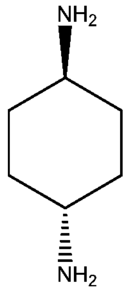
;

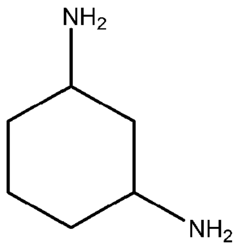
;

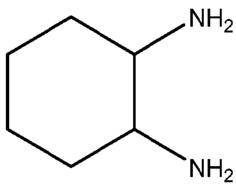
;

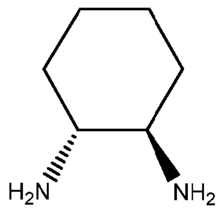
;

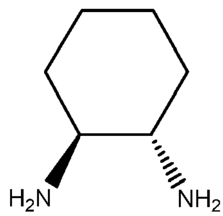
;

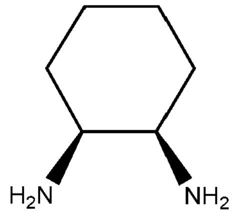
;

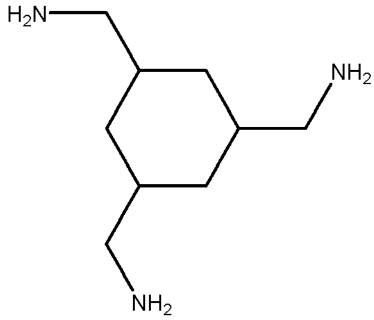
;

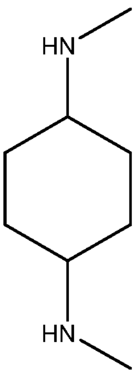
;

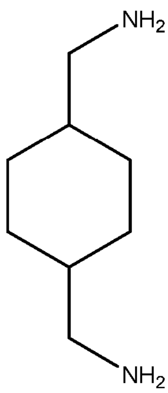
;

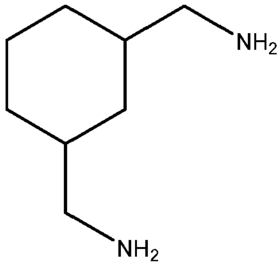
;

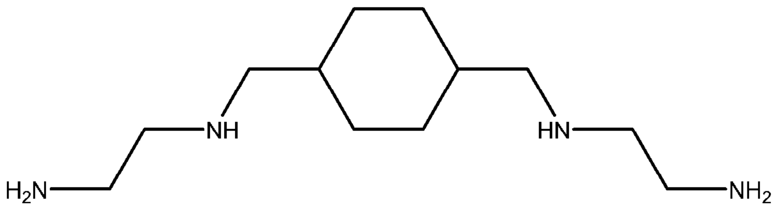
;

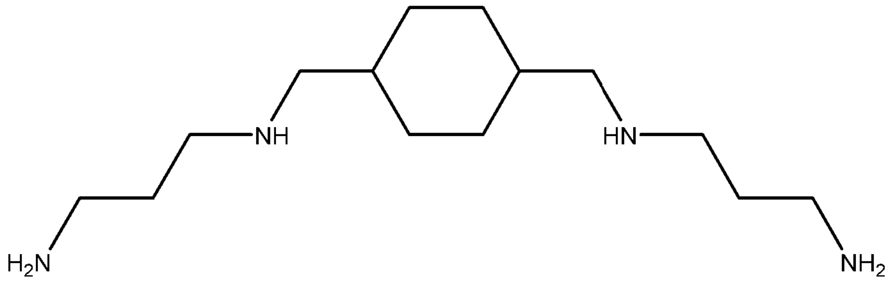
;

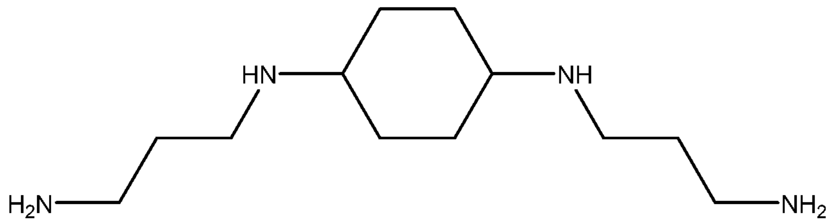
;

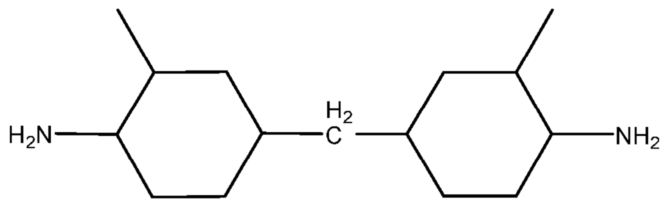
;

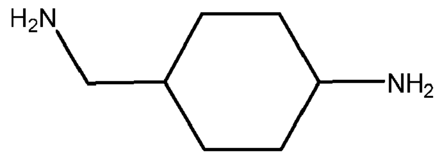
;

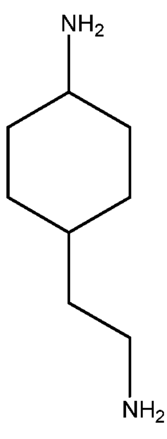
;

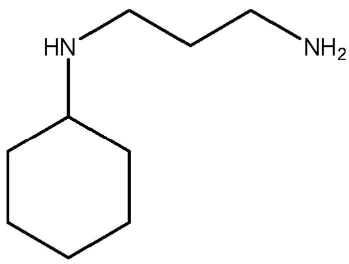

;

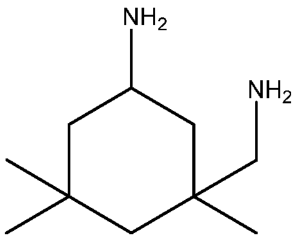

;

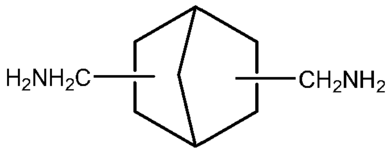

;

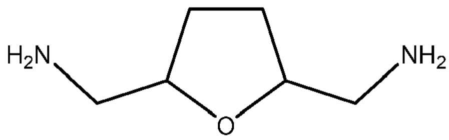

;

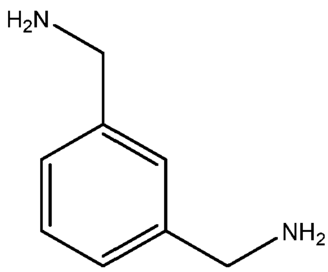

;

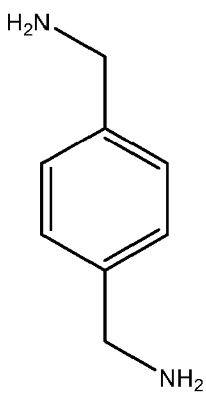

;

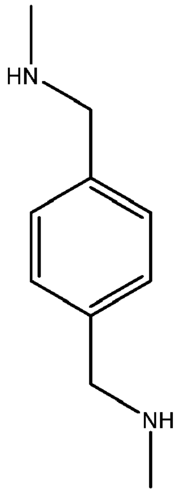

;

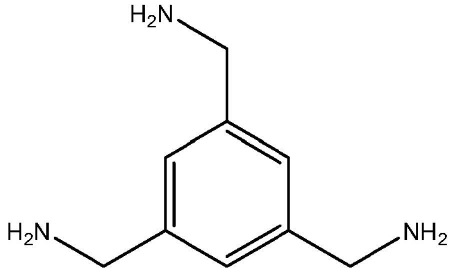

;

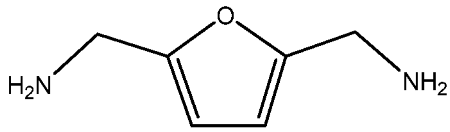

;

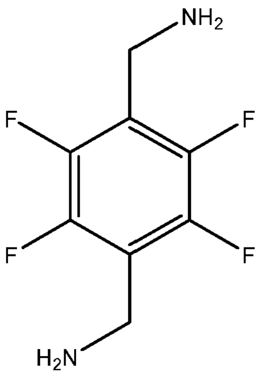

;

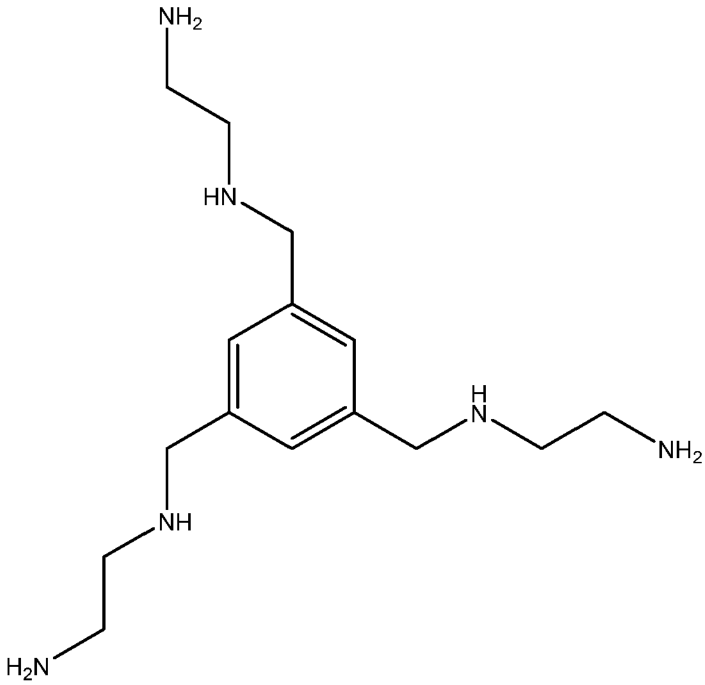

;

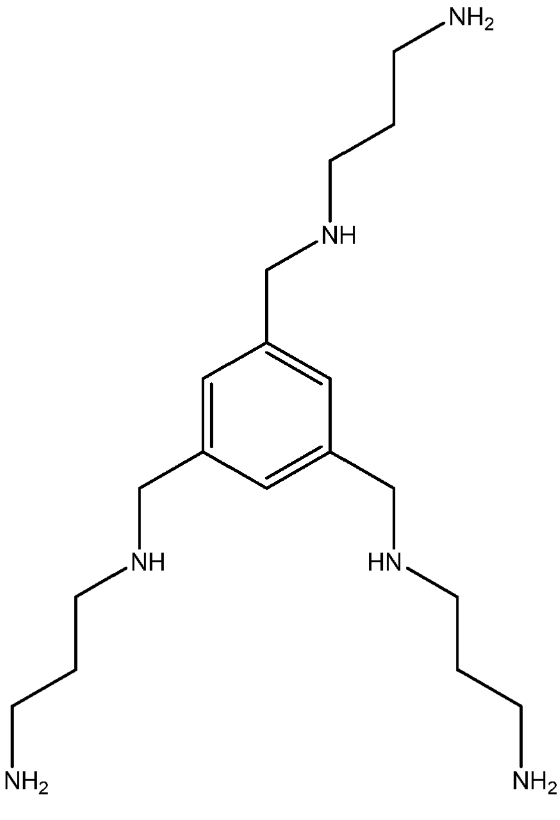

;

and

combinations thereof.

The following exemplary polyamines have cyclic units in accordance with the present disclosure:

Aliphatic cyclic (6-ring) amines:

GE201 (mixture of cis & trans); GE182 (trans); GE200 (cis); 1,4-cyclohexanediamine (p-CHD) (mw: 114; bp = 197 °C).

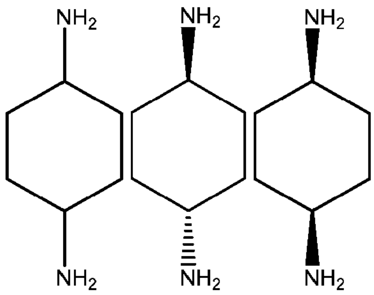

GE181; GE187 (mixture of cis & trans); GE199 (cis); 1,3-cyclohexanediamine (m-CHD) (mw: 114; bp = 194 °C).

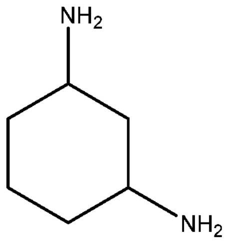

GE202 (mixture of cis & trans); GE203 (cis); GE209 (trans); 1,2-cyclohexanediamine (o-CHD) (mw: 114; bp =194 °C)

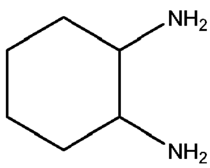

Di/tri/tetra amines:

GE221-A2109; 1,3,5-cyclohexanetriyltrimethanamine (CHTM) (mw = 171.316; bp = 309 °C)

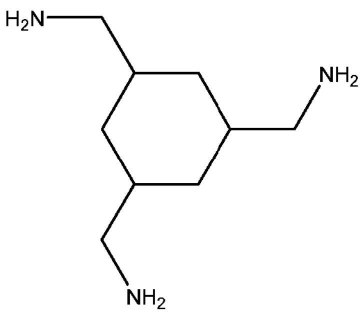

GE254; GE255 (BPDCH)

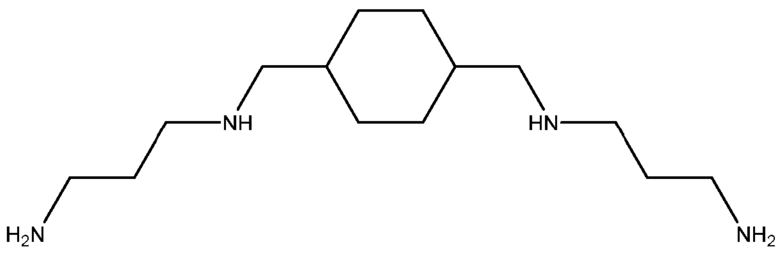

3-Ring-3

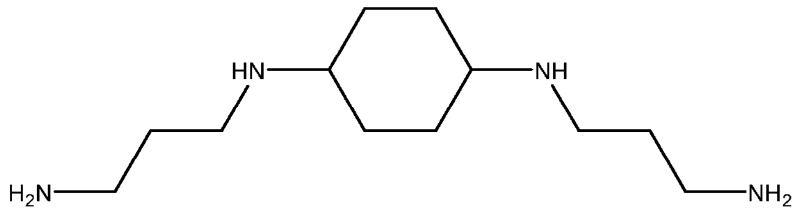

Primary/secondary/tertiary amines:
N,N-dimethylcyclohexanediamine (N2MCHD) (mw: 142.24; bp = 80 °C at 18 mmHg)

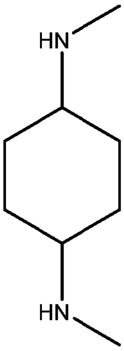

Cis or trans isomers & chirality:

(R,R)-1,2-cyclohexanediamine (trans)

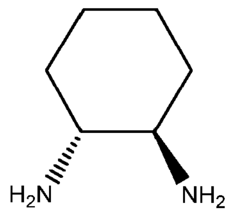

(S,S)-cyclohexanediamine (trans)

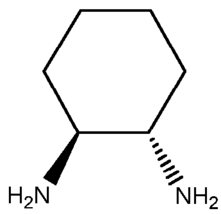

(R,S)-cyclohexanediamine (cis)

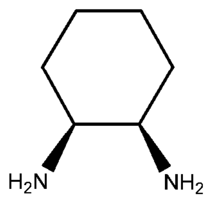

Different lengths:

GE193 (mixture of isomers); 1,4-Bis-(aminomethyl)-cyclohexane (BAMCH) (mw: 142.24; bp = 239 °C)

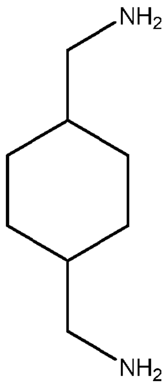

GE206 (mixture of isomers); 1,3-Bis-(aminomethyl)-cyclohexane (mBAMCH) (mw: 142.24; bp = 240 °C)

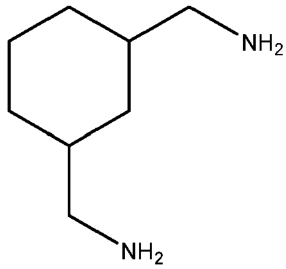

GE248; GE249 (BEDCH)

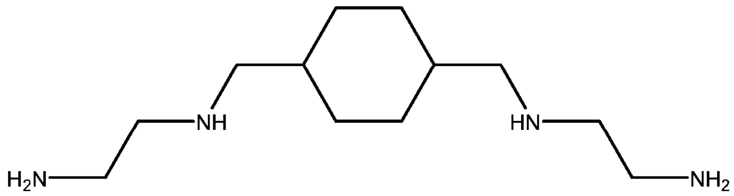

Structures with multiple cyclic units:

GE216; 4,4'-methylenebis(2-methylcyclohexylamine) (mixture of isomers) (MCHA)

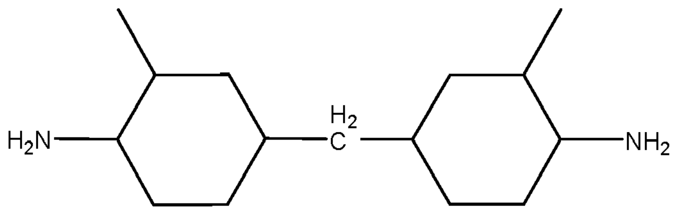

Asymmetric structures:

GE205 (mixture of isomers); 4-(aminomethyl)cyclohexanamine (AMCHA)

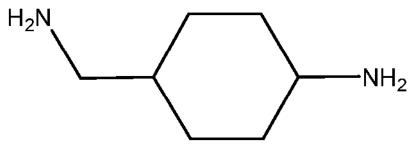

GE240; 4-(2-aminoethyl)cyclohexylamine (cis- and trans-mixture) (ACHEA)

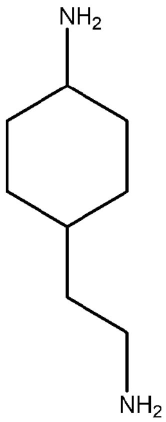

GE256; N-(3-aminopropyl)cyclohexylamine (BPDCH)

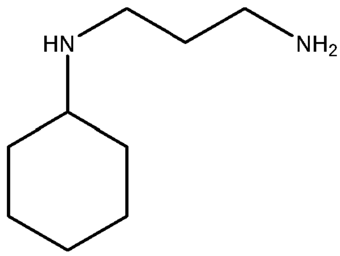

Mixed amines:

GE234; GE235; Mixture of 1,4-Bis-(aminomethyl)-cyclohexane (BAMCH) and spermine

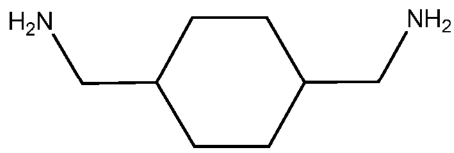

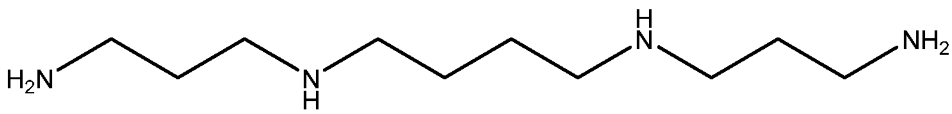

GE236; GE237; Mixture of 1,4-Bis-(aminomethyl)-cyclohexane (BAMCH) and spermidine

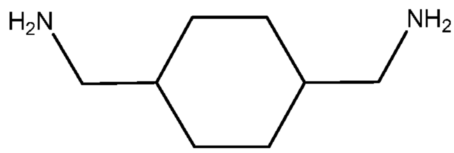

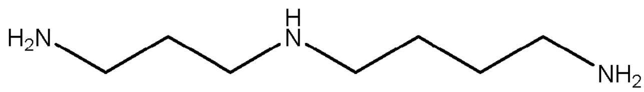

GE285; GE291; Mixture of BEDCH and spermine

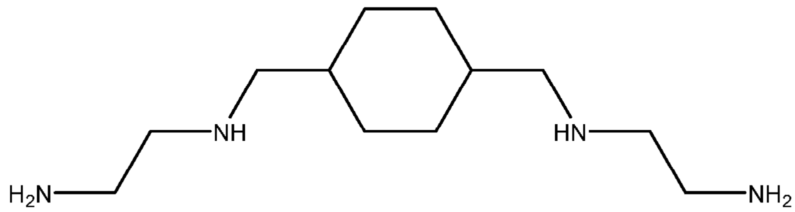

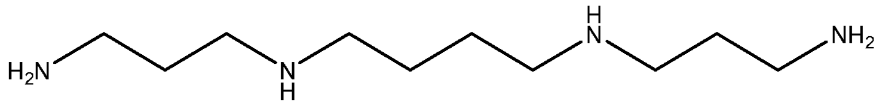

Substitution:
GE208; isophoronediamine (IPRDA) (mw: 170.3; bp = 252.9 °C)

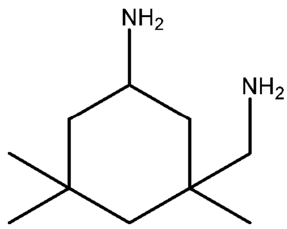

Bridged bicyclic structures:
GE214 Bis(aminomethyl)norbornane (BAMNB) (mixture of isomers) (mw: 154.25; bp = 259 °C)

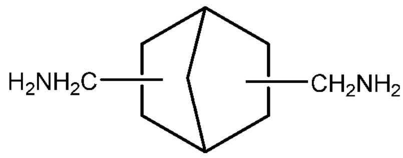

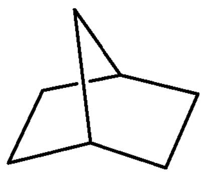

Heterocyclic amines:
GE204; [(2S,5R)-5-(aminomethyl)oxolan-2-yl]methanamine; Tetrahydrofuran-2,5,-diamine (AMTHF) (mw: 130.18)

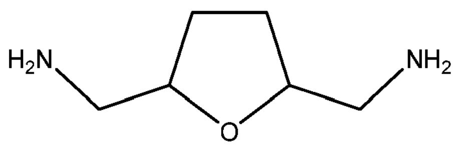

Aromatic (6) amines/substitution

GE183, GE184; meta-xylylenediamine (m-XYD) (mw: 136; bp = 265 °C)

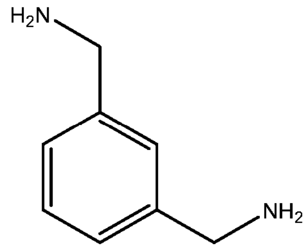

GE185; GE186; GE189; para-xylylenediamine (p-XYD) (mw: 136; bp = 230 °C)

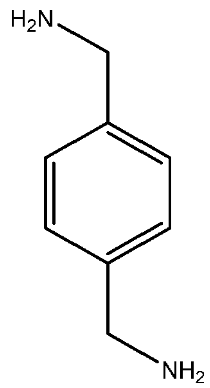

Primary/secondary/tertiary amines:
GE225; N-methyl-1-[4-(methylaminomethyl)phenyl]methanamine (Me-p-XYD) (mw: 164.20)

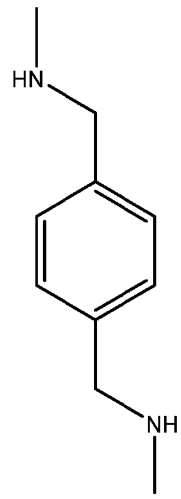

Mixed amines:

GE226; GE227; Mixture of para-xylylenediamine (p-XYD) and 1,3,5-benzenetriyltrimethanamine (BTM)

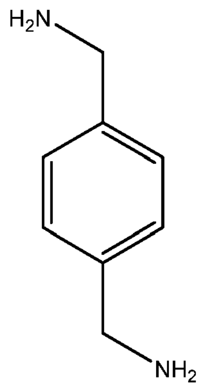

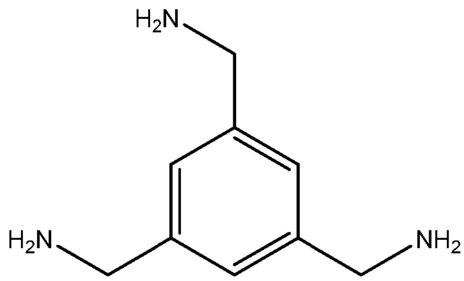

GE247; GE251; Mixture of para-xylylenediamine (p-XYD) and $N^1,N^{1'}$-((1,1,3,3-tetramethyldisiloxane-1,3-diyl) bis(propane-3,1-diyl))bis(propane-1,3-diamine) (APAP)

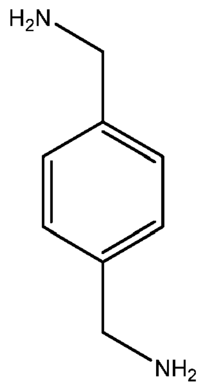

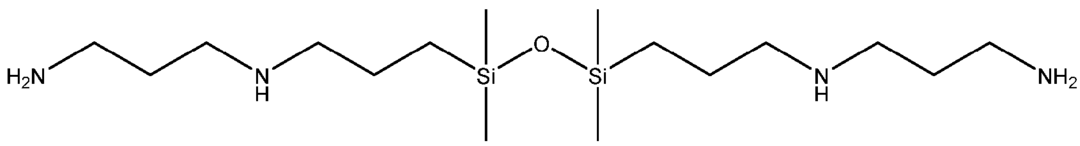

Heteroaromatic amines:

GE195; 2,5-bis(aminomethyl) furan (mw: 126.16 g/mol, bp = 230 °C).

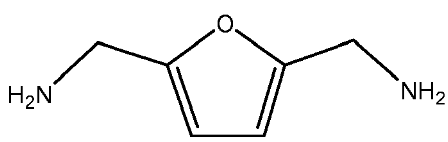

GE217; tetrafluoro-p-xylylenediamine (TF-p-XYD) (mw: 2018.16)

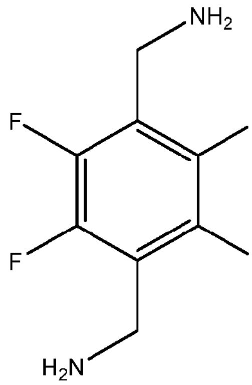

Di/tri/tetra/penta/hexa amines

GE220-A2107; 1,3,5-benzenetriyltrimethanamine (BTM) (mw: 165.24; bp = 329 °C)

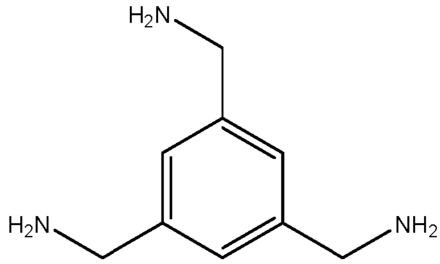

GE222; GE223 (Ph-3-ED)

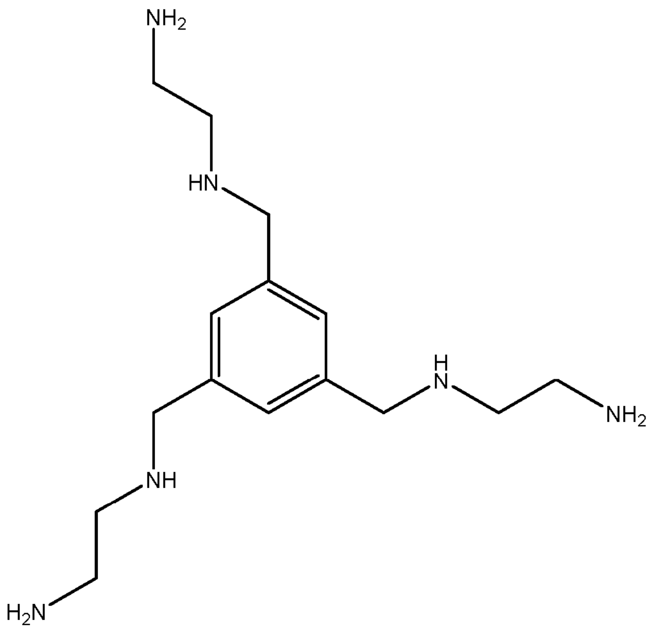

GE252; GE253 (Ph-3-PD)

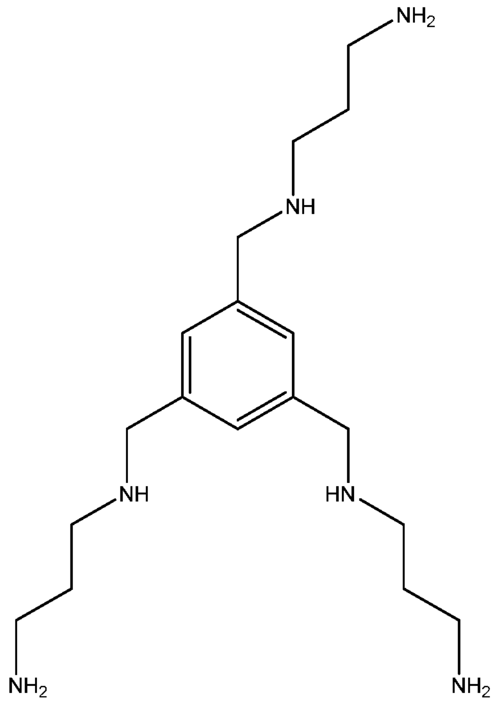

In some embodiments, the polyamine is selected from the group consisting of:

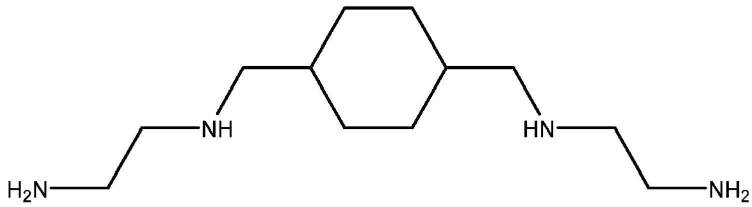
,

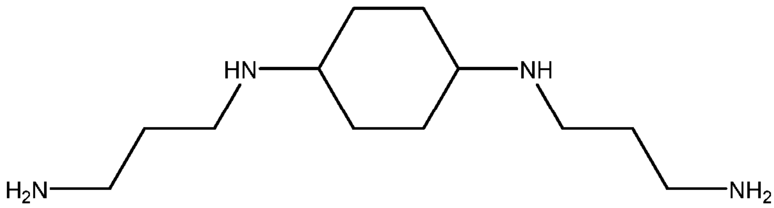
,

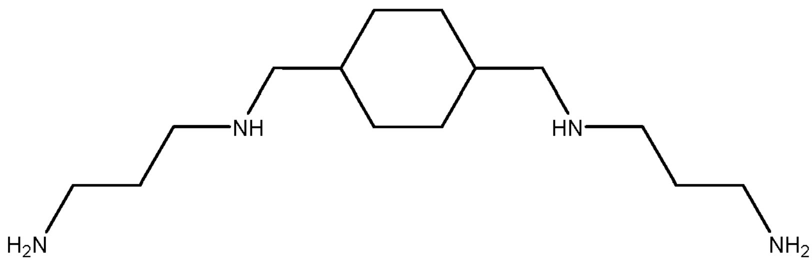
,

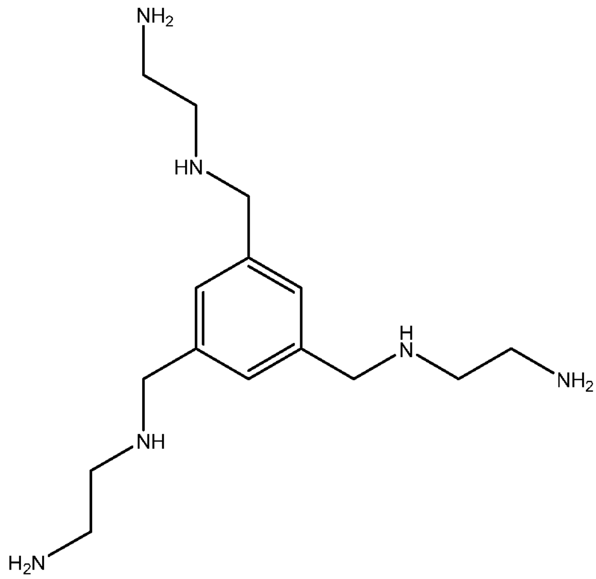

,

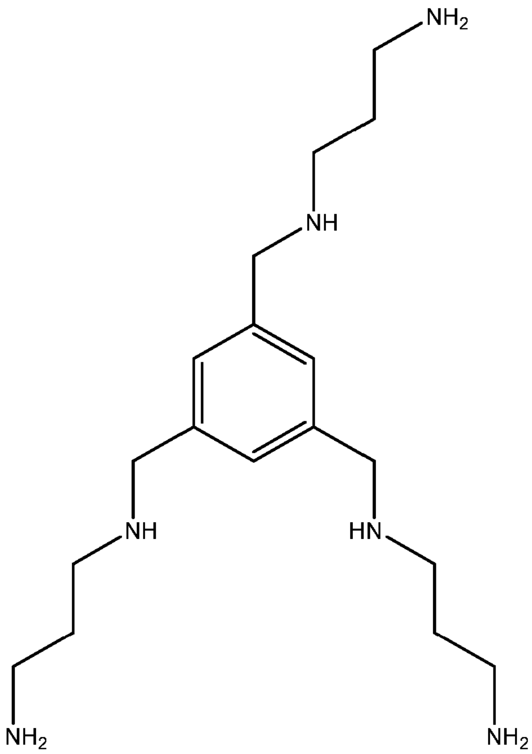

,

cyclohexanediamines, and
combinations thereof.

In some embodiments, the at least one functionalization ligand including a polyamine not including at least one oxygen-containing unit selected from the group consisting of carbonyl units, hydroxyl units, and combinations thereof includes at least one aminosilicone selected from the group consisting of linear aminosilicones, cyclic aminosilicones, branched aminosilicones, amino-substituted siloxanes, linear amino-substituted disiloxanes, cyclic amino-substituted disiloxanes, linear amino-substituted trisiloxanes, cyclic amino-substituted trisiloxanes, linear amino-substituted tetrasiloxanes, cyclic amino-substituted tetrasiloxanes, linear amino-substituted polysiloxanes, cyclic amino-substituted polysiloxanes, silsesquioxanes, polyoctahedral silsesquioxanes, and combinations thereof.

In some embodiments, the at least one functionalization ligand including an aminosilicone group includes a symmetrical structure. In some embodiments, the at least one functionalization ligand including an aminosilicone group includes an asymmetrical structure.

In some embodiments, when the at least one functionalization ligand including an aminosilicone group includes a

disiloxane group, the at least one functionalization ligand including an aminosilicone group includes the same amines on both sides of the disiloxane group. In some embodiments, when the at least one functionalization ligand including an aminosilicone group includes a disiloxane group, the at least one functionalization ligand including an aminosilicone group includes different amines on either side of the disiloxane group.

In some embodiments, the at least one functionalization ligand including an aminosilicone group is an amino-substituted siloxane of Formula (A-I), Formula (A-II), Formula (A-III), Formula (A-IV), Formula (A-V), or Formula (A-VI)

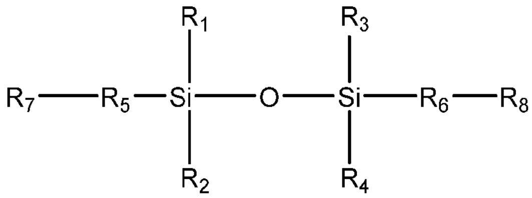

(Formula A-I)

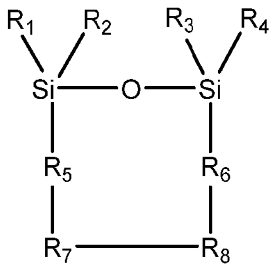

(Formula A-II)

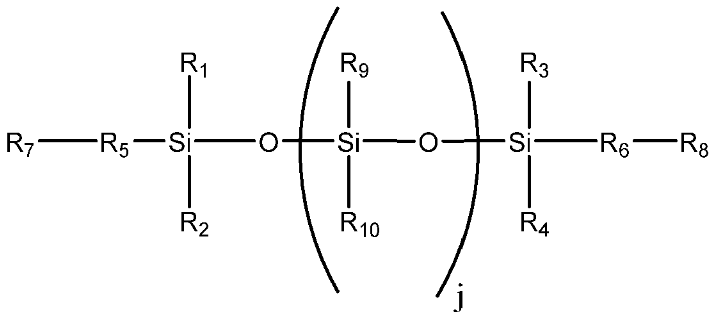

(Formula A-III)

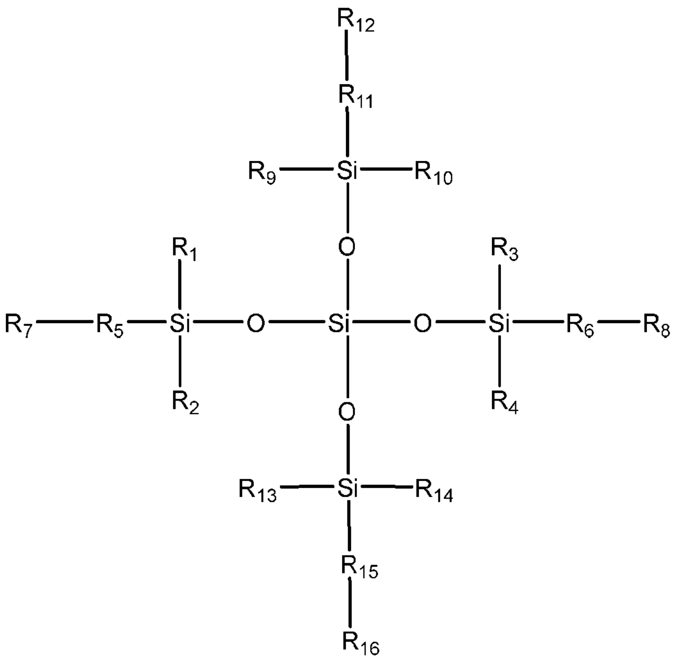

(Formula A-IV)

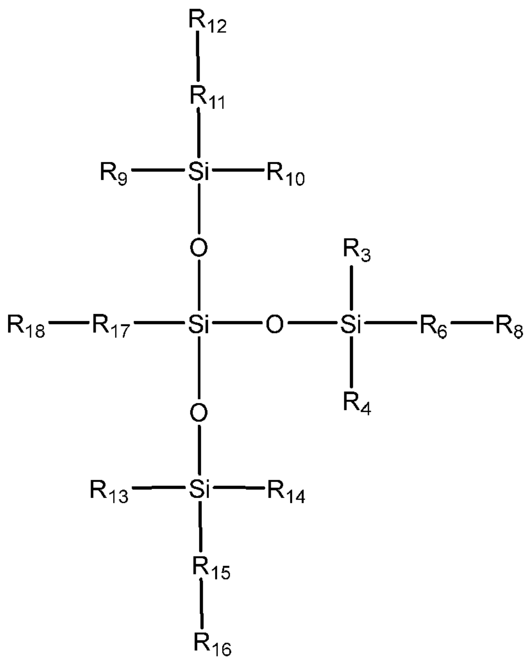

(Formula A-V)

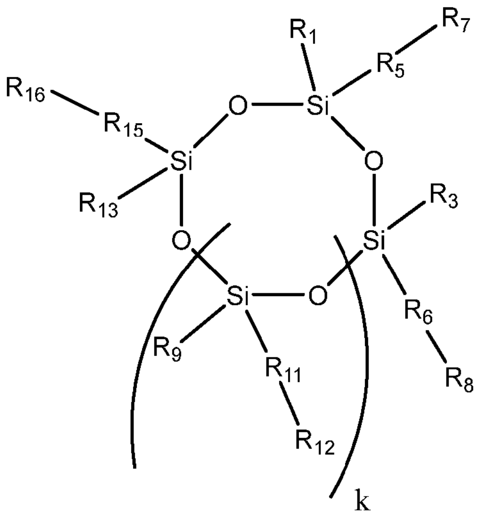

(Formula A-VI)

wherein:

$R_1$, $R_2$, $R_3$, $R_4$, $R_9$, $R_{10}$, $R_{13}$, $R_{14}$, and $R_{18}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted branched heteroalkyl, aryl, phenyl, heteroaryl, methyl, ethyl, propyl, isopropyl, butyl, pentyl, and hexyl;

$R_5$, $R_6$, $R_{11}$, $R_{15}$, and $R_{17}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_5$ alkyl, $C_4$ alkyl, $C_5$ alkyl, and $C_6$ alkyl,

$R_7$, $R_8$, $R_{12}$, and $R_{16}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, and substituents of Formula (A-VII)

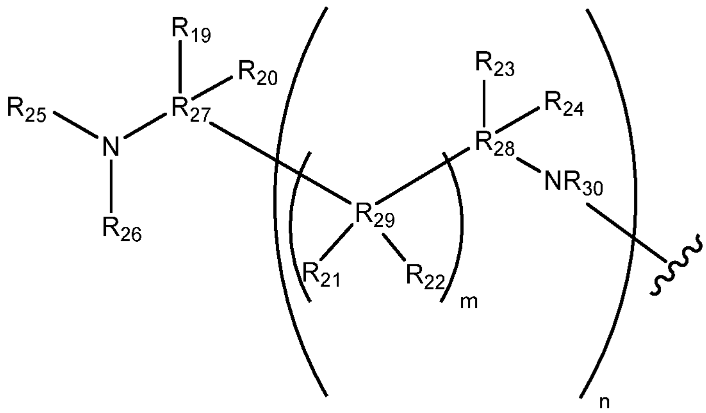

(Formula A-VII);

wherein:

the wavy bond indicates a bonding location to Formula (A-I) or Formula (A-II) or Formula (A-III) or Formula (A-IV) or Formula (A-V) or Formula (A-VI);

$R_{19}$, $R_{20}$, $R_{21}$, $R_{22}$, $R_{23}$, and $R_{24}$ are each individually selected from the group consisting of hydrogen, substituted or unsubstituted linear alkyl, substituted or unsubstituted $C_1$-$C_6$ linear alkyl, substituted or unsubstituted branched alkyl, substituted or unsubstituted $C_3$-$C_6$ branched alkyl, substituted or unsubstituted linear heteroalkyl, substituted or unsubstituted $C_1$-$C_6$ linear heteroalkyl, substituted or unsubstituted branched heteroalkyl, sub-

stituted or unsubstituted $C_3$-$C_6$ branched heteroalkyl, aryl, heteroaryl, methyl, ethyl, propyl, isopropyl, butyl, pentyl, and hexyl;

$R_{25}$ and $R_{26}$ are each individually selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, and substituted or unsubstituted $C_4$-$C_6$ cycloalkyl, or, when taken together, $R_{25}$ and $R_{26}$ form a single ring selected from the group consisting of heterocycloalkyl and heteroaryl;

$R_{27}$, $R_{28}$, and $R_{29}$ are each individually selected from the group consisting of direct bonds, substituted or unsubstituted $C_1$-$C_6$ linear alkyl, substituted or unsubstituted $C_3$-$C_6$ branched alkyl, $C_1$ alkyl, $C_2$ alkyl, $C_3$ alkyl, $C_4$ alkyl, $C_5$ alkyl, $C_6$ alkyl, ether, $-OCH_2CH_2-$, $-OCH_2CH_2CH_2-$, $-OCH_2CH_2CH_2CH_2-$, $-NHCH_2CH_2-$, $-NHCH_2CH_2CH_2-$, and $-NHCH_2CH_2CH_2CH_2-$;

$R_{30}$ is selected from the group consisting of hydrogen, substituted or unsubstituted linear alkyl, substituted or unsubstituted $C_1$-$C_6$ linear alkyl, substituted or unsubstituted $C_1$-$C_3$ linear alkyl, substituted or unsubstituted branched alkyl, substituted or unsubstituted $C_3$-$C_6$ branched alkyl, methyl, ethyl, propyl, substituted or unsubstituted cycloalkyl, substituted or unsubstituted $C_3$-$C_6$ cycloalkyl, substituted or unsubstituted $C_4$-$C_6$ cycloalkyl, heterocycloalkyl, and heteroaryl;

j is an integer in a range of 0 to 20;

k is an integer in a range of 0 to 20;

m is an integer in a range of 0 to 20; and

n is an integer in a range of 0 to 20.

In some embodiments, the at least one functionalization ligand including an aminosilicone group is selected from the group consisting of

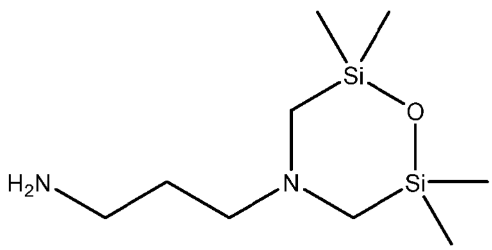

,

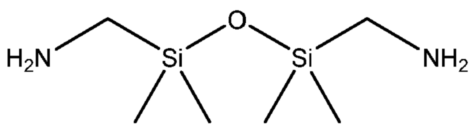

,

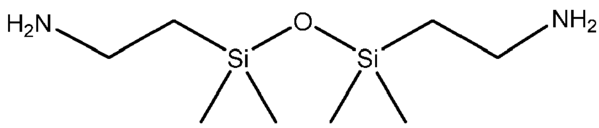

,

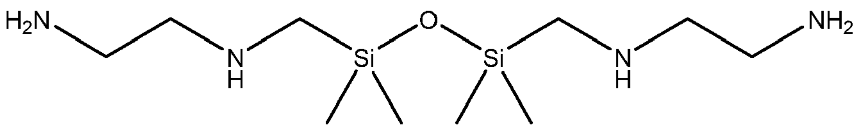

,

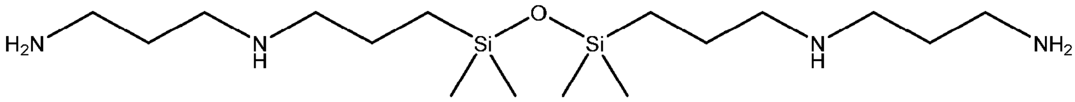

,

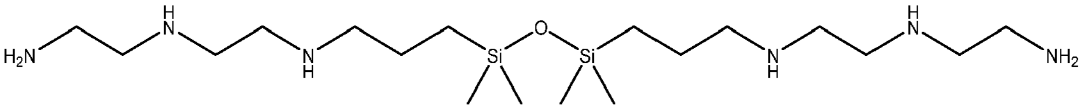

,

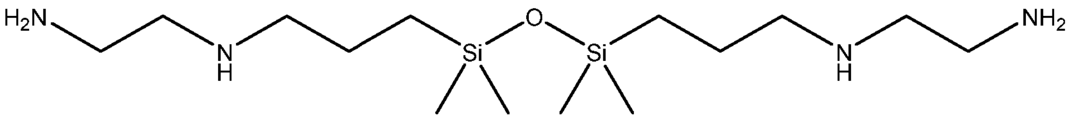

,

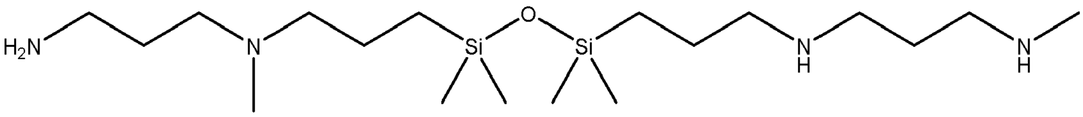

,

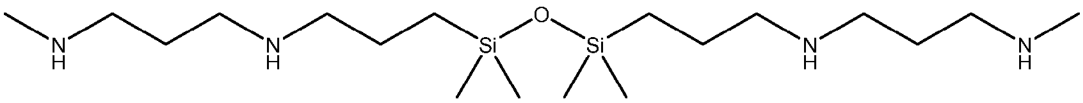

,

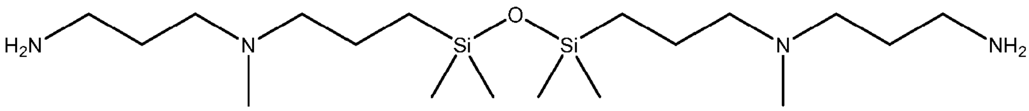

,

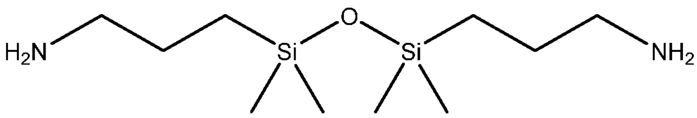

,

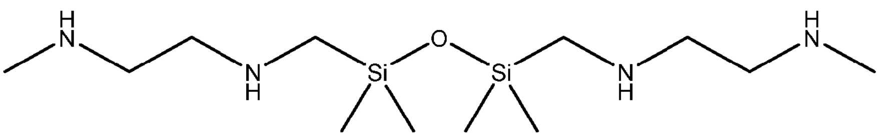

,

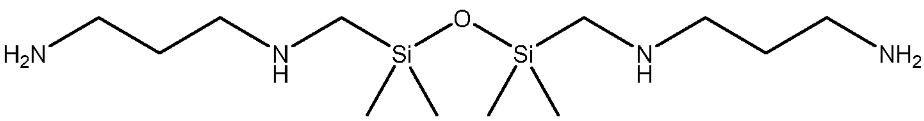

,

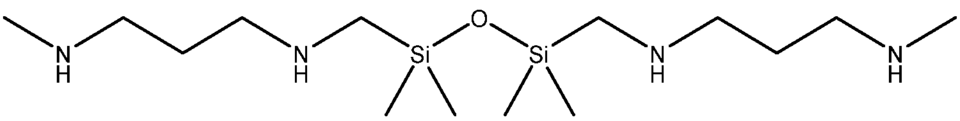

,

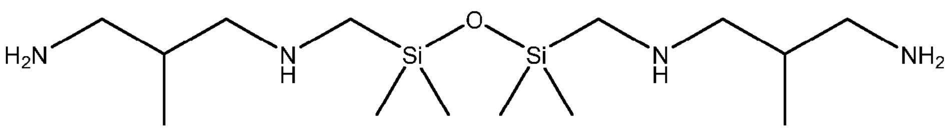

,

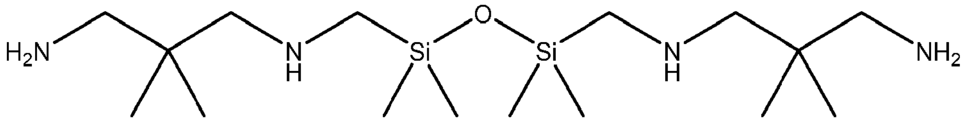

,

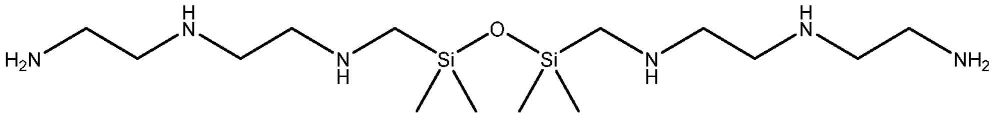

,

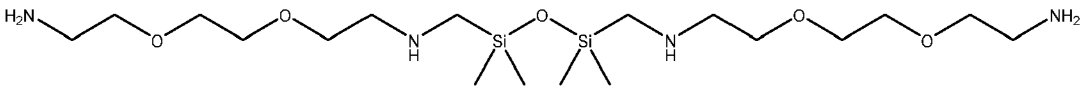

,

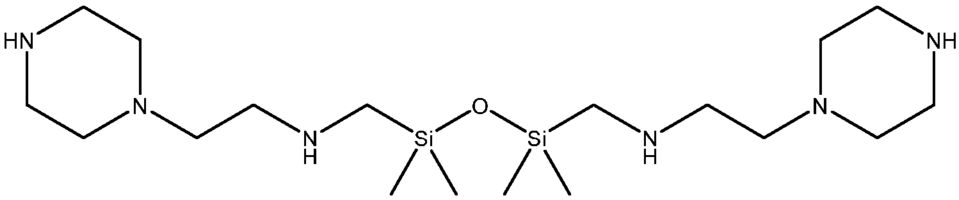

,

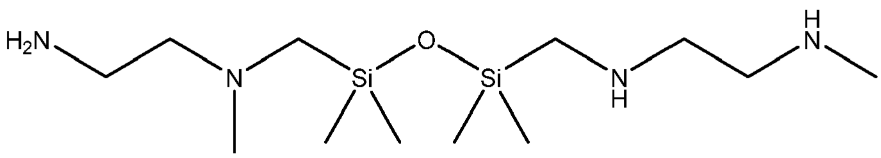

,

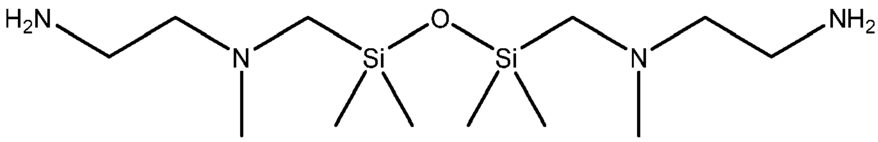

,

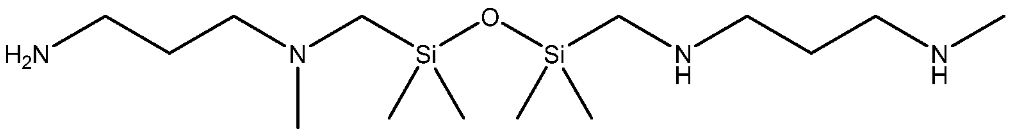

,

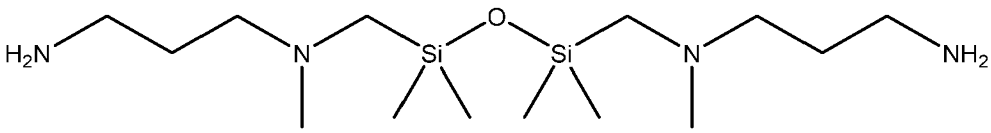

,

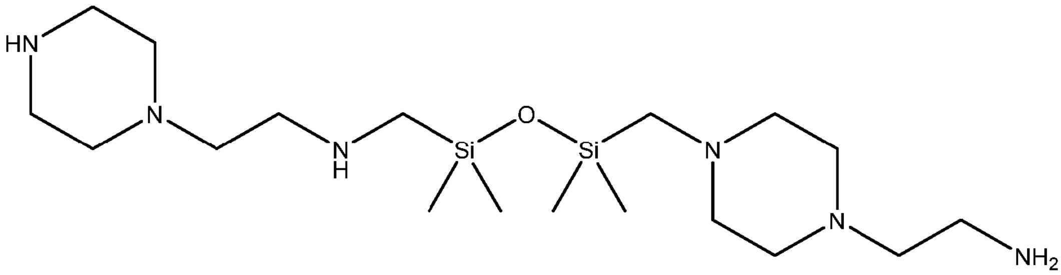

,

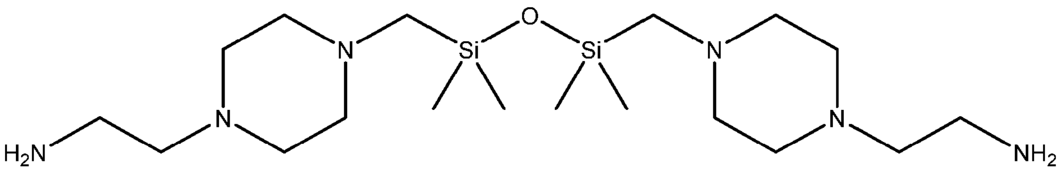,

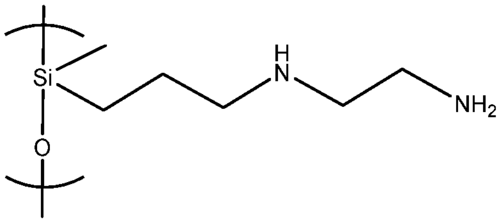,

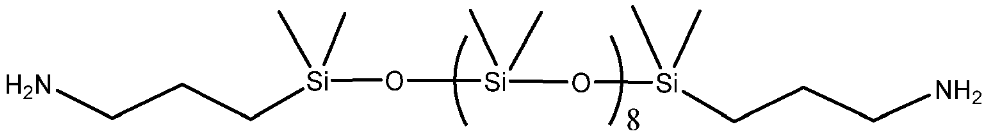,

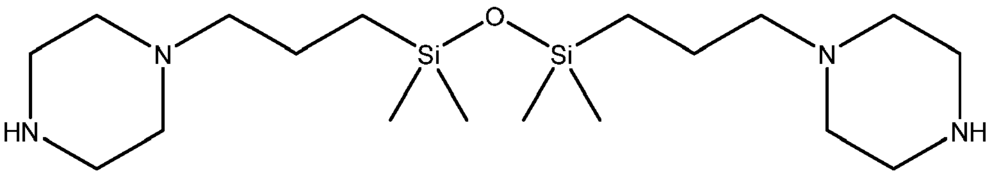,

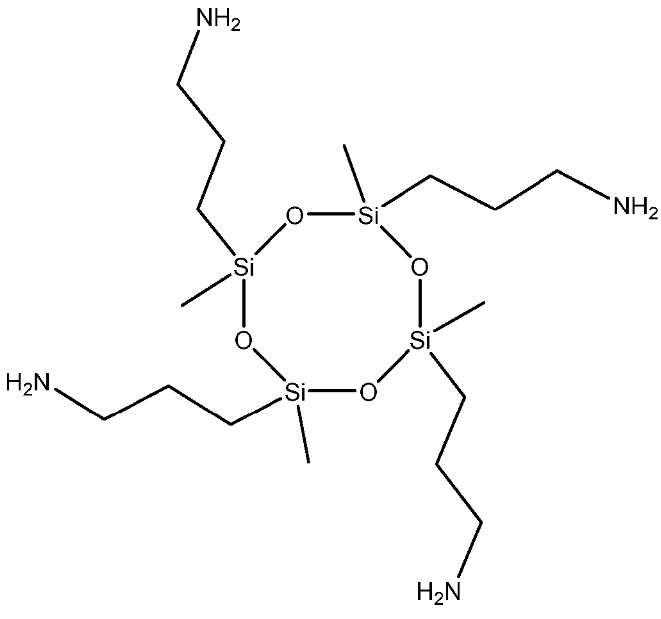,

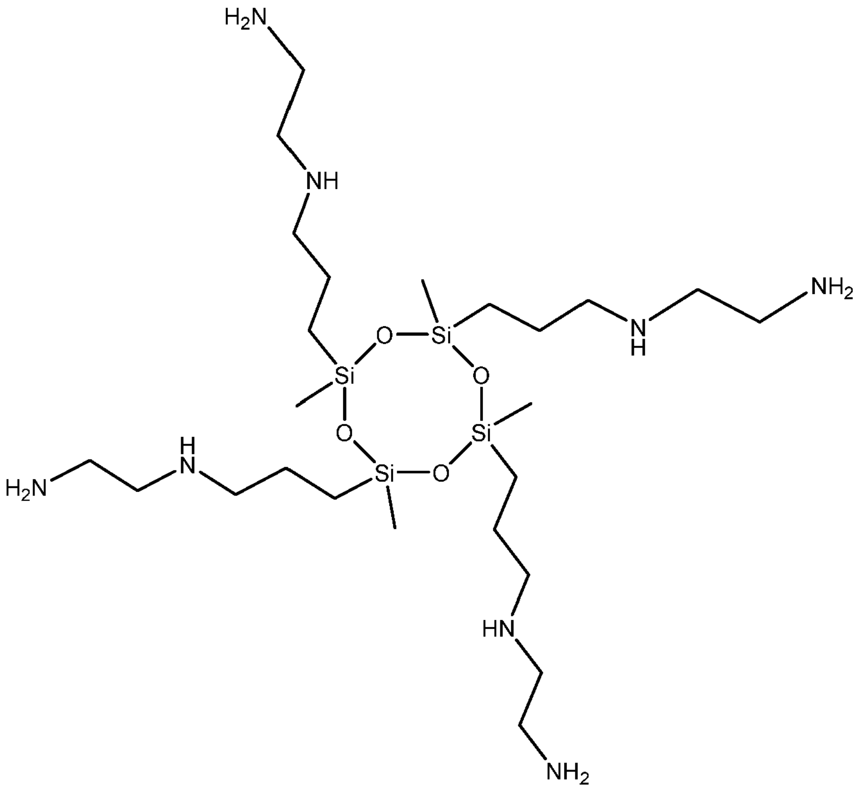

,

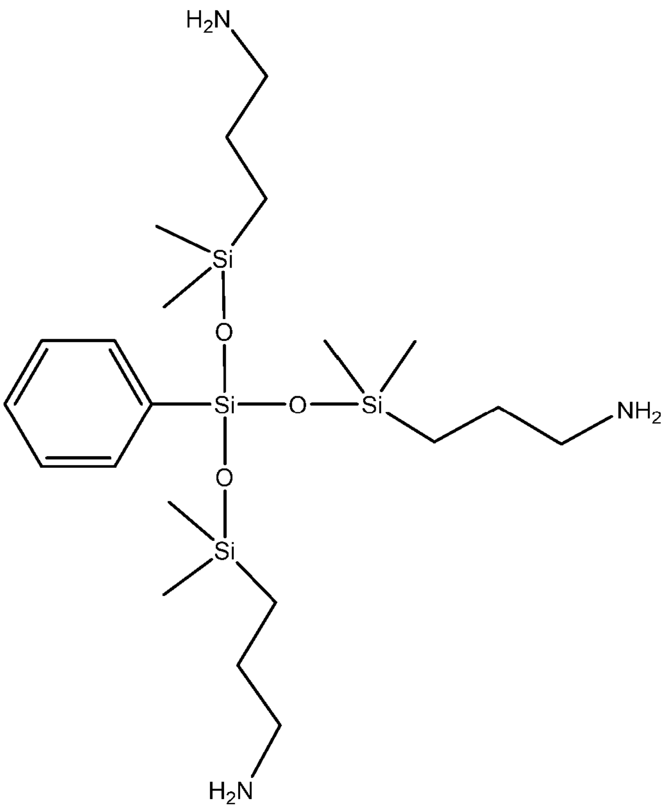

,

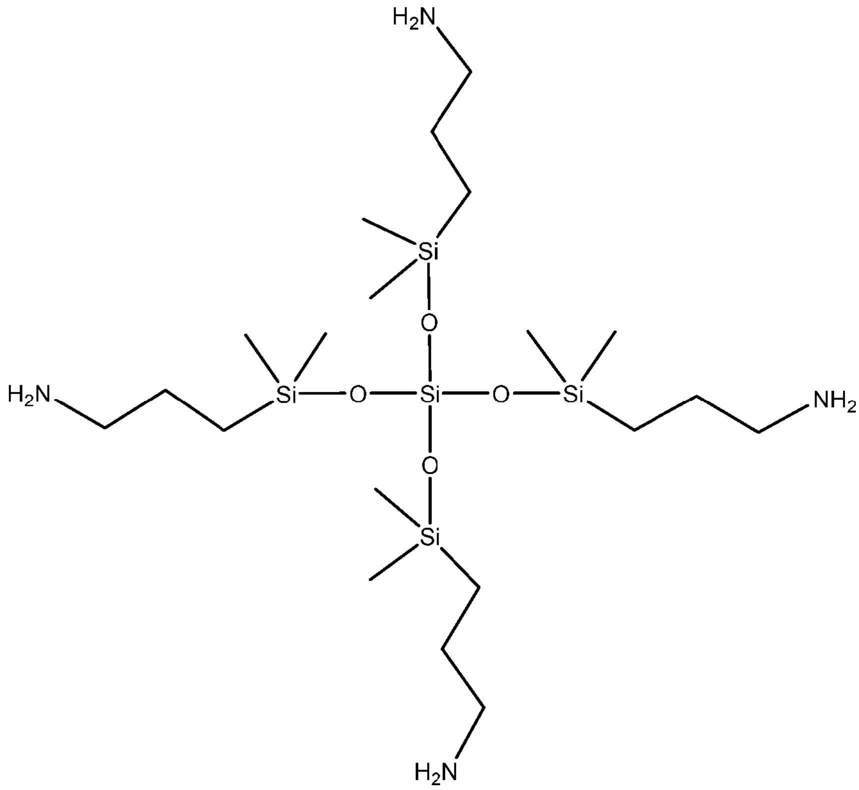

,

and

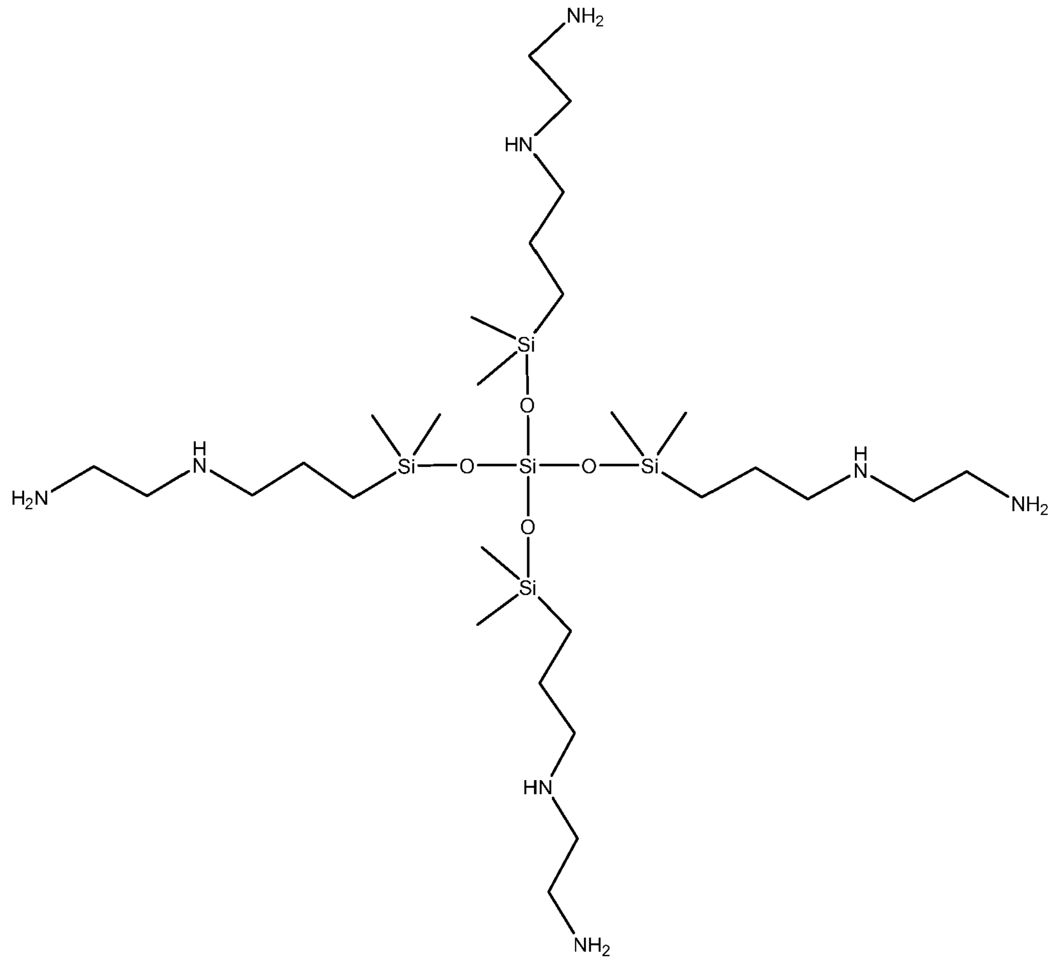

.

Generally, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof may be present in any suitable ratio known in the art that facilitates the functionalized sorbent described herein. In some embodiments, the ratio is selected from the group consisting of a molar ratio, a weight ratio, and a volume ratio. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio in a range of from about 10:1 to about 1:10. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio in a range of from about 9:1 to about 1:9. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio in a range of from about 8:1 to about 1:8. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio in a range of from about 7:1 to about 1:7. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio in a

range of from about 6:1 to about 1:6. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio in a range of from about 5:1 to about 1:5. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio in a range of from about 4:1 to about 1:4. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio in a range of from about 3:1 to about 1:3. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio in a range of from about 2:1 to about 1:2. In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio of about 1:1.

In some embodiments, the at least one functionalization ligand including a polyamine including at least one oxygen-containing unit selected from the group consisting of carbonyl units, hydroxyl units, and combinations thereof is present in a lesser amount than the at least one functionalization ligand not including a polyamine including at least one oxygen-containing unit selected from the group consisting of carbonyl units, hydroxyl units, and combinations thereof.

In some embodiments, the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof are present in a ratio of about 1:2, about 1:3, about 1:4, about 1:5, about 1:6, about 1:7, about 1:8, about 1:9, or about 1:10.

Generally, the sorbent may be any suitable sorbent known in the art that facilitates the functionalized sorbent described herein. In some embodiments, the sorbent is selected from the group consisting of coordination framework compounds, metal-organic framework (MOF) compounds, porous coordination polymers (PCPs), covalent organic framework (COF) compounds, zeolitic imidazolate framework (ZIF) compounds, crystalline porous materials, crystalline open frameworks, reticular chemistry, silica particles, zeolites, silico-alumino-phosphates (SAPOs), alumino-phosphates (AlPOs), polyaromatic frameworks (PAFs), activated carbons, molecular organic solids, and combinations thereof.

As used herein, MOF compounds are a class of compounds including metal ions or clusters coordinated to organic ligands to form one-, two-, or three-dimensional structures. The metal ions or clusters act as joints and are bound by multidirectional organic ligands, which act as linkers in a network structure. MOF compounds have a modular nature that allows for synthetic tunability, which affords fine chemical and structural control. Properties such as porosity, stability, particle morphology, and conductivity can be tailored for specific applications.

In many embodiments, the sorbent is a MOF compound including a MOF metal or metal-containing cluster and a MOF linker.

In some embodiments, the MOF metal may be any suitable MOF metal known in the art that facilitates the functionalized sorbent described herein. In other embodiments, the MOF metal is a metal selected from the group consisting of alkali metals, alkaline earth metals, transition metals, Ca, Mn, Cr, Fe, Co, Ni, Cu, Zn, ions thereof, hydrates thereof, salts thereof, halides thereof, fluorides thereof, chlorides thereof, bromides thereof, iodides thereof, nitrates thereof, acetates thereof, sulfates thereof, phosphates thereof, carbonates thereof, oxides thereof, formates thereof, carboxylates thereof, and combinations thereof. In some embodiments, the MOF metal includes Mg.

In some embodiments, the MOF metal-containing cluster may be any suitable MOF metal-containing cluster known in the art that facilitates the functionalized sorbent described herein. In some embodiments, the MOF metal-containing cluster includes an MOF metal node and a linker strut, with the MOF metal and the linker each defined as described herein. In other embodiments, the MOF metal-containing cluster includes an MOF metal-oxy cluster.

In some embodiments, the MOF linker may be any suitable MOF linker known in the art that facilitates the functionalized sorbent described herein. Generally, the geometry and connectivity of a linker contribute to the structure of the resulting MOF compound. Adjustments of linker geometry, length, ratio, and functional-group can tune the size, shape, and internal surface property of a MOF compound for a targeted application.

In some embodiments, the MOF linker is a linker selected from the group consisting of polytopic linkers, ditopic

linkers, tritopic linkers, tetratopic linkers, pentatopic linkers, hexatopic linkers, heptatopic linkers, octatopic linkers, mixed linkers, desymmetrized linker, metallo linkers, N-heterocyclic linkers, and combinations thereof.

In some embodiments, the MOF linker is a linker selected from the group consisting of polytopic linkers, 4,4'-dihydroxy-[1,1'-biphenyl]-3,3'-dicarboxylic acid ($H_4$dobpdc), 4,4'-dioxidobiphenyl-3,3'-dicarboxylate (dobpdc$^{4-}$), 4,4"-dioxido-[1,1':4',1"-terphenyl]-3,3"-dicarboxylate (dotpdc$^{4-}$), 2,5-dioxidobenzene-1,4-dicarboxylate (dobdc$^{4-}$), 4,6-Dihydroxyisophthalic acid (m-dobdc$^{4-}$), 3,3'-dioxido-biphenyl-4,4'-dicarboxylate (para-carboxylate-dobpdc$^{4-}$), 4,4'-[oxalylbis(imino)]bis(2-hydroxybenzoic acid) ($H_4$ODA), 4,4'-[1,4-phenylenebis-(carbonylimino)]bis(2-hydroxybenzoic acid) ($H_4$TDA), 4,4'-Dihydroxyazobenzene-3,3'-dicarboxylic acid ($H_4$OSA), protonated, partially and fully deprotonated forms thereof, and combinations thereof. As another example, in some embodiments, the MOF linker is a linker selected from the group consisting of dicarboxylates (e.g., terephthalic acid), tricarboxylates (e.g., 1,3,5-benzentricarboxylic acid), azolates, tetrazolates, and combinations thereof.

As another example, in some embodiments, the MOF linker is a dicarboxylic acid linker selected from the group consisting of 1,4-butanedicarboxylic acid, 4-oxopyran-2,6-dicarboxylic acid, 1,6-hexanedicarboxylic acid, decanedicarboxylic acid, 1,8-heptadecanedicarboxylic acid, 1,9-heptadecanedicarboxylic acid, heptadecanedicarboxylic acid, acetylenedicarboxylic acid, 1,2-benzenedicarboxylic acid, 2,3-pyridinedicarboxylic acid, pyridine-2,3-dicarboxylic acid, 1,3-butadiene-1,4-dicarboxylic acid, 1,4-benzenedicarboxylic acid, p-benzenedicarboxylic acid, imidazole-2,4-dicarboxylic acid, 2-methylquinoline-3,4-dicarboxylic acid, quinoline-2,4-dicarboxylic acid, quinoxaline-2,3-dicarboxylic acid, 6-chloroquinoxaline-2,3-dicarboxylic acid, 4,4'-diaminophenylmethane-3,3'-dicarboxylic acid, quinoline-3,4-dicarboxylic acid, 7-chloro-4-hydroxyquinoline-2,8-dicarboxylic acid, diimidedicarboxylic acid, pyridine-2,6-dicarboxylic acid, 2-methylimidazole-4,5-dicarboxylic acid, thiophene-3,4-dicarboxylic acid, 2-isopropylimidazole-4,5-dicarboxylic acid, tetrahydropyran-4,4-dicarboxylic acid, perylene-3,9-dicarboxylic acid, perylenedicarboxylic acid, Pluriol E 200-dicarboxylic acid, 3,6-dioxaoctanedicarboxylic acid, 3,5-cyclohexadiene-1,2-dicarboxylic acid, octanedicarboxylic acid, pentane-3,3-carboxylic acid, 4,4'-diamino-1,1'-diphenyl-3,3'-dicarboxylic acid, 4,4'-diaminodiphenyl-3,3'-dicarboxylic acid, benzidine-3,3'-dicarboxylic acid, 1,4-bis-(phenylamino)benzene-2,5-dicarboxylic acid, 1,1'-dinaphthyl-8,8'-dicarboxylic acid, 7-chloro-8-methylquinoline-2,3-dicarboxylic acid, 1-anilinoanthraquinone-2,4'-dicarboxylic acid, polytetrahydrofuran-250-dicarboxylic acid, 1,4-bis(carboxymethyl)piperazine-2,3-dicarboxylic acid, 7-chloroquinoline-3,8-dicarboxylic acid, 1-(4-carboxy)phenyl-3-(4-chloro) phenylpyrazoline-4,5-dicarboxylic acid, 1,4,5,6,7,7,-hexachloro-5-norbornene-2,3-dicarboxylic acid, phenylindanedicarboxylic acid, 1,3-dibenzyl-2-oxoimidazolidine-4,5-dicarboxylic acid, 1,4-cyclohexanedicarboxylic acid, naphthalene-1,8-dicarboxylic acid, 2-benzoylbenzene-1,3-dicarboxylic acid, 1,3-dibenzyl-2-oxoimidazolidine-4,5-cisdicarboxylic acid, 2,2'-biquinoline-4,4'-dicarboxylic acid, pyridine-3,4-dicarboxylic acid, 3,6,9-trioxaundecanedicarboxylic acid, o-hydroxybenzophenonedicarboxylic acid, Pluriol E 300-dicarboxylic acid, Pluriol E 400-dicarboxylic acid, Pluriol E 600-dicarboxylic acid, pyrazole-3,4-dicarboxylic acid, 2,3-pyrazinedicarboxylic acid, 5,6-dimethyl-2,3-pyrazinedicarboxylic acid, 4,4'-diaminodiphenyletherdiimidedicarboxylic acid, 4,4'-diaminodiphenylmethanediimidedicarboxylic acid, 4,4'-diaminodiphenylsulfonediimidedicarboxylic acid, 2,6-naphthalenedicarboxylic acid, 1,3-adamantanedicarboxylic acid, 1,8-naphthalenedicarboxylic acid, 2,3-naphthalenedicarboxylic acid, 8-methoxy-2,3-naphthalenedicarboxylic acid, 8-nitro-2,3-naphthalenedicarboxylic acid, 8-sulfo-2,3-naphthalenedicarboxylic acid, anthracene-2,3-dicarboxylic acid, 2'-3'-diphenyl-p-terphenyl-4,4"-dicarboxylic acid, diphenylether-4,4'-dicarboxylic acid, imidazole-4,5-dicarboxylic acid, 4(1H)-oxothiochromene-2,8-dicarboxylic acid, 5-t-butyl-1,3-benzenedicarboxylic acid, 7,8-quinolinedicarboxylic acid, 4,5-imidazoledicarboxylic acid, 4-cyclohexene-1,2-dicarboxylic acid, hexatriacontanedicarboxylic acid, tetradecanedicarboxylic acid, 1,7-heptanedicarboxylic acid, 5-hydroxy-1,3-benzenedicarboxylic acid, pyrazine-2,3-dicarboxylic acid, furan-2,5-dicarboxylic acid, 1-nonene-6,9-dicarboxylic acid, eicosenedicarboxylic acid, 4,4'-dihydroxydiphenylmethane-3,3'-dicarboxylic acid, 1-amino-4-methyl-9,10-dioxo-9,10-dihydroanthracene-2,3-dicarboxylic acid, 2,5-pyridinedicarboxylic acid, cyclohexene-2,3-dicarboxylic acid, 2,9-dichlorofluorubin-4,11-dicarboxylic acid, 7-chloro-3-methylquinoline-6,8-dicarboxylic acid, 2,4-dichlorobenzophenone-2',5'-dicarboxylic acid, 1,3-benzenedicarboxylic acid, 2,6-pyridinedicarboxylic acid, 1-methylpyrrole-3,4-dicarboxylic acid, 1-benzyl-1H-pyrrole-3,4-dicarboxylic acid, anthraquinone-1,5-dicarboxylic acid, 3,5-pyrazoledicarboxylic acid, 2-nitrobenzene-1,4-dicarboxylic acid, heptane-1,7-dicarboxylic acid, cyclobutane-1,1-dicarboxylic acid, 1,14-tetradecanedicarboxylic acid, 5,6-dehydronorbornane-2,3-dicarboxylic acid, 5-ethyl-2,3-pyridinedicarboxylic acid, and combinations thereof.

As another example, in some embodiments, the MOF linker is a tricarboxylic acid linker selected from the group consisting of 2-hydroxy-1,2,3-propanetricarboxylic acid, 7-chloro-2,3,8-quinolinetricarboxylic acid, 1,2,4-benzenetricarboxylic acid, 1,2,4-butanetricarboxylic acid, 2-phosphono-1,2,4-butanetricarboxylic acid, 1,3,5-benzenetricarboxylic acid, 1-hydroxy-1,2,3-propanetricarboxylic acid, 4,5-dihydro-4,5-dioxo-1H-pyrrolo[2,3-F]quinoline-2,7,9-tricarboxylic acid, 5-acetyl-3-amino-6-methylbenzene-1,2,4-tricarboxylic acid, 3-amino-5-benzoyl-6-methylbenzene-1,2,4-tricarboxylic acid, 1,2,3-propanetricarboxylic acid, aurinetricarboxylic acid, and combinations thereof.

As another example, in some embodiments, the MOF linker is a tetracarboxylic acid linker selected from the group consisting of 1,1-dioxide-perylo[1,12-BCD]thiophene-3,4,9,10-tetracarboxylic acid, perylenetetracarboxylic acids, perylene-3,4,9,10-tetracarboxylic acid, perylene-1,12-sulfone-3,4,9,10-tetracarboxylic acid, butanetetracarboxylic acids, 1,2,3,4-butanetetracarboxylic acid, meso-1,2,3,4-butanetetracarboxylic acid, decane-2,4,6,8-tetracarboxylic acid,

1,4,7,10,13,16-hexaoxacyclooctadecane-2,3,11,12-tetracarboxylic acid, 1,2,4,5-benzenetetracarboxylic acid, 1,2,11,12-dodecanetetracarboxylic acid, 1,2,5,6-hexanetetracarboxylic acid, 1,2,7,8-octanetetracarboxylic acid, 1,4,5,8-naphthalenetetracarboxylic acid, 1,2,9,10-decanetetracarboxylic acid, benzophenonetetracarboxylic acid, 3,3',4,4'-benzophenonetetracarboxylic acid, tetrahydrofurantetracarboxylic acid, cyclopentanetetracarboxylic acids, cyclopentane-1,2,3,4-tetracarboxylic acid, and combinations thereof.

In the exemplary embodiment, the MOF linker is 4,4'-dihydroxy-[1,1'-biphenyl]-3,3'-dicarboxylic acid ($H_4$dobpdc) and/or 4,4'-dioxidobiphenyl-3,3'-dicarboxylate (dobpdc$^{4-}$). In some embodiments, dobpdc includes 4,4'-dihydroxy-[1,1'-biphenyl]-3,3'-dicarboxylic acid, its mono-carboxylate form, its di-carboxylate form, its mono-phenoxide form, its di-phenoxide form, and combinations thereof.

In some embodiments, the MOF linker is one or more of the following linkers:

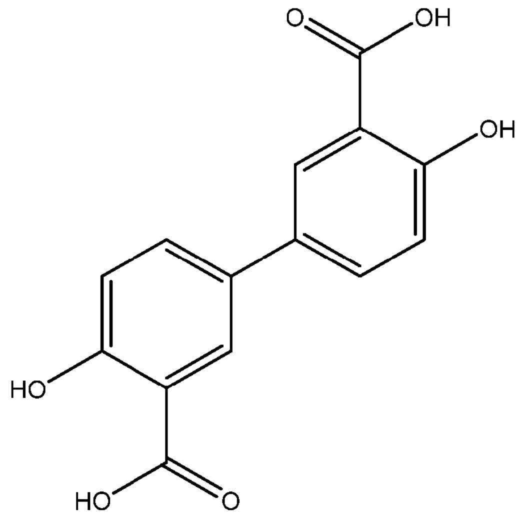

4,4'-dihydroxy-[1,1'-biphenyl]-3,3'-dicarboxylic acid;

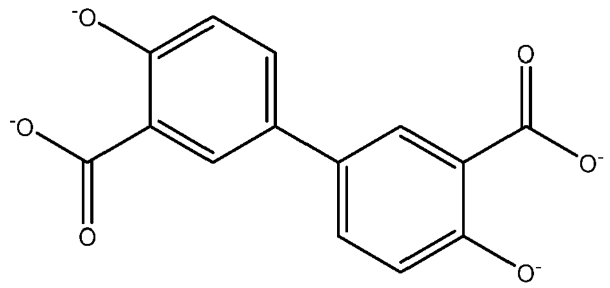

4,4'-dioxidobiphenyl-3,3'-dicarboxylate ; ;

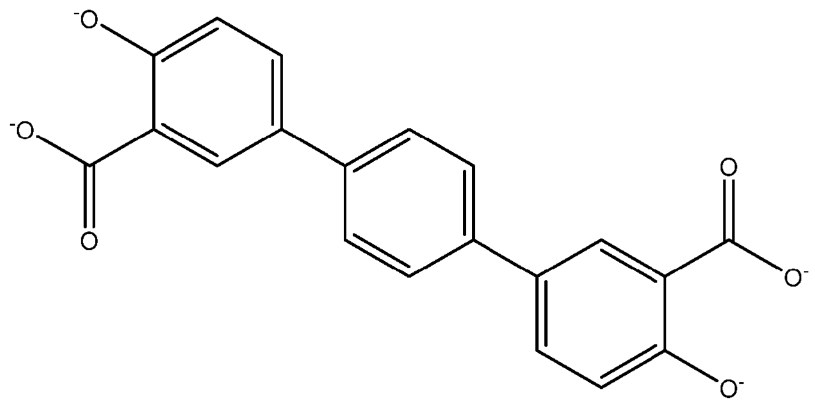

4,4"-dioxido-[1,1':4',1"-terphenyl]-3,3"-dicarboxylate ;

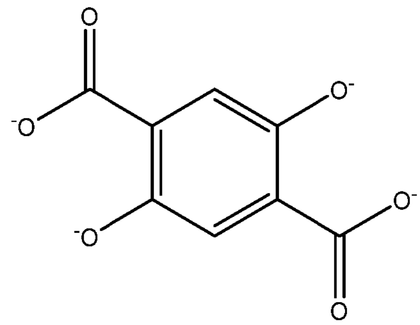

2,5-dioxidobenzene-1,4-dicarboxylate ;

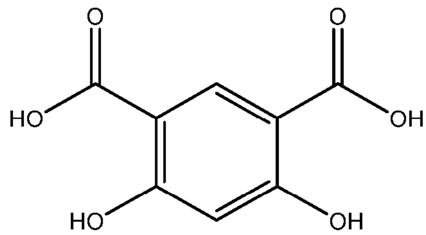

4,6-Dihydroxyisophthalic acid ;

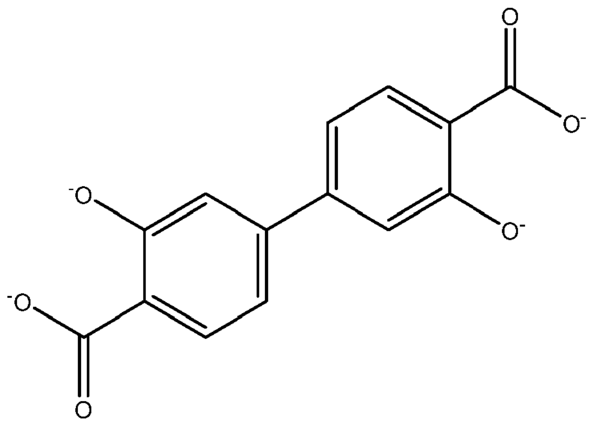

3,3'-dioxido-biphenyl-4,4'-dicarboxylate ;

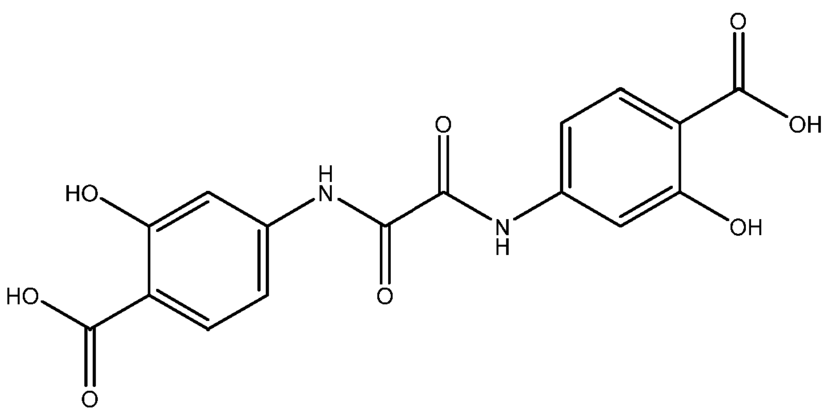

4,4'-[oxalylbis(imino)]bis(2-hydroxybenzoic acid) ;

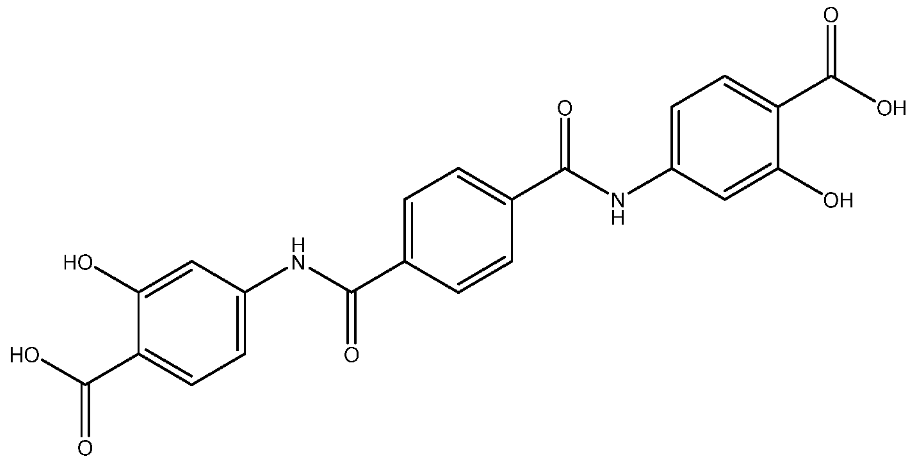

4,4'-[1,4-phenylenebis-(carbonylimino)]bis(2-hydroxybenzoic acid) ;
and/or

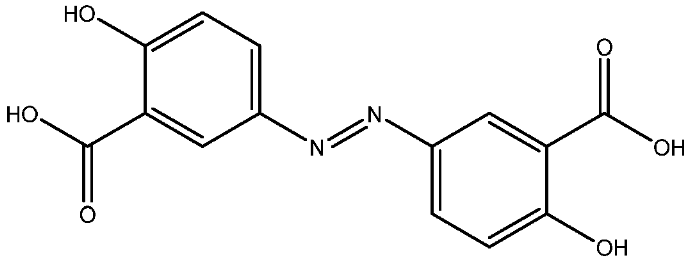

4,4'-Dihydroxyazobenzene-3,3'-dicarboxylic acid

In some embodiments, the MOF compound is a MOF compound of the MOF-74 family. In some embodiments, the MOF compound is a MOF compound of the MOF-274 family. In some embodiments, the MOF compound is a MOF compound of the MOF-303 family. In some embodiments, the MOF compound is $Mg_2$(dobpdc).

In some embodiments, the functionalized sorbent is a functionalized MOF compound of Formula (S-I)

$$M_x L_y F_a^A F_b^B \quad \text{(Formula S-I)},$$

wherein:

*M* is a MOF metal or metal-containing cluster;

*L* is a MOF linker;

$F^A$ is at least one functionalization ligand including a polyamine including at least one oxygen-containing unit selected from the group consisting of carbonyl units, hydroxyl units, and combinations thereof;

$F^B$ is at least one functionalization ligand not including a polyamine including at least one oxygen-containing unit selected from the group consisting of carbonyl units, hydroxyl units, and combinations thereof;

*x* is a value in a range of 1 to 6;

*y* is a value in a range of 1 to 6;

*a* is a value greater than 0 and less than or equal to 2; and

*b* is a value in a range of 0 to 2.

In some embodiments, the functionalized sorbent includes a metal-organic framework (MOF), wherein a first amine of the polyamine attaches to a first metal site of the MOF and optionally wherein a second amine of the polyamine attaches to a second metal site of the MOF.

In some embodiments, the functionalized sorbent does not include a MOF.

In some embodiments, the functionalized sorbent includes a non-MOF sorbent. In some embodiments, the functionalized sorbent includes a mesoporous oxide support. In some embodiments, the functionalized sorbent includes a mesoporous oxide support selected from the group consisting of silica, alumina, zirconia, and combinations thereof. In some embodiments, the functionalized sorbent includes a porous polymer.

In some embodiments, the functionalized sorbent does not include a non-MOF.

Generally, amine-functionalized MOFs tend to have better $CO_2$ capacity, expressed as amount of $CO_2$ captured per weight of sorbent, such as $gCO_2$/gSorbent or $mmolCO_2$/gSorbent, under low $CO_2$ concentrations, such as DAC relevant conditions, compared to other sorbents. Non-MOFs like mesoporous silicas and aluminas have potentially lower costs and may have improved kinetics compared to other sorbents.

Amines can be physically impregnated, which imparts low stability, or chemically grafted, which provides more stability but lower $CO_2$ capacity based on which amine is chosen.

One or more of reduced particle sizes of sorbents, increased aspect ratios of sorbents, and aqueous sorbent synthesis leads to sorbents having significantly improved $CO_2$ uptake kinetics.

Generally, the sorbent may include any suitable particle size known in the art that facilitates the functionalized sorbent described herein. In some embodiments, the sorbent has an average particle length ≤ 5 μm. In some embodiments, the sorbent has an average particle length ≤ 3 μm, ≤ 2.9 μm, ≤ 2.8 μm, ≤ 2.7 μm, ≤ 2.6 μm, ≤ 2.5 μm, ≤ 2.4 μm, ≤ 2.3 μm, ≤ 2.2 μm, ≤ 2.1 μm, ≤ 2 μm, ≤ 1.9 μm, ≤ 1.8 μm, ≤ 1.7 μm, ≤ 1.6 μm, ≤ 1.5 μm, ≤ 1.4 μm, ≤ 1.3 μm, ≤ 1.2 μm, ≤ 1.1 μm, ≤ 1 μm, ≤ 0.9 μm, ≤ 0.8 μm, ≤ 0.7 μm, ≤ 0.6 μm, ≤ 0.5 μm, ≤ 0.4 μm, ≤ 0.3 μm, ≤ 0.2 μm, or ≤ 0.1 μm. In some embodiments, the sorbent has an average particle length ≥ 5 μm. In some embodiments, the sorbent has an average particle length ≥ 3 μm, ≥ 2.9 μm, ≥ 2.8 μm, ≥ 2.7 μm, ≥ 2.6 μm, ≥ 2.5 μm, ≥ 2.4 μm, ≥ 2.3 μm, ≥ 2.2 μm, ≥ 2.1 μm, ≥ 2 μm, ≥ 1.9 μm, ≥ 1.8 μm, ≥ 1.7 μm, ≥ 1.6 μm, ≥ 1.5 μm, ≥ 1.4 μm, ≥ 1.3 μm, ≥ 1.2 μm, ≥ 1.1 μm, ≥ 1 μm, ≥ 0.9 μm, ≥ 0.8 μm, ≥ 0.7 μm, ≥ 0.6 μm, ≥ 0.5 μm, ≥ 0.4 μm, ≥ 0.3 μm, ≥ 0.2 μm, or ≥ 0.1 μm.

Generally, the sorbent may include any suitable aspect ratio known in the art that facilitates the functionalized sorbent described herein. As used herein, the aspect ratio is the ratio between the average width of the sorbent and the average length of the sorbent. In some embodiments, the sorbent has an aspect ratio in a range of from about 0 to about 1. In some embodiments, the sorbent has an aspect ratio ≤ 1, ≤ 0.9, ≤ 0.8, ≤ 0.7, ≤ 0.6, ≤ 0.5, ≤ 0.4, ≤ 0.3, ≤ 0.2, or ≤ 0.1. In some embodiments, the sorbent has an aspect ratio ≥ 0.9, ≥ 0.8, ≥ 0.7, ≥ 0.6, ≥ 0.5, ≥ 0.4, ≥ 0.3, ≥ 0.2, ≥ 0.1, or ≥ 0.

In some embodiments, the particle sizes are individual particle sizes. Individual particle size measurements may be made according to any suitable means known in the art, such as by measuring particle sizes in an SEM image.

In some embodiments, the particle size measurements are average particle size measurements. Average particle size measurements may be made according to any suitable means known in the art, such as by analyzing particle size distribution information.

Generally, the particle size of the sorbent may be controlled, altered, or reduced according to any suitable technique known in the art that facilitates the functionalized sorbent described herein. In some embodiments, suitable techniques for controlling, altering, or reducing particle size include mechanical grinding (e.g., mortar and pestling), using a microfluidizer, dry milling, wet milling, chemical size reduction (e.g., incorporation of a crystal growth inhibitor), acoustic cavitation, hydrodynamic cavitation, and combinations thereof.

Generally, the sorbent may be in any suitable form known in the art that facilitates the functionalized sorbent described herein. In some embodiments, the sorbent is in a form selected from the group consisting of powders, pellets, composites, composites mixed with binders, films, coatings, aqueous coatings, packed beds, columns, monoliths, and combinations thereof.

The exemplary embodiments described herein include a sorbent system. Generally, the sorbent system may be any suitable sorbent system known in the art that facilitates the functionalized sorbent described herein. In some embodiments, the sorbent system includes the functionalized sorbent and optionally a binder. In some embodiments, the sorbent system is disposed on a polymer film.

In some embodiments, the sorbent system is in a form of a coating formulation. The coating formulation may be in a form of a solution, an emulsion, or a combination thereof. When in the form of a solution, the binder is water-soluble. When in the form of an emulsion, the binder is not water-soluble. The coating formulation may include a binder and optionally at least one additive. In some embodiments, the at least one additive is selected from the group consisting of silica particles, clay particles, alumina particles, and combinations thereof. In some embodiments, the binder includes at least one water-based binder selected from the group consisting of water-based epoxies, water-based acrylic resins, water soluble polymers, and combinations thereof.

In some embodiments, the sorbent system includes at least one contactor. In some embodiments, the sorbent system includes more than one contactor. In some embodiments, the sorbent system includes a contactor configured for

an adsorption cycle and a contactor configured for a desorption cycle. The contactor may be any suitable contactor known in the art that facilitates the functionalized sorbent described herein. In some embodiments, the sorbent is integrated into at least one channel of the contactor. In some embodiments, the contactor is fabricated from the sorbent itself. In some embodiments, the contactor is coated with the sorbent system. In some embodiments, the contactor includes more than one sorbent coating, with at least one sorbent coating being the sorbent system.

In some embodiments, the sorbent system includes a frame. The frame may be any suitable frame known in the art that facilitates the functionalized sorbent described herein. The frame may be included in the contactor or between two contactors. The frame may be composed of one piece or composed of more than one piece. In some embodiments, the frame is an air frame. In some embodiments, the frame is in a configuration selected from the group consisting of polygonal configurations, rectangular configurations, square configurations, circular configurations, asymmetrical configurations, and combinations thereof. In some embodiments, the sorbent system is mounted on the frame.

In some embodiments, the sorbent system includes at least one concentrator. The concentrator may be any suitable concentrator known in the art that facilitates the functionalized sorbent described herein. The concentrator may be a passive concentrator or an active concentrator.

In some embodiments, the sorbent system includes at least one component configured to drive fluid flow. The component configured to drive fluid flow may be any suitable component configured to drive fluid flow known in the art that facilitates the functionalized sorbent described herein. In some embodiments, the component configured to drive fluid flow is selected from the group consisting of pumps, fans, and combinations thereof.

In some embodiments, the sorbent system includes at least one component configured to alter temperature. The component configured to alter temperature may be any suitable component configured to alter temperature known in the art that facilitates the functionalized sorbent described herein. In some embodiments, the component configured to alter temperature is selected from the group consisting of heaters, coolers, and combinations thereof.

In some embodiments, the sorbent system includes at least one component configured to convey fluid. The component configured to convey fluid may be any suitable component configured to convey fluid known in the art that facilitates the functionalized sorbent described herein. In some embodiments, the component configured to convey fluid is selected from the group consisting of pipes, perforated pipes, plastic perforated pipes, polymeric perforated pipes, metal perforated pipes, composite perforated pipes, and combinations thereof.

Generally, the functionalized sorbent may be used according to any suitable purpose known in the art that facilitates the use of the functionalized sorbent described herein. In some embodiments, the functionalized sorbent is used in a sorbent system. In some embodiments, the functionalized sorbent is used in a carbon capture sorbent system. In some embodiments, the functionalized sorbent is used in a moisture sorbent system. In some embodiments, the functionalized sorbent is used in a carbon capture sorbent system in the presence of water. In some embodiments, the functionalized sorbent is used for capturing a gas. In some embodiments, the functionalized sorbent is used for post-combustion capturing of $CO_2$ and/or direct air capturing of $CO_2$.

The exemplary embodiments described herein include a method of making a sorbent system. Generally, the functionalized sorbent may be made according to any suitable synthesis method known in the art that facilitates the functionalized sorbent described herein.

In many embodiments, the method of making a sorbent system includes making a sorbent, and optionally functionalizing the sorbent with at least one functionalization ligand including a polyamine including at least one oxygen-containing unit selected from the group consisting of carbonyl units, hydroxyl units, and combinations thereof.

In some embodiments, a method of making a sorbent system includes functionalizing the sorbent with at least one functionalization ligand including a polyamine including at least one oxygen-containing unit selected from the group consisting of carbonyl units, hydroxyl units, and combinations thereof. In some embodiments, the method of making a sorbent system includes functionalizing the sorbent with at least two functionalization ligands each including a polyamine including at least one oxygen-containing unit selected from the group consisting of carbonyl units, hydroxyl units, and combinations thereof, wherein the polyamines including at least one oxygen-containing unit selected from the group consisting of carbonyl units, hydroxyl units, and combinations thereof are different from each other. In some embodiments, the method of making a sorbent system further includes functionalizing the sorbent with at least one functionalization ligand not including a polyamine including at least one oxygen-containing unit selected from the group consisting of carbonyl units, hydroxyl units, and combinations thereof. In some embodiments, the method of making a sorbent system includes controlling the ratio between the at least one functionalization ligand including a polyamine including at least one oxygen-containing unit selected from the group consisting of carbonyl units, hydroxyl units, and combinations thereof and the at least one functionalization ligand not including a polyamine including at least one oxygen-containing unit selected from the group consisting of carbonyl units, hydroxyl units, and combinations thereof.

In some embodiments, the method of making a sorbent system further includes annealing the functionalized sorbent. Annealing the sorbent system may remove excess ligands. In some embodiments, annealing the functionalized sorbent includes annealing the functionalized sorbent at an elevated temperature. In some embodiments, annealing the sorbent includes annealing the sorbent at a temperature in a range of from about 50 °C to about 400 °C. In some

embodiments, annealing the sorbent includes annealing the sorbent at a temperature in a range of from about 100 °C to about 300 °C. In some embodiments, annealing the sorbent includes annealing the sorbent at a temperature in a range of from about 150 °C to about 250 °C.

Figure 47 is an exemplary method flow chart 4710. In this exemplary embodiment, method flow chart 4710 depicts exemplary steps of the method embodiments described herein and is not intended to limit the method embodiments. In the exemplary embodiment, the method includes forming 4712 a mixture including: a sorbent precursor; a crystal growth inhibitor; optionally a solvent; and optionally a non-solvent. The method also includes reacting 4714 the mixture. The sorbent has an average particle length ≤ 3 μm.

Forming 4712 the mixture may occur by any suitable means known in the art. In some embodiments, all components are added simultaneously. In some embodiments, at least one component is added at a different time than other components.

In some embodiments, the sorbent precursor comprises a MOF linker and a MOF metal or metal-containing cluster. The sorbent precursor may be formed before the mixture is formed 4712 and added as a single component to the mixture, or it may be formed *in situ* in the mixture during the forming 4712 of the mixture. For example, a MOF linker could be deprotonated separately and then added or deprotonated *in situ.* Similarly, a MOF metal or metal-containing cluster could be pre-formed and then added or formed *in situ.*

In some embodiments, the solvent comprises an aqueous solvent. In some embodiments, the solvent comprises water. The use of an aqueous solvent provides several benefits. In particular, the use of an aqueous solvent presents scalability, safety, cost, and waste-handling advantages as compared to at least some known methods of preparing MOF compounds. In addition, MOF compounds prepared with an aqueous solvent generally are easier to purify, e.g. via solvent washing, than the same MOF compounds prepared according to known methods. This improved purification stems from the relative ease of removing solvent molecules (e.g., water) from the MOF compounds described herein as compared to the removal of strongly bound solvent molecules (e.g., DMF) utilized to prepare the same MOF compounds according to known methods. In addition, the purified MOF compounds do not include strongly bound solvent molecules that decrease gas uptake, surface area, and/or overall pore volumes. Finally, the purification is improved by requiring less toxic purification methods.

In some embodiments, the solvent is an organic solvent. In some embodiments, the solvent is a mixture of an organic solvent and an aqueous solvent.

Generally, a non-solvent is a substance incapable of dissolving a given component of a solution or mixture. In some embodiments, the non-solvent is a liquid-based component that is included in the reaction mixture. In some embodiments, the non-solvent is a solvent in which one of the components of the reaction mixture has limited solubility. In some embodiments, the non-solvent is selected from the group consisting of organic solvents, aqueous solvents, and combinations thereof.

In some embodiments, the crystal growth inhibitor is selected from the group consisting of salicylic acid, 4-fluorosalicylic acid, 4,4'-biphenol, 2,2'-Bipyridine-5,5'-dicarboxylic acid (BPYDC), 2,2'-Bipyridine-5,5'-dimethanol (BPYDM), benzoic acids, biphenols, bipyridines, and combinations thereof.

Figure 48 is an exemplary method flow chart 4810. In this exemplary embodiment, method flow chart 4810 depicts exemplary steps of the method embodiments described herein and is not intended to limit the method embodiments. In the exemplary embodiment, the method includes forming 4812 a mixture including: a sorbent; at least one functionalization ligand including a polyamine including at least one oxygen-containing unit selected from the group consisting of carbonyl units, hydroxyl units, and combinations thereof; optionally at least one functionalization ligand not including a polyamine including at least one oxygen-containing unit selected from the group consisting of carbonyl units, hydroxyl units, and combinations thereof; optionally a solvent, and optionally a non-solvent. The method also includes functionalizing 4814 the sorbent.

In some embodiments, functionalizing 4814 the sorbent includes stirring the mixture.

In some embodiments, functionalizing 4814 the sorbent includes functionalizing 4814 the sorbent in the presence of an inert gas.

In some embodiments, functionalizing 4814 the sorbent includes functionalizing 3514 the sorbent at a temperature in a range of from about 0 °C to about 100 °C. In some embodiments, functionalizing 4814 the sorbent includes functionalizing 3514 the sorbent at a temperature in a range of from about 20 °C to about 80 °C. In some embodiments, functionalizing 4814 the sorbent includes functionalizing 3514 the sorbent at a temperature in a range of from about 20 °C to about 60 °C.

In some embodiments, functionalizing 4814 the sorbent includes functionalizing 4814 the sorbent for a time in a range of from about one minute to about seven days. In some embodiments, functionalizing 4814 the sorbent includes functionalizing 4814 the sorbent for a time in a range of from about 1 hour to about three days.

In some embodiments, the sorbent is desolvated before functionalization 4814. In some embodiments, the sorbent is dry before functionalization.

In some embodiments, the sorbent is annealed after functionalization 4814. In some embodiments, annealing

the sorbent includes annealing the sorbent at an elevated temperature. In some embodiments, annealing the sorbent includes annealing the sorbent at a temperature in a range of from about 50 °C to about 400 °C. In some embodiments, annealing the sorbent includes annealing the sorbent at a temperature in a range of from about 100 °C to about 300 °C. In some embodiments, annealing the sorbent includes annealing the sorbent at a temperature in a range of from about 150 °C to about 250 °C.

In some embodiments, the solvent is an organic solvent. In some embodiments, the solvent is an aqueous solvent. In some embodiments, the solvent is a mixture of an organic solvent and an aqueous solvent.

Generally, a non-solvent is a substance incapable of dissolving a given component of a solution or mixture. In some embodiments, the non-solvent is a liquid-based component that is included in the reaction mixture. In some embodiments, the non-solvent is a solvent in which one of the components of the reaction mixture has limited solubility. In some embodiments, the non-solvent is selected from the group consisting of organic solvents, aqueous solvents, and combinations thereof.

In some embodiments, the non-solvent aids in functionalization. In some embodiments, the selectivity of the functionalization is controlled by relative solubility. For example, one or more of the sorbent or amines may possess a different solubility in the liquid-based reaction mixture compared to another sorbent or amine or the functionalized sorbent. In this way, relative solubility introduces limiting reactions and/or reagents.

In many embodiments, the method may also include any further suitable processing steps known in the art that facilitate the success of the method described herein. Such processing steps may include, but are not limited to only including, washing, drying, filtering, purifying, separating, centrifuging, and any combinations thereof. In some embodiments, the method further includes washing the functionalized sorbent. In some embodiments, the method further includes purifying the functionalized sorbent. In some embodiments, the purifying includes using distillation, vacuum distillation, and/or heat.

The exemplary embodiments described herein include a method of modifying a functionalized sorbent.

Figure 49 is an exemplary method flow chart 4910. In this exemplary embodiment, method flow chart 4910 depicts exemplary steps of the method embodiments described herein and is not intended to limit the method embodiments. In the exemplary embodiment, the method includes forming 4912 a mixture including: a sorbent functionalized with at least one functionalization ligand not comprising a polyamine comprising at least one oxygen-containing unit selected from the group consisting of carbonyl units, hydroxyl units, and combinations thereof; and a reaction agent. The method also includes reacting 4914 the reaction agent with the sorbent functionalized with at least one functionalization ligand not comprising a polyamine comprising at least one oxygen-containing unit selected from the group consisting of carbonyl units, hydroxyl units, and combinations thereof to produce a sorbent functionalized with at least one functionalization ligand comprising a polyamine comprising at least one oxygen-containing unit selected from the group consisting of carbonyl units, hydroxyl units, and combinations thereof.

Generally, the reaction agent may include any suitable reaction agent known in the art that facilitates the functionalized sorbent described herein. In many embodiments, the reaction agent includes at least one functional group capable of reacting with a polyamine to form at least one oxygen-containing unit selected from the group consisting of carbonyl units, hydroxyl units, and combinations thereof.

In some embodiments, the reaction agent includes at least one functional group selected from the group consisting of epoxide groups, epoxide groups comprising a fluorine atom, 3-membered ring epoxide groups, mono-epoxide groups, di-epoxide groups, oxetane groups, 4-membered ring oxetane groups, and combinations thereof.

In some embodiments, the reaction agent is selected from the group consisting of ethylene oxide, propylene oxide, 1,2-epoxybutane, 1,2-epoxypentane, 1,2-epoxyhexane, 1,2-epoxyheptane, 1,2-epoxyoctane, 2,2,2-(trifluoroethyl)oxirane, diepoxybutane, 4-aminooxetane, 4-(aminomethyl)oxetane and combinations thereof.

In some embodiments, reacting 4914 includes stirring the mixture.

In some embodiments, reacting 4914 includes reacting 4914 in the presence of an inert gas.

In some embodiments, reacting 4914 includes reacting 4914 at a temperature in a range of from about 0 °C to about 100 °C. In some embodiments, reacting 4914 includes reacting 4914 at a temperature in a range of from about 20 °C to about 80 °C. In some embodiments, reacting 4914 includes reacting 4914 at a temperature in a range of from about 20 °C to about 60 °C.

In some embodiments, reacting 4914 includes reacting 4914 for a time in a range of from about one minute to about seven days. In some embodiments, reacting 4914 includes reacting 4914 for a time in a range of from about 1 hour to about three days.

In some embodiments, the sorbent is desolvated before reacting 4914. In some embodiments, the sorbent is dry before reacting 4914.

In some embodiments, the sorbent is annealed after reacting 4914. In some embodiments, annealing the sorbent includes annealing the sorbent at an elevated temperature. In some embodiments, annealing the sorbent includes annealing the sorbent at a temperature in a range of from about 50 °C to about 400 °C. In some embodiments, annealing the sorbent includes annealing the sorbent at a temperature in a range of from about 100 °C to about 300 °C. In some

embodiments, annealing the sorbent includes annealing the sorbent at a temperature in a range of from about 150 °C to about 250 °C.

In some embodiments, reacting 4914 includes reacting 4914 in the presence of a solvent or a non-solvent.

In some embodiments, the solvent is an organic solvent. In some embodiments, the solvent is an aqueous solvent. In some embodiments, the solvent is a mixture of an organic solvent and an aqueous solvent.

Generally, a non-solvent is a substance incapable of dissolving a given component of a solution or mixture. In some embodiments, the non-solvent is a liquid-based component that is included in the reaction mixture. In some embodiments, the non-solvent is a solvent in which one of the components of the reaction mixture has limited solubility. In some embodiments, the non-solvent is selected from the group consisting of organic solvents, aqueous solvents, and combinations thereof.

In some embodiments, the non-solvent aids in functionalization. In some embodiments, the selectivity of the functionalization is controlled by relative solubility. For example, one or more of the sorbent or amines may possess a different solubility in the liquid-based reaction mixture compared to another sorbent or amine or the functionalized sorbent. In this way, relative solubility introduces limiting reactions and/or reagents.

In many embodiments, the method may also include any further suitable processing steps known in the art that facilitate the success of the method described herein. Such processing steps may include, but are not limited to only including, washing, drying, filtering, purifying, separating, centrifuging, and any combinations thereof. In some embodiments, the method further includes washing the functionalized sorbent. In some embodiments, the method further includes purifying the functionalized sorbent. In some embodiments, the purifying includes using distillation, vacuum distillation, and/or heat.

The exemplary embodiments described herein include a method of capturing at least one gas.

Figure 50 is an exemplary method flow chart 5010. In the exemplary embodiment, method flow chart 5010 depicts exemplary method steps of the method embodiments described herein and is not intended to limit the method embodiments. The method includes receiving 5012 a gas source including at least one gas at a functionalized sorbent, wherein the functionalized sorbent includes: a sorbent; and at least one functionalization ligand comprising a polyamine comprising at least one oxygen-containing unit selected from the group consisting of carbonyl units, hydroxyl units, and combinations thereof. In some embodiments, the functionalized sorbent includes at least two functionalization ligands each including a polyamine comprising at least one oxygen-containing unit selected from the group consisting of carbonyl units, hydroxyl units, and combinations thereof, wherein the polyamines including at least one oxygen-containing unit selected from the group consisting of carbonyl units, hydroxyl units, and combinations thereof are different from each other. In some embodiments, the functionalized sorbent further includes at least one functionalization ligand not including a polyamine including at least one oxygen-containing unit selected from the group consisting of carbonyl units, hydroxyl units, and combinations thereof. The method also includes capturing 5014 an amount of the at least one gas with the functionalized sorbent. The sorbent may have an average particle length $\leq 3$ $\mu$m.

In some embodiments, the method includes: (I) receiving 5012 a gas source including the at least one gas at a functionalized sorbent, wherein the functionalized sorbent includes a sorbent and at least one functionalization ligand including a polyamine including at least one oxygen-containing unit selected from the group consisting of carbonyl units, hydroxyl units, and combinations thereof; and (II) capturing 5014 an amount of the at least one gas with the functionalized sorbent.

Generally, the gas source may be any suitable gas source known in the art that facilitates the method described herein. In some embodiments, the gas source is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

Generally, the at least one gas may be any suitable gas known in the art that facilitates the method described herein. In some embodiments, the at least one gas is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

In some embodiments, the at least one gas is present in the source gas in an amount in a range of from about 0.001%(v/v) to about 100%(v/v). In some embodiments, the at least one gas is present in the source gas in an amount in a range of from about 0.001%(v/v) to about 40%(v/v). In some embodiments, the at least one gas is present in the source gas in an amount in a range of from about 0.001%(v/v) to about 15%(v/v). In some embodiments, the at least one gas is present in the source gas in an amount in a range of from about 0.001%(v/v) to about 10%(v/v). In some embodiments, the at least one gas is present in the source gas in an amount in a range of from about 0.001%(v/v) to about 5%(v/v). In some embodiments, the at least one gas is present in the source gas in an amount in a range of from about 0.001%(v/v) to about 1%(v/v). In some embodiments, the at least one gas is present in the source gas in an amount greater than 10%(v/v).

In some embodiments, the at least one gas is present in the source gas in an amount in a range of from about 100 ppmv to about 1000 ppmv. In some embodiments, the at least one gas is present in the source gas in an amount in a range of from about 200 ppmv to about 1000 ppmv. In some embodiments, the at least one gas is present in the source gas in an

amount in a range of from about 300 ppmv to about 5000 ppmv. In some embodiments, the at least one gas is present in the source gas in an amount in a range of from about 200 ppmv to about 500 ppmv.

In some embodiments, the at least one gas does not include water vapor.

In some embodiments, the at least one gas includes water vapor. In some embodiments, the at least one gas includes water vapor in an amount in a range of from about 0.001%(v/v) to about 25%(v/v). In some embodiments, the at least one gas includes water vapor in an amount in a range of from about 0.01%(v/v) to about 20%(v/v). In some embodiments, the at least one gas includes water vapor in an amount in a range of from about 0.5%(v/v) to about 15%(v/v). In some embodiments, the at least one gas includes water vapor in an amount in a range of from about 0.5%(v/v) to about 4%(v/v). In some embodiments, the at least one gas includes water vapor in an amount in a range of from about 4%(v/v) to about 15%(v/v).

In some embodiments, the at least one gas is present in the source gas in an amount in a range of from about 0.001%(v/v) to about 10%(v/v) and is in the presence of water vapor. In some embodiments, the at least one gas is present in the source gas in an amount in a range of from about 0.001%(v/v) to about 5%(v/v) and is in the presence of water vapor. In some embodiments, the at least one gas is present in the source gas in an amount in a range of from about 0.001%(v/v) to about 1%(v/v) and is in the presence of water vapor. In some embodiments, the at least one gas is present in the source gas in an amount greater than about 10%(v/v) and is in the presence of water vapor. In some embodiments, the water vapor is present in an amount in a range of from about 0.001%(v/v) to about 25%(v/v). In some embodiments, the water vapor is present in an amount in a range of from about 0.01%(v/v) to about 20%(v/v). In some embodiments, the water vapor is present in an amount in a range of from about 0.5%(v/v) to about 10%(v/v).

In some embodiments, capturing 5014 an amount of the at least one gas with the functionalized sorbent includes adsorbing an amount of the at least one gas with the functionalized sorbent. In some embodiments, capturing 5014 an amount of the at least one gas with the functionalized sorbent includes adsorbing an amount of the at least one gas with the functionalized sorbent in the presence of water vapor.

In some embodiments, the amount of the at least one gas captured 5014 with the functionalized sorbent is in a range of from about 1%(v/v) to about 100%(v/v) of the at least one gas present in the source gas. In some embodiments, the amount of the at least one gas captured 5014 with the functionalized sorbent is in a range of from about 10%(v/v) to about 90%(v/v) of the at least one gas present in the source gas. In some embodiments, the amount of the at least one gas captured 5014 with the functionalized sorbent is in a range of from about 20%(v/v) to about 80%(v/v) of the at least one gas present in the source gas. In some embodiments, the amount of the at least one gas captured 5014 with the functionalized sorbent is in a range of from about 30%(v/v) to about 70%(v/v) of the at least one gas present in the source gas. In some embodiments, the amount of the at least one gas captured 5014 with the functionalized sorbent is in a range of from about 40%(v/v) to about 60%(v/v) of the at least one gas present in the source gas.

In some embodiments, the amount of the at least one gas captured 5014 with the functionalized sorbent is in a range of from about 1%(v/v) to about 25%(v/v) of the at least one gas present in the source gas. In some embodiments, the amount of the at least one gas captured 5014 with the functionalized sorbent is in a range of from about 1%(v/v) to about 20%(v/v) of the at least one gas present in the source gas. In some embodiments, the amount of the at least one gas captured 5014 with the functionalized sorbent is in a range of from about 1%(v/v) to about 15%(v/v) of the at least one gas present in the source gas. In some embodiments, the amount of the at least one gas captured 5014 with the functionalized sorbent is in a range of from about 1%(v/v) to about 10%(v/v) of the at least one gas present in the source gas. In some embodiments, the amount of the at least one gas captured 5014 with the functionalized sorbent is in a range of from about 1%(v/v) to about 5%(v/v) of the at least one gas present in the source gas.

In some embodiments, the amount of the at least one gas captured 5014 with the functionalized sorbent is in a range of from about 80%(v/v) to about 100%(v/v) of the at least one gas present in the source gas. In some embodiments, the amount of the at least one gas captured 5014 with the functionalized sorbent is in a range of from about 85%(v/v) to about 100%(v/v) of the at least one gas present in the source gas. In some embodiments, the amount of the at least one gas captured 5014 with the functionalized sorbent is in a range of from about 90%(v/v) to about 100%(v/v) of the at least one gas present in the source gas. In some embodiments, the amount of the at least one gas captured 5014 with the functionalized sorbent is in a range of from about 95%(v/v) to about 100%(v/v) of the at least one gas present in the source gas.

In some embodiments, the source gas is modified to alter the amount of water vapor. In some embodiments, altering the amount of water vapor includes increasing the amount of water vapor. In some embodiments, altering the amount of water vapor includes decreasing the amount of water vapor. In some embodiments, increasing the amount of water vapor includes adding or injecting water vapor into the source gas. In some embodiments, decreasing the amount of water vapor includes removing water vapor from the source gas by evaporation, condensation, and/or pre-adsorption. In some embodiments, altering the amount of water vapor includes exhaust gas recirculation (EGR) and/or mixing.

In many embodiments, the functionalized sorbent, the source gas, the at least one gas, or a combination thereof are at a certain temperature. Each temperature may be altered to facilitate the method described herein. Each temperature may have a uniform temperature profile, a gradient temperature profile, a discrete temperature profile, or a combination

thereof.

In some embodiments, the method includes an adsorption cycle. In some embodiments, the method includes a desorption cycle. In some embodiments, at least one of the functionalized sorbent, the source gas, the at least one gas, or a combination thereof are at a temperature in a range of from about -40 °C to about 150 °C during the gas adsorption cycle. In some embodiments, at least one of the functionalized sorbent, the source gas, the at least one gas, or a combination thereof are at a temperature in a range of from about 60 °C to about 250 °C during the gas desorption cycle. Each adsorption module or sub-module can have a uniform temperature profile, a gradient temperature profile or discrete temperature profiles.

In some embodiments, the method includes controlling a temperature. Temperature may be controlled for the functionalized sorbent, the source gas, the at least one gas, or a combination thereof.

The exemplary embodiments described herein include a method of collecting at least one gas from a gas source.

Figure 51 is an exemplary method flow chart 5110. In this exemplary embodiment, method flow chart 5110 depicts exemplary method steps of the method embodiments described herein and is not intended to limit the method embodiments. The method includes receiving 5112 a gas source including at least one gas at a functionalized sorbent, wherein the functionalized sorbent includes: a sorbent; and at least one functionalization ligand including a polyamine including at least one oxygen-containing unit selected from the group consisting of carbonyl units, hydroxyl units, and combinations thereof. In some embodiments, the functionalized sorbent includes at least two functionalization ligands each including a polyamine including at least one oxygen-containing unit selected from the group consisting of carbonyl units, hydroxyl units, and combinations thereof, wherein the polyamines including at least one oxygen-containing unit selected from the group consisting of carbonyl units, hydroxyl units, and combinations thereof are different from each other. In some embodiments, the functionalized sorbent further includes at least one functionalization ligand not including a polyamine including at least one oxygen-containing unit selected from the group consisting of carbonyl units, hydroxyl units, and combinations thereof. The method also includes capturing 5114 an amount of the at least one gas with the functionalized sorbent. The method also includes releasing 5116 the at least one gas from the functionalized sorbent. The sorbent may have an average particle length ≤ 3 μm.

In some embodiments, the method includes: (I) receiving 5112 a gas source including at least one gas at a functionalized sorbent, wherein the functionalized sorbent includes a sorbent and at least one functionalization ligand including a polyamine including at least one oxygen-containing unit selected from the group consisting of carbonyl units, hydroxyl units, and combinations thereof; (II) capturing 5114 an amount of the at least one gas with the functionalized sorbent; and (III) releasing 5116 the at least one gas from the functionalized sorbent.

In some embodiments, releasing 5116 the at least one gas from the functionalized sorbent includes purging the at least one gas from the functionalized sorbent with a purge gas. In some embodiments, releasing 5116 the at least one gas from the functionalized sorbent includes receiving a change in temperature or pressure at the functionalized sorbent.

In some embodiments, the at least one gas is released 5116 from the functionalized sorbent into a receiving gas. In some embodiments, the receiving gas is selected from the group consisting of air, $N_2$, steam, and combinations thereof. In some embodiments, the receiving gas is removed from the presence of the functionalized sorbent after receiving the at least one gas. In some embodiments, the receiving gas has a higher concentration of the at least one gas compared to the source gas.

## EXAMPLES

Without further elaboration, it is believed that one skilled in the art using the preceding description can utilize the present invention to its fullest extent. The following Examples are, therefore, to be construed as merely illustrative, and not limiting of the disclosure in any way whatsoever. The starting material for the following Examples may not have necessarily been prepared by a particular preparative run whose procedure is described in other Examples. It also is understood that any numerical range recited herein includes all values from the lower value to the upper value. For example, if a range is stated as 10-50, it is intended that values such as 12-30, 20-40, or 30-50, etc., are expressly enumerated in this specification. These are only examples of what is specifically intended, and all possible combinations of numerical values between and including the lowest value and the highest value enumerated are to be considered to be expressly stated in this application.

### MOF Sorbent Synthesis

#### Example A1. Generic procedure for MOF and sorbent synthesis.

First, MOF is synthesized via an aqueous prep and washed thrice with water and thrice with isopropyl alcohol. The reaction can be carried out using non-aqueous solvents such as dimethylformamide (DMF)/methanol (MeOH) mixtures, aqueous solvents or both as disclosed in PCT/US2022/082243, the contents of which are incorporated by

reference herein. Then, the material is dried via vacuum filtration to obtain a ~70-75% solvated material. To prepare the material for loading, it is desolvated in a 120 °C vacuum oven overnight to reduce the alcohol content to 0.5-1 equivalents of isopropyl alcohol (IPA) per metal site to protect the open metal site from oxidation but also remove excess solvent from the pores of the MOF. By determining how much leftover solvent is still present in the MOF via $^1H$ NMR, as shown in Figure 1 (e.g., $Mg_2(dobpdc)_1(alcohol)_x$), an accurate molar amount of MOF can be determined. Therefore, by adding 1-4 equivalents of amines in a nonpolar solvent, a material can be formed with the composition of $Mg_2(dobpdc)_1(amine)_x$. Shown in Figure 2 is an SEM image of exemplary MOF-274 (sample ID# A2111) made according to the standard aqueous procedure.

Example A2. General method for analyzing amine content via NMR.

To digest the amine-appended MOFs, 10 mg of material was added to a vial along with 20 μL of 35% DCl in $D_2O$, 200 μL of $D_2O$, and 600 μL of DMSO-$d_6$. The vial was sonicated to dissolve the framework and $^1H$ NMR was performed. Loadings were determined by comparing $^1H$ NMR integrations of framework ligand peaks ($H_4$dobpdc) to the amine peaks.

Example A3. Particle size reduction.

The particle size or the length of rod crystals can be reduced by many options, including, but not limited to, mechanical grinding such as mortar and pestling, using microfluidizer, dry or wet milling or through chemical means such as incorporation of crystal-growth inhibitors. Table 1 summarizes particle sizes and aspect ratios of MOF-274 prepared according to some embodiments.

Table 1. Average particle sizes and aspect ratio of MOF-274 made with and without crystal-growth inhibitors.

| MOF-274 | Crystal-growth inhibitor | Ave. Particle size length (μm) | Ave. Particle size width (μm) | Aspect ratio (width /length) |
|---|---|---|---|---|
| A21 | No | 2.17 | 0.36 | 0.17 |
| A2111 | No | 1.93 | 0.25 | 0.13 |
| A2173 | No | 2.24 | 0.31 | 0.14 |
| A285B SA | Salicylic acid | 0.17 | 0.15 | 0.87 |
| A288B FSA | 4-Fluoro-salicylic acid | 0.31 | 0.29 | 0.92 |
| 0.13wt% BPYDC | 2,2'-Bipyridine-5,5'-dicarboxylic acid | 0.61 | 0.16 | 0.26 |
| 2.29wt% BPYDC | 2,2'-Bipyridine-5,5'-dicarboxylic acid | 0.43 | 0.11 | 0.26 |
| 24.78wt% BPYDC | 2,2'-Bipyridine-5,5'-dicarboxylic acid | 0.27 | 0.12 | 0.44 |
| 1.17wt% BPYDM | 2,2'-Bipyridine-5,5'-dimethanol | 0.89 | 0.14 | 0.16 |
| 3.43wt% BPYDM | 2,2'-Bipyridine-5,5'-dimethanol | 0.35 | 0.10 | 0.29 |
| 6.80wt% BPYDM | 2,2'-Bipyridine-5,5'-dimethanol | 1.47 | 0.10 | 0.07 |
| 2.00wt% BP | 4,4'-biphenol | 0.45 | 0.14 | 0.31 |
| 9.24wt% BP | 4,4'-biphenol | 0.12 | 0.12 | 1.00 |

Example A4. General procedure for small size MOF-274 synthesis using crystal-growth inhibitors.

$Mg_2$(dobpdc) was synthesized by first dissolving x moles of $H_4$dobpdc, y moles of a synthetic crystal-growth inhibitor, and (x)*4+(y)*2 moles of NaOH in water by heating to 60 °C. Exemplary synthetic crystal-growth inhibitors include, but are not limited to, salicylic acid (SA), 4-fluorosalicylic acid (FSA), 4,4'-biphenol (BP), 2,2'-Bipyridine-5,5'-dicarboxylic acid (BPYDC) and 2,2'-Bipyridine-5,5'-dimethanol (BPYDM). The moles of crystal-growth inhibitor can range from 0.1-50 mol % with respect to 99.9-50 mol% of $H_4$dobpdc. To the deprotonated solution of linker and crystal-growth inhibitor, an aqueous solution of $Mg^{2+}$ salt, where the counter-anion is either $NO_3^-$, $Cl^-$, $Br^-$, $SO_4^{-2}$, $OAc^-$, $O^{-2}$, Otf, is added into the solution. Addition of the $Mg^{2+}$ salt can occur rapidly (e.g. <1 min) or dropwise over an extended period of time (e.g. > 1hr). The heat is increased to 97° C and refluxed under $N_2$ for 12-16 hours. The white precipitate is washed thrice with water and thrice with isopropyl alcohol and stored solvated for further use.

Example A5. Exemplary procedure for small size MOF-274 synthesis using salicylic acid as a crystal-growth inhibitor.

$Mg_2$(dobpdc) was prepared at a 300 mL scale. First, the linker, crystal-growth inhibitor, and base were added to a 500 mL round bottom flask and heated to dissolve in water. In this example, sodium hydroxide (76 mmol, 3.04 g), $H_4$dobpdc (18 mmol, 4.94 g) and salicylic acid (2 mmol, 0.276 g) were dissolved in water (220 mL) in the flask by stirring and heating to 60 °C under $N_2$ until the solution became clear. Next, $Mg(NO_3)_2$ hexahydrate (45 mmol, 11.54 g) was dissolved in 80 mL of water in a separate vessel and quickly added to the deprotonated linker solution to precipitate out MOF. The mixture was reacted in an open flask under ambient pressure and gentle reflux at about 97 °C for anywhere from 12-16 hours. The reaction produced MOF compound $Mg_2$(dobpdc)(salicylate)$_x$, which was subsequently washed thrice with water and thrice with isopropanol and stored in alcohol. For surface area measurements, the material was activated at 250 °C to obtain the highest uptake. The reaction produced between 4.2-4.7 g (72-81% yield) of $Mg_2$(dobpdc)(salicylate)$_x$ for each of the separate batches. Materials may be desolvated at 85 °C and loaded normally as regular MOF-274. Shown in Figure 3 are SEM images of exemplary MOF-274 made using salicylic acid (left) and fluoro-salicylic acid (right) as crystal-growth inhibitors.

Example A6. Exemplary procedure for small size MOF-274 synthesis using 4,4'-biphenol as a crystal-growth inhibitor.

$Mg_2$(dobpdc) was prepared at a 20 mL scale. First, the linker, crystal-growth inhibitor, and base were added to a 20 mL scintillation vial and heated to dissolve in water. In this example, sodium hydroxide (4 mmol, 0.160 g), $H_4$dobpdc (0.9 mmol, 0.247 g) and 4,4'-biphenol (0.1 mmol, 0.019 g) were dissolved in water (10 mL) in the vial by stirring and heating to 60 °C until the solution became clear. Next, $Mg(NO_3)_2$ hexahydrate (2 mmol, 0.512 g) was dissolved in 5 mL of water in a separate vessel and quickly added to the deprotonated linker solution to precipitate out MOF. The mixture was reacted in a vial under ambient pressure and gentle reflux at about 97 °C for anywhere from 12-16 hours. The reaction produced MOF compound $Mg_2$(dobpdc)(BP)$_x$, which was subsequently washed thrice with water and thrice with isopropanol and stored in alcohol. For surface area measurements, the material was activated at 250 °C to obtain the highest uptake. The reaction produced between 37-72% yield of $Mg_2$(dobpdc)(BP)$_x$ based on the amount of inhibitor used. Materials may be desolvated at 85 °C and loaded normally as regular MOF-274. Shown in Figure 4 are powder X-ray diffraction spectra of MOF-274 synthesized using 4,4'-biphenol as crystal-growth inhibitor whereby the MOF-274 phase is retained at 50 mol% input of BP. Incorporation of 4,4'-biphenol clearly reduces particle size as shown in Figure 5.

| Input Molar Ratio BP:$H_4$dobpdc | Yield % | Wt % BP:$H_4$dopbdc via NMR digest |
|---|---|---|
| 0.05 | 95.8 | 0 |
| 0.10 | 90.2 | 0.34 |
| 0.25 | 81.2 | 2.00 |
| 0.35 | 71.2 | 2.00 |
| 0.50 | 42.9 | 9.24 |
| 0.75 | Unable to be accurately determined | Unable to be accurately determined |

Example A7. Exemplary procedure for small size MOF-274 synthesis using BPYDC as a crystal-growth inhibitor.

$Mg_2$(dobpdc) was prepared at a 20 mL scale. First, the linker, crystal-growth inhibitor, and base were added to a 20 mL scintillation vial and heated to dissolve in water. In this example, sodium hydroxide (4 mmol, 0.160 g), $H_4$dobpdc (0.9 mmol, 0.247 g) and 2,2'-bipyridine-5,5'-dicarboxylic acid (0.1 mmol, 0.024 g) were dissolved in water (10 mL) in the vial by stirring and heating to 60 °C until the solution became clear. Next, $Mg(NO_3)_2$ hexahydrate (2 mmol, 0.512 g) was dissolved in 5 mL of water in a separate vessel and quickly added to the deprotonated linker solution to precipitate out MOF. The mixture was reacted in a vial under ambient pressure and gentle reflux at about 97 °C for anywhere from 12-16 hours. The reaction produced MOF compound $Mg_2$(dobpdc)(BPYDC)$_x$, which was subsequently washed thrice with water and thrice with isopropanol and stored in alcohol. For surface area measurements, the material was activated at 250 °C to obtain the highest uptake. The reaction produced between 68-74% yield of $Mg_2$(dobpdc)(BPYDC)$_x$ based on the amount of inhibitor used. Materials may be desolvated at 85 °C and loaded normally as regular MOF-274. Shown in Figure 5 are powder X-ray diffraction spectra of MOF-274 synthesized using 2,2'-bipyridine-5,5'-dicarboxylic acid (BPYDC) as crystal-growth inhibitor. The MOF-274 phase is retained with up to 50 mol% input of BPYDC. Incorporation of BPYDC clearly reduces particle size as shown in Figure 6.

| Input Molar Ratio BPYDC:$H_4$dobpdc | Yield % | Wt % BPYDC:$H_4$dopbdc via NMR digest |
|---|---|---|
| 0.05 | 73.5 | 0.13 |
| 0.10 | 78.2 | 0.39 |
| 0.25 | 76.2 | 2.29 |
| 0.35 | 79.6 | 7.36 |
| 0.50 | 64.1 | 24.78 |
| 0.75 | 67.7 | 66.12 |

Example A8. Exemplary procedure for small size MOF-274 synthesis using BPYDM as a crystal-growth inhibitor.

$Mg_2$(dobpdc) was prepared at a 20 mL scale. First, the linker, crystal-growth inhibitor, and base were added to a 20 mL scintillation vial and heated to dissolve in water. In this example, sodium hydroxide (4 mmol, 0.160 g), $H_4$dobpdc (0.9 mmol, 0.247 g) and 2,2'-bipyridine-5,5'-dimethanol (0.1 mmol, 0.022 g) were dissolved in water (10 mL) in the vial by stirring and heating to 60 °C until the solution became clear. Next, $Mg(NO_3)_2$ hexahydrate (2 mmol, 0.512 g) was dissolved in 5 mL of water in a separate vessel and quickly added to the deprotonated linker solution to precipitate out MOF. The mixture was reacted in a vial under ambient pressure and gentle reflux at about 97 °C for anywhere from 12-16 hours. The reaction produced MOF compound $Mg_2$(dobpdc)$(BPYDM)_x$, which was subsequently washed thrice with water and thrice with isopropanol and stored in alcohol. For surface area measurements, the material was activated at 250 °C to obtain the highest uptake. The reaction produced between 53-81% yield of $Mg_2$(dobpdc)$(BPYDM)_x$ based on the amount of inhibitor used. Shown in Figure 7 are powder X-ray diffraction spectra of MOF-274 synthesized using 2,2'-bipyridine-5,5'-dimethanol (BPYDM) as a crystal-growth inhibitor. Particle length of MOF-274 reduces initially as incorporation of BPYDM increases. However, further increasing BPYDM loading leads to increased particle length and decreased aspect ratio as shown in Figure 8.

| Input Molar Ratio BPYDM:$H_4$dobpdc | Yield % | Wt % BPYDM:$H_4$dopbdc via NMR digest |
|---|---|---|
| 0.05 | 81.2 | 1.17 |
| 0.10 | 76.6 | 1.36 |
| 0.25 | 77.0 | 3.43 |
| 0.35 | 77.8 | 6.80 |
| 0.50 | 67.8 | 6.63 |
| 0.75 | 52.9 | 6.11 |

Example A9. Bare MOF examples: Improving kinetics of $CO_2$ uptake.

Comparative example-1 (Comparative-1): a bare MOF sample with an ID of A2173 was prepared using aqueous solvent ($H_2O$) following the general procedure described in Example A1.

Comparative example-2 (Comparative-2): a bare MOF sample with an ID of A315B was prepared following the general procedure described in Example A5 but using DMF, a non-aqueous solvent.

Inventive example-1 (Inventive-1): a bare MOF sample with an ID of A2177 was prepared using aqueous solvent ($H_2O$) following the general procedure described in Example A1.

Inventive example-2 (Inventive-2): a bare MOF sample with an ID of A316 was prepared following the general procedure described in Example A5 but using salicylic acid (SA) as the crystal-growth inhibitor and an aqueous solvent ($H_2O$).

Inventive example-3 (Inventive-3): a bare MOF sample with an ID of A39C was prepared following the general procedure described in Example A5 but using salicylic acid (SA) as the crystal-growth inhibitor and an aqueous solvent ($H_2O$).

Table 2 summarizes synthesis details, particle sizes, aspect ratio and $CO_2$ uptake performance measured under dry $CO_2$ with a concentration of 4.5v%. The combination of reduced particle size, increased aspect ratio and aqueous MOF synthesis clearly leads to MOF with significantly improved $CO_2$ uptake kinetics.

Table 2. MOF synthesis details, particle sizes, aspect ratio and $CO_2$ performance.

| MOF sample | Examples | Crystal growth inhibitor | Reaction solvent | Length (μm) | Width (μm) | Aspect ratio | $CO_2$ uptake (g/g) | $CO_2$ kinetics *(k)* |
|---|---|---|---|---|---|---|---|---|
| A2173 | Comparative-1 | No | $H_2O$ | 2.24 | 0.31 | 0.14 | 0.030 | 0.56 |
| A315B | Comparative-2 | SA | DMF | 0.52 | 0.19 | 0.38 | 0.048 | 1.50 |
| A2177 | Inventive-1 | No | $H_2O$ | 0.53 | 0.13 | 0.25 | 0.051 | 1.96 |
| A316 | Inventive-2 | SA | $H_2O$ | 0.44 | 0.14 | 0.31 | 0.048 | 2.51 |
| A39C | Inventive-3 | SA | $H_2O$ | 0.37 | 0.15 | 0.40 | 0.044 | 3.34 |

Solid Sorbent Materials Functionalized with Polyamines Having Oxygen-containing units Selected from Carbonyl Units, Hydroxyl Units, and Combinations Thereof.

Example B1. General procedure of making oxygen-containing amines.

Oxygen-containing amines can be made by direct synthesis. Non-limiting approaches to direct synthesis include modification of non-oxygen-containing amines before MOF functionalization and modification of non-oxygen-containing amines after MOF functionalization. These approaches of modification of non-oxygen-containing amines before and after MOF functionalization are referred to as pre-loading modification (PLM) and post-synthesis modification (PSM), respectively.

Example B2. General method for pre-loading modification (PLM) of functionalized amines using epoxides.

A 20 mL scintillation vial was charged with 1 eq. of amine in 17 wt% methanol in water. Then, 0.01-4 eq. of functionalized oxirane (epoxide) was added to the methanolic solution. The solution was stirred at room temperature overnight. The solvent was removed via rotary evaporator after at least 12 hours. The amine was dried in an 80 °C vacuum oven for 4 hours. An NMR sample was prepared in deuterated methanol ($CD_3OD$) to determine the ratio of functionalization. For instance, 1 eq. of spermine (2 mmol, 0.405 g) was added to a 20 mL scintillation vial and dissolved in 3 mL methanol. Then, 1 eq. of 1,2-epoxybutane (2 mmol, 174 μL) was added and the solution was stirred at room temperature for 18 hrs. The methanol was removed via rotary evaporator to produce 0.27 1,2-epoxybutane:spermine in quantitative yield.

Example B3. General loading of PLM amines including a secondary alcohol unit (e.g., via epoxides).

The following examples were made unless otherwise specified using mechanically ground MOF [$Mg_2$(dobpdc)] with an average particle size of 0.48μm (D50) as measured by Malvern Zetasizer. The exemplary amines including a secondary alcohol unit were prepared by reacting amines with epoxides through ring-opening. Amines including a secondary alcohol unit can also be prepared by other means, such as by direct synthesis.

A 20 mL scintillation vial was charged with 1-2.2 eq. of 0.01-1 O/N ratio functionalized amine and dissolved in 5 mL of toluene. Then, 1 eq. of $Mg_2(dobpdc)(IPA)_x$ that was desolvated in a 120 °C vacuum oven overnight was added to the vial. The slurry was then stirred at 60 °C on a hot plate overnight at 300-400 rpm. The material was cooled to room temperature and transferred to a conical tube. The material was spun down at a rate of 4000 rpm for 2 minutes, the solvent was decanted and the sample was dried in a 120 °C vacuum oven overnight to obtain beta-alcohol functionalized amine loaded $Mg_2$(dobpdc). Excess amines or surface amines, if any, can be removed by annealing at elevated temperatures. In addition, annealing can also potentially help amine chains re-organize and eventually reach stable configurations and attachments to metal sites. The material was digested and $^1H$ NMR was utilized to determine the initial and final loading post annealing.

Example B4. General method for analyzing amine content via NMR.

To digest the amine appended MOFs, 10 mg of material was added to a vial along with 20 μL of 20% deuterium chloride (DCl) in heavy water ($D_2O$), 200 μL of $D_2O$, and 600 μL of DMSO-$d_6$. The vial was sonicated to dissolve the framework and $^1H$ NMR was performed. Loadings were determined by comparing $^1H$ NMR integrations of framework ligand peaks ($H_4$dobpdc) to the amine peaks. In the example spectra shown in Figure 9 for GE5-A369, the ligand peaks all integrate to 2H from δ 7.9-7.0 ppm. The peaks corresponding to spermine at δ 1.65 and 1.93 ppm integrate to a total of 8.22.

By dividing the total integration by the theoretical number of protons (8), the ratio of loaded product can be obtained with respect to one ligand, $Mg_2(dobpdc)(spermine)_{1.01}$.

Example B5. General method for analyzing oxygen to amine (O/N) ratio using NMR.

In general, the functionalized amines were dissolved in 600 $\mu$L of $CD_3OD$ and the oxygen to nitrogen ratio was determined via $^1$H NMR based on the parent amine. In the case of the NMR in Figure 10, the peak at 1.66 ppm was set to 4H (c). The amount of functionalization can be determined by the $CH_3$ peak at $\delta$ 0.96 ppm (a) or the hydrogen attached to the beta ($\beta$)-alcohol at $\delta$ 3.58 ppm (e).

$$ratio\ of\ epoxide\ functionalization\ (O) = \frac{integration\ of\ CH_3\ peak}{theoretical\ integration} = \frac{3.24}{3} = 1.08$$

$$ratio\ of\ epoxide\ functionalization\ (O) = \frac{integration\ of\ hydrogen\ (\beta\ alcohol) peak}{theoretical\ integration} = \frac{1.06}{1} = 1.06$$

$$ratio\ of \frac{O}{N} = \frac{ratio\ of\ epoxide\ functionalization\ (O)}{number\ of\ amines\ (N)} = \frac{1.08}{4} or \frac{1.06}{4} = 0.27(\frac{O}{N})$$

Example B6. General method for pre-loading modification (PLM) of functionalized amines using oxetane.

A 20 mL scintillation vial was charged with 1 eq. of amine and 0.01-4 eq. of functionalized oxetane and dissolved in 3 mL of anhydrous toluene. Then, 0.01-4 eq. of a lanthanide-based Lewis acid catalyst such as Ytterbium(III) trifluoromethanesulfonate [$Yb(OTf)_3$] was added and stirred at 80 °C for 24-48 hours. The product crashed out of the solvent as a viscous liquid. The solvent was decanted and 5 mL of DI water was added to dissolve the product and crash out the catalyst byproduct. The aqueous solution was filtered and the water layer removed via rotary evaporation. The amine was dried in a 120 °C vacuum oven for 24 hours. An NMR sample was prepared in deuterium oxide ($D_2O$) to determine the ratio of functionalization.

The reaction scheme is depicted below.

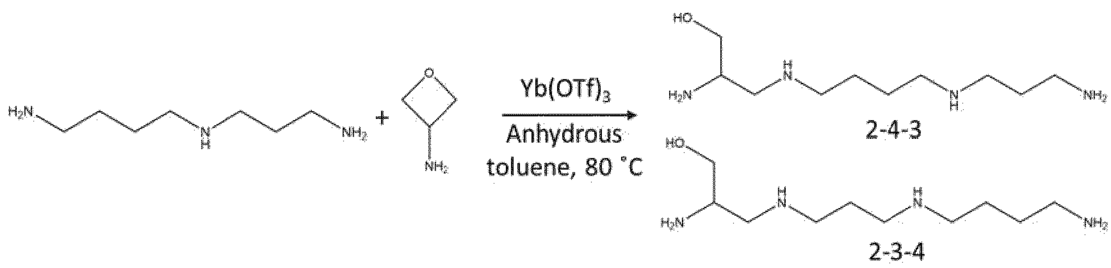


2-4-3

2-3-4

For instance, an asymmetric $\beta$-methylhydroxyl-tetraamine (2-4-3 or 2-3-4 carbon spacer) was synthesized via ring opening and reaction of 4-aminooxetane with spermidine. A 20 mL scintillation vial was charged with 1 eq. of spermidine (2 mmol, 314 $\mu$L) and 1 eq. of 4-aminooxetane (2 mmol, 140 $\mu$L) and dissolved in 3 mL of anhydrous toluene. Then, 0.5 eq. of $Yb(OTf)_3$ (1 mmol, 0.620 g) was added to the vial and stirred at 80 °C for 24 hours. The toluene was decanted and 5 mL of DI water was added to dissolve the product and crash out the catalyst byproduct. The precipitate was filtered through a filter disc and the aqueous layer was reduced via rotary evaporator. The $\beta$-methylhydroxyl-tetraamine was then dried in a 120 °C vacuum oven for 24 hours to produce product in 92 % yield (Figure 11).

Example B7. Synthesis of hexanoyl chloride-modified spermine.

In a 20 ml scintillation vial, spermine (0.5 g, 2.47 mol) was dissolved in dichloromethane/toluene (4 ml/1 ml) solvent mixture and cooled down to 0 °C. To the cold reaction mixture hexanoyl chloride (HC) (0.332g, 2.47 mol) was added dropwise and a white precipitate formed. After 30 minutes, the ice-bath was removed, and the reaction mixture was left

stirring at room temperature overnight. After the reaction, the solvents were evaporated to dryness and the product was obtained as a protonated salt of HC: Spermine. This was used without purification for the next step.

The reaction scheme is depicted below.

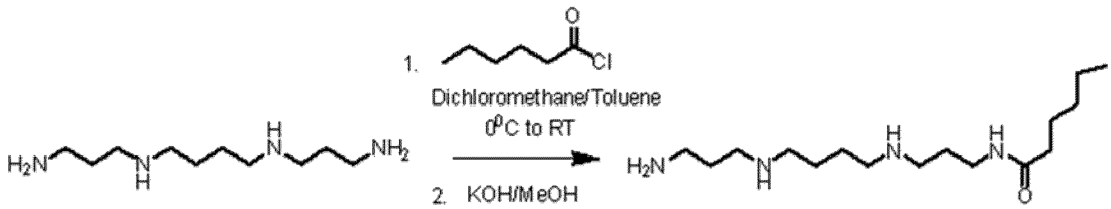


The as-synthesized protonated salt (0.757 g, 0.0025 mol) was dissolved in 3 ml methanol with potassium hydroxide (KOH) (0.42 g, 0.0075 mol). After stirring overnight at room temperature, the solvents were evaporated under vacuum. To remove the residual potassium chloride (KCl) salt, the resultant solid was further treated with tetrahydrofuran (THF) and the solvents were evaporated under vacuum after filtering the resulting residual salt. The product was obtained in 94% yield.

Example B8. General method for analyzing oxygen to amine (O/N) ratio for hexanoyl chloride (HC) modified amines by NMR.

In general, the functionalized amines were dissolved in 600 μL of $CD_3OD$ and the oxygen to nitrogen ratio was determined via $^1H$ NMR based on the parent amine. For the NMR in Figure 12, the peaks between 2.6 and 2.7 ppm were set to integration value of 10 as highlighted by one of the blue circles. The amount of functionalization can be determined by the $CH_3$ peak at δ 0.94 ppm. Based on the equations mentioned above, the O/N ratio is approximately 0.38.

Example B9. Exemplary functionalized sorbent materials.

Some exemplary sorbent materials functionalized with different amines are shown in Table 3.

Table 3. Exemplary functionalized sorbent materials, including pre-loading modification (PLM) sorbents and post-synthesis modification (PSM) sorbents.

| Sorbent ID | Base amine | Amine type | Modification method | Epoxide | Amine loading |
|---|---|---|---|---|---|
| GE5 | Spermine | Linear | N/A | N/A | 1.04 |
| GE316-A373A-PSM | Spermine | Linear | PSM | 1,2-epoxybutane | 1.06 |
| GE317-A373B-PSM | Spermine | Linear | PSM | 1,2-epoxybutane | 1.04 |
| GE318-A376A-PSM | Spermine | Linear | PSM | TFEO | 1.08 |
| GE319-A376B-PSM | Spermine | Linear | PSM | TFEO | 1.01 |
| GE296-A366A | Spermine | Linear | PLM | 1,2-epoxybutane | 1.01 |
| GE297-A366B | Spermine | Linear | PLM | 1,2-epoxybutane | 0.9 |
| GE298-A366C | Spermine | Linear | PLM | 1,2-epoxybutane | 0.8 |
| GE301-A370A | Spermine | Linear | PLM | 1,2-epoxyoctane | 1.04 |
| GE302-A377 | Amine 2-3-2 | Linear | N/A | N/A | 1.04 |
| GE314-A381C | Amine 2-3-2 | Linear | PLM | 1,2-epoxybutane | 1.04 |
| GE306-A381A | Amine 2-3-2 | Linear | PLM | 1,2-epoxybutane | 1.09 |
| GE305-A381B | Amine 2-3-2 | Linear | PLM | 1,2-epoxybutane | 0.97 |
| GE315-A385C | Amine 2-3-2 | Linear | PLM | TFEO | 1.02 |
| GE307-A385A | Amine 2-3-2 | Linear | PLM | TFEO | 1.27 |
| GE308-A385B | Amine 2-3-2 | Linear | PLM | TFEO | 1.06 |
| GE199-A335#0 | cis-m-CHD | Cyclic | N/A | N/A | 1.98 |

(continued)

| Sorbent ID | Base amine | Amine type | Modification method | Epoxide | Amine loading |
|---|---|---|---|---|---|
| GE199-A335#1 | cis-m-CHD | Cyclic | PSM | 1,2-epoxyoctane (full) | 1.25 |
| GE199-A335#2 | cis-m-CHD | Cyclic | PSM | TFEO (full) | 1.63 |
| GE199-A335#3 | cis-m-CHD | Cyclic | PSM | 1,2-epoxyoctane (1/3) | 1.87 |
| GE199-A335#4 | cis-m-CHD | Cyclic | PSM | TFEO (1/2) | 1.86 |

Example B10. Synthesis of GE296-A366A.

A 20 mL scintillation vial was charged with 1.2 eq. of 0.25 1,2-epoxybutane (EB):spermine (0.1229 g, 0.43 mmol) and dissolved in 5 mL toluene. Then, 0.160 g (1 eq., 0.36 mmol) of $Mg_2(dobpdc)(IPA)_{2.05}$ that was desolvated in a 120 °C vacuum oven overnight was added to the vial. The slurry was then stirred at 60 °C on a hot plate overnight at 300-400 rpm. The material was cooled to room temperature and transferred to a conical tube. The material was spun down at a rate of 4000 rpm for 2 minutes, the solvent was decanted and the sample was dried in a 120 °C vacuum oven overnight to obtain 0.201 g of GE296 (85% yield, $Mg_2(dobpdc)(0.22\ EB{:}spermine)_{1.01}$).

Example B11. Synthesis of GE301-A370A.

A 20 mL scintillation vial was charged with 1.5 eq. of 0.25 1,2-epoxyoctane (EO):spermine (0.1795 g, 0.54 mmol) and dissolved in 5 mL toluene. Then, 0.160 g (1 eq., 0.36 mmol) of $Mg_2(dobpdc)(IPA)_{2.05}$ that was desolvated in a 120 °C vacuum oven overnight was added to the vial. The slurry was then stirred at 60 °C on a hot plate overnight at 300-400 rpm. The material was cooled to room temperature and transferred to a conical tube. The material was spun down at a rate of 4000 rpm for 2 minutes, the solvent was decanted and the sample was dried in a 120 °C vacuum oven overnight to obtain 0.248 g of GE301 (84% yield, $Mg_2(dobpdc)(0.17\ EO{:}spermine)_{1.04}$).

Example B12. Synthesis of GE308-A385B.

A 20 mL scintillation vial was charged with 1.5 eq. of 0.46 (2,2,2-trifluoroethyl)oxirane(TFEO):N,N'-bis(2-aminoethyl)-1,3-propanediamine (0.1555 g, 0.54 mmol) and dissolved in 5 mL toluene. Then, 0.160 g (1 eq., 0.36 mmol) of $Mg_2(dobpdc)(IPA)_{2.05}$ that was desolvated in a 120 °C vacuum oven overnight was added to the vial. The slurry was then stirred at 60 °C on a hot plate overnight at 300-400 rpm. The material was cooled to room temperature and transferred to a conical tube. The material was spun down at a rate of 4000 rpm for 2 minutes, the solvent was decanted and the sample was dried in a 120 °C vacuum oven overnight to obtain 0.219 g of GE308 (81% yield, $Mg_2(dobpdc)(0.36\ TFEO{:}2\text{-}3\text{-}2)_{1.06}$).

Example B13. Synthesis of GE314-A3107.

The MOF used in making GE314 was made using salicylic acid as crystal growth inhibitor and has an average particle size of 0.24 μm as determined by Malvern Zetasizer. A 250 mL round-bottom flask was charged with 1.2 eq. of 0.10 1,2-epoxybutane (EB): N,N'-bis(2-aminomethyl)-1,3-propanediamine, hereafter referred to as "Amine 2-3-2", (2.149 g, 10.9 mmol) and dissolved in 90 mL toluene. Then, 4.5 g (1 eq., 9.1 mmol) of the MOF $Mg_2(dobpdc)(IPA)_{2.9}$ that was desolvated in a 120 °C vacuum oven overnight was added to the flask. The slurry was then stirred at 60 °C in an oil bath under $N_2$ overnight at 300-400 rpm. The material was cooled to room temperature and filtered via vacuum filtration. The material was collected and dried in a 120 °C vacuum oven overnight to obtain 4.71 g of GE314 (86% yield, $Mg_2(dobpdc)(0.11EB{:}2\text{-}3\text{-}2)_{1.1m}$).

Example B14. General loading of PLM amines including a primary alcohol unit (e.g., via oxetanes)

The following examples were made unless otherwise specified using mechanically ground MOF [$Mg_2(dobpdc)$] with an average particle size of 0.48 μm (D50) as measured by Malvern Zetasizer. The exemplary amines including a primary alcohol unit were prepared by reacting amines with oxetanes through ring-opening. Amines including a primary alcohol unit can also be prepared by other means, such as by direct synthesis.

A 20 mL scintillation vial was charged with 1-2.2 eq. of a novel amine synthesized via reaction of a functionalized oxetane with an amine and dissolved in 5 mL of a solvent. Then, 1 eq. of $Mg_2(dobpdc)(IPA)_x$ that was desolvated in a 120 °C vacuum oven overnight was added to the vial. The slurry was then stirred at 50-60 °C on a hot plate overnight at 300-400 rpm. The material was cooled to room temperature and either transferred to a conical tube or rotovapped down based on

the loading method used. The material in the conical tube was spun down at a rate of 4000 rpm for 2 minutes and decanted or the material in the vial was rotovapped down to remove solvent. Then, the sample was dried in a 120 °C vacuum oven overnight to obtain beta-alcohol functionalized amine loaded $Mg_2$(dobpdc). Excess amines or surface amines if any can be removed by annealing at elevated temperatures. In addition, annealing can also potentially help amine chains re-organize and eventually reach stable configurations and attachments to metal sites. The material was digested and $^1$H NMR was utilized to determine the initial and final loading post annealing.

Example B15. Synthesis of GE327-A3117D.

A 20 mL scintillation vial was charged with 1.2 eq. of β-methylhydroxyl-tetraamine (2-4-3 or 2-3-4) (0.0886 g, 0.50 mmol) and dissolved in 5 mL methanol. Then, 0.160 g (1 eq., 0.34 mmol) of $Mg_2$(dobpdc)$(IPA)_{2.56}$ that was desolvated in a 120 °C vacuum oven overnight was added to the vial. The slurry was then stirred at 50 °C on a hot plate overnight at 300-400 rpm. The material was cooled to room temperature and the solvent was removed via rotary evaporator. The sample was dried in a 120 °C vacuum oven overnight to obtain 0.245 g of GE327-A3117D (99% yield, $Mg_2$(dobpdc)(β-methylhydroxyl-tetraamine)$_3$).

Example B16. General loading of PLM amines including a carbonyl unit.

The following examples were made unless otherwise specified using mechanically ground MOF [$Mg_2$(dobpdc)] with an average particle size of 0.48μm (D50) as measured by Malvern Zetasizer. The exemplary amines including a carbonyl unit were prepared by reacting amines with acyl-containing compounds, including acyl halides, including acyl fluorides, chlorides, bromides or iodides, carboxylic acids, anhydrides, etc. Amines including a carbonyl unit can also be prepared by other means, such as by direct synthesis.

Example B17. Synthesis of GE322-SG1-176.

A 20 mL scintillation vial was charged with 1.25 eq. of 0.48 hexanoyl chloride (HC):spermine (0.1765 g, 0.587 mmol) and dissolved in 3 mL toluene. Then, 0.150 g (1 eq., 0.47 mmol) of $Mg_2$(dobpdc)$(IPA)_{1.76}$ that was desolvated in a 120 °C vacuum oven overnight was added to the vial. The reaction mixture was then stirred at 60°C on a hot plate overnight at 300-400 rpm. The vial was cooled to room temperature and the reaction mixture was transferred to a 15 ml centrifuge tube. The supernatant solvent was decanted, and finally, the residue was dried in a 120 °C vacuum oven to obtain GE322-SG1-176 (90% yield, $Mg_2$(dobpdc)(0.48 HC:spermine)$_{0.52}$) as determined by NMR (Figure 13).

Example B18. General procedure for post-synthetic modification (PSM) of sorbents.

A 20 mL scintillation vial was charged with 1 eq. of sorbent, MOF274 functionalized with amine. The sorbent was dispersed in 5 mL hexanes. Then, 0.01-4 eq. of functionalized oxirane was added to the slurry in addition to 0.5 eq. of ethanol per eq. of functionalized oxirane to catalyze the ring opening reaction. The slurry was stirred at 50 °C on a hot plate overnight at 300-400 rpm. The material was cooled to room temperature and transferred to a conical tube. The material was spun down at a rate of 4000 rpm for 2 minutes, the solvent was decanted and the sample was dried in an 80 °C vacuum oven overnight to obtain secondary-alcohol functionalized amine loaded $Mg_2$(dobpdc). The material was digested and $^1$H NMR was utilized to determine the initial and final loading post annealing.

Example B19. Synthesis of GE317-PSM.

For the post-synthetic modification, GE5-A369#0 with a formula of $Mg_2$(dobpdc)(spermine)$_{1.02}$ was used. A 20 mL scintillation vial was charged with 0.200 g (0.97 mmol based on spermine) of GE5-A369#0 which was dispersed in 5 mL hexanes. Then, 2 eq. of 1,2-epoxybutane (0.140 g, 0.169 mL, 1.94 mmol) and 1 eq. of EtOH (56 uL) was added to the vial. The slurry was then stirred at 50 °C on a hot plate overnight at 300-400 rpm. The material was cooled to room temperature and transferred to a conical tube. The material was spun down at a rate of 4000 rpm for 2 minutes, the solvent was decanted and the sample was dried in an 80 °C vacuum oven overnight to obtain 0.180 g of GE317-PSM ($Mg_2$(dobpdc)(0.52 EB:spermine)$_{1.04}$).

Example B20. Synthesis of GE319-PSM.

For the post-synthetic modification, GE5-A369#0 with a formula of $Mg_2$(dobpdc)(spermine)$_{1.02}$ was used. A 20 mL scintillation vial was charged with 0.200 g (0.97 mmol based on spermine) of GE5-A369#0, which was dispersed in 5 mL hexanes. Then, 2 eq. of 2,2,2-trifluoroethyl)oxirane (0.2446 g, 0.191 mL, 1.94 mmol) and 1 eq. of EtOH (56 uL) was

added to the vial. The slurry was then stirred at 50 °C on a hot plate overnight at 300-400 rpm. The material was cooled to room temperature and transferred to a conical tube. The material was spun down at a rate of 4000 rpm for 2 minutes, the solvent was decanted and the sample was dried in an 80 °C vacuum oven overnight to obtain 0.265 g of GE319-PSM ($Mg_2$(dobpdc)(0.51 TFEO: spermine)$_{1.01}$).

Non-MOF Sorbent Synthesis

Example C1. General procedure for synthesizing amine functionalized $\gamma$-$Al_2O_3$: Amine loading by physisorption impregnation.

Before synthesis, $\gamma$-$Al_2O_3$ was thermally activated under vacuum at 120 °C to remove the physisorbed water. After that, the desired amount of amine was dissolved in MeOH and added to the $\gamma$-$Al_2O_3$. The reaction mixture was stirred at room temperature overnight. Then, the solvents were removed by applying slow vacuum in rotavap. The obtained residue was further dried under vacuum at 100°C to obtain the amine loaded $\gamma$-$Al_2O_3$ material.

Example C2. Synthesis of GE320-184A (alumina functionalized with spermine through impregnation).

In a 20 ml scintillation vial, pre-activated $\gamma$-$Al_2O_3$ (200 mg) was added. In a separate vial, spermine (50wt% with respect to $\gamma$-$Al_2O_3$, 200 mg) was dissolved in 3 ml MeOH and added to $\gamma$-$Al_2O_3$. The slurry was then stirred at room temperature overnight at 370 rpm. Thereafter, the solvent was removed by applying slow vacuum in rotavap. The obtained residue was then further dried under vacuum at 100°C to obtain GE320-184A.

Example C3. Synthesis of GE321-184B (alumina functionalized with -OH containing spermine through impregnation).

In a 20 ml scintillation vial, $\gamma$-$Al_2O_3$ (200 mg) was added. In a separate vial, 0.25 EB:spermine (50 wt% with respect to $\gamma$-$Al_2O_3$, 235 mg) was dissolved in 3 ml MeOH and added to $\gamma$-$Al_2O_3$. The slurry was then stirred at room temperature overnight at 370 rpm. Thereafter, the solvent was removed by applying slow vacuum in rotavap. The obtained residue was then further dried under vacuum at 100°C to obtain GE321-184B.

The reaction scheme is shown in Figure 14.

Example C4. Synthesis of (3-Glycidyloxypropyl)trimethoxysilane modified $\gamma$-$Al_2O_3$: For Covalent Grafting of Amines

(3-Glycidyloxypropyl)trimethoxysilane (GLYMO) was dissolved in toluene or an ethanol/water/acetic acid (pH~4) solvent mixture. A pre-activated sample of $\gamma$-$Al_2O_3$ was added to the GLYMO solution and heated with stirring at 90°C (toluene) or 40°C (ethanol/water/acetic acid) overnight. Thereafter, the reaction mixture was centrifuged, and the residue was washed with hexanes twice. The obtained product was further dried under vacuum at 90 °C to obtain the GLYMO functionalized $\gamma$-$Al_2O_3$ (Figure 14). Thermogravimetric analysis (TGA) was used to characterize determine the degree of GLYMO grafting (Figure 15).

Example C5. Synthesis of SG1-177 (GLYMO functionalization in toluene).

In a 250 ml 3-necked round bottom flask, GLYMO (500 mg) was added, followed by the addition of 100 ml toluene. A pre-activated sample of $\gamma$-$Al_2O_3$ (500 mg) was added to the GLYMO solution and heated at 90°C overnight. After that, the reaction mixture was centrifuged to remove the toluene and the residue was washed with hexane twice to remove the physisorbed GLYMO. The obtained residue was further dried under vacuum at 90 °C to obtain GLYMO functionalized $\gamma$-$Al_2O_3$ (Figure 14 and Figure 15).

Example C6. Synthesis of GE323-184C (0.25EB:Spermine functionalized GLYMO Grafted $\gamma$-$Al_2O_3$).

In a 20 ml scintillation vial, SG1-177 (200 mg) was added. In a separate vial, 0.25 EB:spermine (50 wt% with respect to SG1-177, 237 mg) was dissolved in 3 ml MeOH and added to $\gamma$-$Al_2O_3$. The slurry was then stirred at room temperature overnight at 370 rpm. Thereafter, the solvent was removed by applying slow vacuum in rotavap. The obtained residue was then further dried under vacuum at 100 °C to obtain GE323-184C.

Thermal stabilities of the three amine-functionalized $\gamma$-$Al_2O_3$ sorbents were studied using TGA (Figure 16). The thermal stability of spermine attachment can be enhanced by using the -OH containing spermine modified by 1,2-epoxybutane and further with GLYMO grafting.

Example C7. One-Pot synthesis of (3-Glycidyloxypropyl)trimethoxysilane modified γ-$Al_2O_3$: For Covalent Grafting of Amines.

To avoid the cross linking between partially hydrolyzed GLYMO and amines before addition of the support materials, a one pot reaction was performed with sequential addition of the individual components. In a 20 ml scintillation glass vial, spermine (200 mg, 0.988 mmol) and GLYMO (234 mg, 0.988 mmol) was dissolved in 3 ml of methanol. The reaction mixture was stirred at room temperature for 30 minutes. Thereafter, pre-activated γ-$Al_2O_3$ (200 mg) was added to the reaction mixture and the combined mixture was stirred at room temperature overnight. After the reaction, MeOH was removed under slow vacuum in a rotavap instrument. The obtained residue was further dried under vacuum at 100 °C for 12 hours to obtain GE324-1A. Figure 17 shows the TGA traces of γ-$Al_2O_3$ and the one-pot synthesized γ-$Al_2O_3$ modified with GLYMO and further functionalized with spermine.

Testing and Characterization.

Example D1. General testing procedures.

Performance of $CO_2$ and $H_2O$ adsorption was studied using a dynamic vapor sorption analyzer (DVS) gravimetric method. In the experiments presented in the present disclosure, the gas and vapor used is $CO_2$ and water, respectively. The DVS Vacuum analyzer is designed to accurately measure a sample's change in mass as it adsorbs precisely controlled concentrations of water and or gas molecules. The sample is placed in a sample pan hung from a microbalance (an empty pan is usually hung on the other side of the microbalance as a 'reference'). The DVS Vacuum controls and measures sorbate entry and exit flows simultaneously while recording changes in sample mass. The main instrument, the microbalance (UltraBalance™) is housed in a precisely controlled temperature-controlled enclosure (referred to as an incubator). This ensures a highly stable instrument baseline and accurate vapor generation control to occur at the experimental temperature.

The gravimetric DVS method can accurately measure isotherms of pure $H_2O$ and pure $CO_2$. For wet $CO_2$ adsorption, a two-cycle sequential adsorption testing protocol is developed. At the beginning of each test, the sorbent material of interest is subject to an activation (or regeneration) step at 120°C for 60 minutes under a vacuum of less than $10^{-5}$ mbar. The set partial pressure of water is introduced under vacuum without the interference of a carrier gas at given temperature. The sample's weight is measured directly and continuously using Surface Measurement Systems' Ultra precision micro-Balance with a resolution of 0.1 μg. All sorption measurements in the present disclosure were done using mass equilibrium mode where the mass equilibrium criterion is set as the change in mass per minute (dm/dt of <0.0035). When the water adsorption reaches equilibrium, $CO_2$ gas with a pre-set partial pressure target is introduced. The partial pressure of $CO_2$ can be adjusted to reflect application conditions, i.e. 400vppm for direct air capture (DAC) or 4.5v% for post combustion capture (PCC).

Performance of $CO_2$ and $H_2O$ adsorption can also be studied using home-made breakthrough test rigs. The test rigs have a sample chamber that houses testing samples either in a powder form or a coating form, separate and calibrated temperature, $CO_2$, and relative humidity (RH) sensors located at both the gas inlet before the sample chamber and gas outlet after the sample chamber. The test rigs can measure individual breakthrough curves for $CO_2$ and $H_2O$ under either dry or wet $CO_2$ conditions with pre-set RH levels. Uptake can be calculated by integrating the breakthrough curve over time.

$CO_2$ uptake or capacity is shown as adsorbed $CO_2$ in gram per gram of sorbent ($gCO_2$/gSorbent). The $CO_2$ uptake can be generally considered as exponential growth over time, which can be expressed as $\frac{Q_{max}-Q_{(t)}}{Q_{max}} = e^{-kt}$ where $Q_{max}$ and $Q_{(t)}$ is equilibrium uptake and uptake at a given adsorption time of *t (min),* respectively, and *k* is the characteristics of the exponential growth with a unit of 1/min.

Mathematically, 1/k with a unit of mins equals the time required to reach 63% of $Q_{max}$. In this work, *1/k* which is more intuitive than *k,* is used to compare kinetics or rate of $CO_2$ uptake, i.e. the less the 1/k, the faster the $CO_2$ uptake kinetics.

Example D2. Water adsorption of exemplary MOF based sorbents functionalized with -OH containing amines.

Water isotherms of some exemplary sorbents functionalized with -OH containing amines measured at 25°C using the gravimetric DVS method are shown in Figures 18-26. Water uptakes are expressed as a mass ratio, i.e. grams of adsorbed $H_2O$ per gram of sorbent ($gH_2O$/gSorbent) and a number ratio per amine functional group, i.e. number of $H_2O$ molecules adsorbed per amine group measured at 25°C and 50% relative humidity are summarized in Table 4.

Table 4. Water uptake of exemplary sorbents measured at 25 °C and 50% relative humidity, including pre-loading modification (PLM) sorbents and post-synthesis modification (PSM) sorbents.

| Sorbent ID | Amine | PLM or PSM | Epoxide | O/N ratio | $H_2O$ uptake | |
|---|---|---|---|---|---|---|
| | | | | | $gH_2O$ per gSorbent | number of $H_2O$ per amine |
| GE302-A377 | Amine 2-3-2 | N/A | N/A | 0 | 0.399 | 2.60 |
| GE314-A381C | Amine 2-3-2 | PLM | 1,2-epoxybutane | 0.11 | 0.333 | 2.19 |
| GE306-A381A | Amine 2-3-2 | PLM | 1,2-epoxybutane | 0.24 | 0.249 | 1.63 |
| GE305-A381B | Amine 2-3-2 | PLM | 1,2-epoxybutane | 0.37 | 0.176 | 1.26 |
| GE315-A385C | Amine 2-3-2 | PLM | TFEO | 0.12 | 0.316 | 2.14 |
| GE307-A385A | Amine 2-3-2 | PLM | TFEO | 0.23 | 0.179 | 1.09 |
| GE308-A385B | Amine 2-3-2 | PLM | TFEO | 0.36 | 0.111 | 0.78 |
| GE5-A369 | Spermine | N/A | N/A | 0 | 0.322 | 2.27 |
| GE296-A366A | Spermine | PLM | 1,2-epoxybutane | 0.22 | 0.217 | 1.60 |
| GE297-A366B | Spermine | PLM | 1,2-epoxybutane | 0.36 | 0.180 | 1.45 |
| GE298-A366C | Spermine | PLM | 1,2-epoxybutane | 0.45 | 0.146 | 1.28 |
| GE301-A370A | Spermine | PLM | 1,2-epoxyoctane | 0.17 | 0.143 | 1.08 |
| GE316-PSM | Spermine | PSM | 1,2-epoxybutane | 0.31 | 0.159 | 1.16 |
| GE317-PSM | Spermine | PSM | 1,2-epoxybutane | 0.52 | 0.089 | 0.64 |
| GE318-PSM | Spermine | PSM | TFEO | 0.18 | 0.060 | 0.43 |
| GE319-PSM | Spermine | PSM | TFEO | 0.51 | 0.054 | 0.39 |

Incorporation of -OH groups, regardless of PLM or PSM, leads to a number of unexpected results summarized below.

First, the $H_2O$ uptake at a fixed condition, such as 50% relative humidity, can be reduced by incorporating -OH groups. The degree of reduction of $H_2O$ uptake can be tuned by varying the length of fatty components such as 1,2-epoxybutane vs 1,2-epoxyoctane, using fluoro-containing agents such as 2,2,2-(trifluoroethyl)oxirane (TFEO), or a different degree of incorporation (Table 4 and Figures 18-25) or through modification using oxetane (Figure 26).

Second, the average number of $H_2O$ adsorbed per amine group can be tuned or significantly reduced by incorporating -OH groups. The degree of reduction of $H_2O$ adsorbed per amine group can be tuned by varying the length of fatty components such as 1,2-epoxybutane vs 1,2-epoxyoctane, using fluoro-containing agents such as 2,2,2-(trifluoroethyl)oxirane (TFEO), or a different degree of incorporation (Table 4 and Figures 18-25).

Third, the shape of water isotherms can be tuned by varying reaction agents, the degree of incorporation and -OH contents (Figures 18-26). MOF-274 based sorbents functionalized with pristine amines without any -OH groups tend to have a Class-II or Class-IV isotherms as defined by IUPAC (Figure 27) with a clear region transitioning from monolayer $H_2O$ uptake to multi-layer $H_2O$ uptake or even condensation. The transition region becomes less obvious for the sorbents functionalized with amines comprising -OH groups. Sorbents with high -OH contents exhibit a water isotherm more like a Class-III type instead of Class-II or class-IV.

Example D3. Water adsorption of exemplary non-MOF based sorbents functionalized with -OH containing amines.

Water isotherms of some exemplary non-MOF based sorbents functionalized with -OH containing amines measured at 25 °C using the gravimetric DVS method are shown in Figures 28-30.

Example D4. Dry $CO_2$ adsorption of exemplary MOF-based sorbents functionalized with -OH containing amines.

Dry $CO_2$ isotherms of exemplary MOF-based sorbents functionalized with -OH containing amines measured at 25°C using the gravimetric DVS method are shown in Figures 32-37. $CO_2$ uptakes are expressed as a mass ratio, i.e. grams of adsorbed $CO_2$ per gram of sorbent ($gCO_2$/gSorbent) and a number ratio of $CO_2$ per amine functional group, i.e. average number of $CO_2$ molecules per amine group measured at 25°C. The results are summarized in Table 5.

Table 5. Dry $CO_2$ uptake of exemplary sorbents measured at 25°C under 4 mBar and 10 mBar $CO_2$ pressures.

| Sorbent ID | Epoxide | O/N ratio | $CO_2$ uptake ($gCO_2$/gSorbent) (%) | | $CO_2$ uptake per amine group | |
|---|---|---|---|---|---|---|
| | | | 4mBar $CO_2$ | 10mBar $CO_2$ | 4mBar $CO_2$ | 10mBar $CO_2$ |
| GE302-A377 | N/A | 0 | 0.79 | 3.00 | 0.02 | 0.08 |
| GE314-A381C | 1,2-epoxybutane | 0.11 | 3.94 | 7.29 | 0.11 | 0.20 |
| GE306-A381A | 1,2-epoxybutane | 0.24 | 4.87 | 7.33 | 0.13 | 0.20 |
| GE305-A381B | 1,2-epoxybutane | 0.37 | 2.67 | 4.19 | 0.08 | 0.12 |
| GE315-A385C | TFEO | 0.12 | 3.57 | 6.72 | 0.10 | 0.19 |
| GE307-A385A | TFEO | 0.23 | 5.40 | 7.46 | 0.13 | 0.19 |
| GE308-A385B | TFEO | 0.36 | 3.30 | 4.00 | 0.09 | 0.11 |

Incorporation of -OH groups leads to a number of unexpected results summarized below.

First, the presence of -OH groups can enhance the dry $CO_2$ uptake at low $CO_2$ pressures with respect to their corresponding amines without any - OH groups (Figure 31-Figure 37 and Table 5).

Second, the degree of enhancement can be tuned by varying the reaction agents or different degrees of -OH incorporation. The enhancement at high epoxide incorporation becomes less significant. Without being bound to any particular theory, it believed that this decrease in significance is due to the extra mass added from the ring-opening reactions and increased steric effects from the increased amine sizes.

Third, the shape of dry $CO_2$ isotherms can be tuned by varying reaction agents, the degree of incorporation and -OH contents. For instance, the sorbent functionalized with pristine spermine exhibits a stepped isotherm showing a rapid transition between 1 mBar and 10 mBar $CO_2$ partial pressures (Figure 32-Figure 33). The step becomes less obvious or even diminishes for the sorbents functionalized with spermine containing -OH groups.

Example D5. Dry $CO_2$ adsorption of exemplary non-MOF based sorbents functionalized with -OH containing amines.

Dry $CO_2$ isotherms of exemplary non-MOF based sorbents functionalized with spermine and with -OH containing spermine measured at 25°C using the gravimetric DVS method are shown in Figures 38-39, respectively.

In addition to the enhanced thermal stability shown in Figure 16, the presence of a -OH group in GE321-184B significantly enhances dry $CO_2$ uptake at low $CO_2$ pressures with respect to the control (GE320-184A) without any -OH group (Figure 38-39).

Example D6. Desorption residual of exemplary sorbent materials.

Dry $CO_2$ uptakes at 120°C and 100 mBar and 400 mBar $CO_2$ partial pressure can be used to evaluate desorption residual for each material. Incorporating -OH groups can tune the desorption residuals at both 100 mBar and 400 mBar $CO_2$ pressures with respect to the two comparative examples without any -OH groups (Table 6).

Table 6. Dry $CO_2$ uptake of exemplary sorbents measured at 120 °C under 100mBar and 400mBar $CO_2$ pressures, including pre-loading modification (PLM) sorbents and post-synthesis modification (PSM) sorbents.

| Sorbent ID | Amine | PLM or PSM | Epoxide | O/N ratio | Dry $CO_2$ uptake ($gCO_2$/gSorbent) (%) | |
|---|---|---|---|---|---|---|
| | | | | | 100mBar $CO_2$ | 400mBar $CO_2$ |
| GE302-A377 | Amine2-3-2 | N/A | N/A | 0 | 0.20 | 5.48 |
| GE314-A381C | Amine2-3-2 | PLM | 1,2-epoxybutane | 0.11 | 0.83 | 10.74 |
| GE306-A381A | Amine 2-3-2 | PLM | 1,2-epoxybutane | 0.24 | 2.14 | 8.46 |
| GE305-A381B | Amine 2-3-2 | PLM | 1,2-epoxybutane | 0.37 | 0.89 | 3.16 |
| GE315-A385C | Amine 2-3-2 | PLM | TFEO | 0.12 | 0.94 | 10.27 |
| GE307-A385A | Amine 2-3-2 | PLM | TFEO | 0.23 | 2.24 | 8.29 |
| GE308-A385B | Amine 2-3-2 | PLM | TFEO | 0.36 | 1.41 | 4.16 |
| GE5-A369 | Spermine | N/A | N/A | 0 | 8.26 | 14.31 |
| GE296-A366A | Spermine | PLM | 1,2-epoxybutane | 0.22 | 4.32 | 6.87 |
| GE297-A366B | Spermine | PLM | 1,2-epoxybutane | 0.36 | 2.17 | 3.85 |

(continued)

| Sorbent ID | Amine | PLM or PSM | Epoxide | O/N ratio | Dry $CO_2$ uptake ($gCO_2$/gSorbent) (%) | |
|---|---|---|---|---|---|---|
| | | | | | 100mBar $CO_2$ | 400mBar $CO_2$ |
| GE298-A366C | Spermine | PLM | 1,2-epoxybutane | 0.45 | 0.38 | 1.97 |
| GE301-A370A | Spermine | PLM | 1,2-epoxyoctane | 0.17 | 5.84 | 7.99 |
| GE316-PSM | Spermine | PSM | 1,2-epoxybutane | 0.31 | 3.68 | 6.50 |
| GE317-PSM | Spermine | PSM | 1,2-epoxybutane | 0.52 | 1.42 | 2.56 |
| GE318-PSM | Spermine | PSM | TFEO | 0.18 | 1.11 | 2.64 |
| GE319-PSM | Spermine | PSM | TFEO | 0.51 | 1.15 | 2.36 |

Example D7. Wet $CO_2$ adsorption of exemplary sorbent materials measured using breakthrough test rig.

Shown in Table 7 are some exemplary sorbent materials and their adsorption performances measured under a DAC-relevant co-adsorption condition (25 °C, 50%RH and 400vppm $CO_2$) using the breakthrough test rig.

Table 7. Exemplary sorbent materials and their adsorption performances under DAC-relevant co-adsorption conditions, including pre-loading modification (PLM) sorbents and post-synthesis modification (PSM) sorbents.

| Sorbent ID | Amine | PLM or PSM | Epoxide | O/N ratio | $CO_2$ uptake ($gCO_2$/gSorbe nt) | $H_2O$ uptake ($gH_2O$/gSorbe nt) |
|---|---|---|---|---|---|---|
| GE302-A377 | Amine 2-3-2 | N/A | N/A | 0 | 0.16 | 0.44 |
| GE314-A381C | Amine 2-3-2 | PLM | 1,2-epoxybutane | 0.11 | 0.11 | 0.30 |
| GE5-A369 | Spermine | N/A | N/A | 0 | 0.18 | 0.39 |
| GE296-A366A | Spermine | PLM | 1,2-epoxybutane | 0.22 | 0.10 | 0.27 |
| GE301-A370A | Spermine | PLM | 1,2-epoxyoctane | 0.17 | 0.06 | 0.19 |
| GE320-184A | Spermine | N/A | N/A | 0 | 0.04 | 0.27 |
| GE31-184B | Spermine | PLM | 1,2-epoxybutane | 0.25 | 0.085 | 0.22 |

Coatings using amine functionalized sorbents.

Example E1. General procedure for making a coating using amine functionalized sorbents.

The functionalized sorbent material can be in any form, including but not limited to, powder, composites mixed with binders, films or coating, packed bed, columns, etc. In one embodiment, the functionalized sorbent is presented as a film or coating further comprising at least one binder. In another embodiment, the functionalized sorbent is presented as a film or coating further comprising at least one polymeric binder and at least one additive including but not limited to clay particles, silica particles, alumina particles etc. In another embodiment, the functionalized sorbent is presented as a film or coating prepared using an organic solvent, including but not limited to, xylene, p-xylene, o-xylene, ketones, ethanol, isopropyl alcohol, etc. In another embodiment, the functionalized sorbent is presented as a film or coating prepared using water.

According to a typical procedure, a coating of sorbent-containing film can be prepared by: creating a slurry formulation including a solvent, a functionalized sorbent, and a binder; optionally incorporating additional additives to improve slurry rheology and coating quality as needed; applying the slurry onto a substrate by a coating technique; drying the slurry to remove solvents; and optionally curing under heat or irradiation with UV light, etc.

The solvent may be either aqueous or organic or a mixture thereof in any suitable ratio.

The binder may generally be a polymer or precursors including a polymer (e.g., a mixture of monomers, etc.) that cross-link upon curing.

The additives need to be compatible with the solvent and the functionalized sorbent to facilitate the linkage of

sorbent particles and even dispersion through the solvent.

Any suitable coating technique may be used, such as, but not limited to, spray coating, dip coating, flow coating, spin coating, drop coating, etc.

Example E2. General procedure for water soaking tests.

To a 15 mL falcon tube, 50 mg of sorbent was added in addition to 1 mL of DI water. The tube was sonicated for 5 minutes and then allowed to soak for 30 minutes. The tube was centrifuged, decanted and then dried at 120°C in a vacuum oven overnight. The material was digested and $^1H$ NMR was utilized to determine the loading post leaching test. The change in amine loading is defined as the resistance of amine to water soak.

Example E3. Exemplary coating of GE314 using an organic solvent.

A film sample of GE314 was prepared according to the following procedure. First, 0.05 g Butvar B98 as binder was dissolved in 2.5 g ethanol, then 0.05 g of clay particle was added to this solution and the result was stirred for 15 minutes. Next, 1 g of GE314 was added, and the slurry was vortexed for a few minutes before coating it on a 2" by 2" aluminum coupon. The coated sample was air-dried in a fume hood for an hour, then dried in the oven at 90 °C for an hour.

Shown in Figure 40 are $CO_2$ uptake and $H_2O$ uptake over time for the GE314 film. It has a $CO_2$ adsorption kinetics (1/k) of 33.8mins under the testing condition. The fast kinetics is in part due to the use of small size MOF particle with a D50 of 0.24 μm.

Example E4. Resistance to water soak.

Amine functionalized sorbent materials are generally subjected to amine loss when in contact with liquid water. Improved resistance of sorbents to liquid water is desirable for practical use and applications.

In a $CO_2$ capture plant, the sorbent material can be in any form including but not limited to powder, composites mixed with binder materials, films, coating, packed bed and columns, etc. In some embodiments, sorbents are present as a coating on a substrate or contactor. Sorbent coatings can be formed by coating a preformed slurry of sorbent materials with binders and additives as needed in a solvent onto a substrate. Aqueous based slurries or coating procedures are preferred over solvent based ones due to zero or reduced volatile organic compounds (VOCs), which require resistance of sorbent materials to liquid water. Further, as illustrated in Figures 19-26, amine functionalized sorbents can have a class-IV type of water isotherms, indicating possibility of water condensation under high relative humidities. Improved resistance of sorbent materials to liquid water in principle can reduce the potential degradation, amine loss or leaching due to the condensed water when the sorbents get exposed to highly humid environments.

The resistance of sorbent materials to liquid water is evaluated following the general procedure for water soaking tests. Shown in Table 8 are results of water soak experiments for some exemplary sorbent materials. The degree of amine loss due to water soak can be tuned by varying reaction agents, the degree of incorporation and -OH contents, etc. For instance, modification of spermine using TFEO significantly reduced amine loss upon water soak from 40.2% for the sorbent functionalized with pristine spermine to 8.9% (GE319-PSM).

Another useful method of accessing water solubility is to use logP values, which are the logarithm (base 10) of the partition coefficient (P) defined as the ratio of materials' organic (oil)-to-aqueous phase concentrations. LogP is widely used in the drug and medicine industries to help identify drug candidates that are suitable for oral administration. Values for LogP can be measured empirically or calculated using many software packages, e.g., ALOGPS 2.1 used in this disclosure. Shown in Table 9 are the LogP values vs amine changes due to water soak for some of the exemplary functionalized sorbents. The sorbents functionalized with amines having larger positive LogP values tend to have less amine loss.

Table 8. Changes in amine loading upon water soak tests for exemplary sorbent materials, including pre-loading modification (PLM) sorbents and post-synthesis modification (PSM) sorbents.

| Sorbent ID | Amine | PL M or PS M | Epoxide | O/N ratio | Amine loading | | Amine changes due to water soak |
|---|---|---|---|---|---|---|---|
| | | | | | As made | After water soak | |
| GE302-A377 | Amine2-3-2 | N/A | N/A | 0 | 1.03 | 0.51 | -50.5% |
| GE314-A381C | Amine2-3-2 | PL M | 1,2-epoxybutane | 0.11 | 1.04 | 0.60 | -42.3% |
| GE306-A381A | Amine 2-3-2 | PL M | 1,2-epoxybutane | 0.24 | 1.09 | 0.53 | -51.4% |
| GE305-A381B | Amine 2-3-2 | PL M | 1,2-epoxybutane | 0.37 | 0.97 | 0.50 | -48.5% |

(continued)

| Sorbent ID | Amine | PL M or PS M | Epoxide | O/N ratio | Amine loading | | Amine changes due to water soak |
|---|---|---|---|---|---|---|---|
| | | | | | As made | After water soak | |
| GE315-A385C | Amine 2-3-2 | PL M | TFEO | 0.12 | 1.02 | 0.51 | -50.0% |
| GE307-A385A | Amine 2-3-2 | PL M | TFEO | 0.23 | 1.27 | 0.59 | -53.5% |
| GE308-A385B | Amine 2-3-2 | PL M | TFEO | 0.36 | 1.06 | 0.75 | -29.2% |
| GE5-A369 | Spermine | N/A | N/A | 0 | 1.02 | 0.61 | -40.2% |
| GE296-A366A | Spermine | PL M | 1,2-epoxybutane | 0.22 | 1.01 | 0.66 | -34.7% |
| GE297-A366B | Spermine | PL M | 1,2-epoxybutane | 0.36 | 0.9 | 0.65 | -27.8% |
| GE298-A366C | Spermine | PL M | 1,2-epoxybutane | 0.45 | 0.8 | 0.66 | -17.5% |
| GE301-A370A | Spermine | PL M | 1,2-epoxyoctane | 0.17 | 1.04 | 0.87 | -16.3% |
| GE316-PSM | Spermine | PS M | 1,2-epoxybutane | 0.31 | 1.06 | 0.60 | -43.4% |
| GE317-PSM | Spermine | PS M | 1,2-epoxybutane | 0.52 | 1.04 | 0.75 | -27.9% |
| GE318-PSM | Spermine | PS M | TFEO | 0.18 | 1.08 | 0.92 | -14.8% |
| GE319-PSM | Spermine | PS M | TFEO | 0.51 | 1.01 | 0.92 | -8.9% |
| GE199-A335 | cis-m-CHD | N/A | N/A | 0 | 1.98 | 0.76 | -61.6% |
| GE199-A367B | cis-m-CHD | PL M | 1,2-epoxybutane | 0.22 | 1.24 | 0.9 | -27.4% |

Table 9. Changes in amine loading upon water soak tests vs calculated LogP for exemplary sorbent materials, including pre-loading modification (PLM) sorbents and post-synthesis modification (PSM) sorbents.

| Sorbent ID | Amine | PL M or PS M | Epoxide | O/N ratio | Calculat ed LogP | Amine loading | | Amine changes due to water soak |
|---|---|---|---|---|---|---|---|---|
| | | | | | | As made | After water soak | |
| GE302-A377 | Amine2-3-2 | N/A | N/A | 0 | -1.63 | 1.03 | 0.51 | -50.5% |
| GE314-A381C | Amine2-3-2 | PL M | 1,2-epoxybutan e | 0.11 | -1.22 | 1.04 | 0.60 | -42.3% |
| GE306-A381A | Amine2-3-2 | PL M | 1,2-epoxybutan e | 0.24 | -0.82 | 1.09 | 0.53 | -51.4% |
| GE305-A381B | Amine2-3-2 | PL M | 1,2-epoxybutan e | 0.37 | -0.51 | 0.97 | 0.50 | -48.5% |
| GE5-A369 | Spermin e | N/A | N/A | 0 | -0.66 | 1.02 | 0.61 | -40.2% |
| GE296-A366A | Spermin e | PL M | 1,2-epoxybutan e | 0.22 | 0.07 | 1.01 | 0.66 | -34.7% |
| GE297-A366B | Spermin e | PL M | 1,2-epoxybutan e | 0.36 | 0.39 | 0.9 | 0.65 | -27.8% |
| GE298-A366C | Spermin e | PL M | 1,2-epoxybutan e | 0.45 | 0.54 | 0.8 | 0.66 | -17.5% |
| GE301-A370A | Spermin e | PL M | 1,2-epoxyoctane | 0.17 | 0.97 | 1.04 | 0.87 | -16.3% |
| GE316-PSM | Spermin e | PS M | 1,2-epoxybutan e | 0.31 | 0.29 | 1.06 | 0.60 | -43.4% |
| GE317-PSM | Spermin e | PS M | 1,2-epoxybutan e | 0.52 | 0.62 | 1.04 | 0.75 | -27.9% |
| GE199-A335 | cis-m-CHD | N/A | N/A | 0 | -0.12 | 1.98 | 0.76 | -61.6% |
| GE199-A367B | cis-m-CHD | PL M | 1,2-epoxybutan e | 0.22 | 0.60 | 1.24 | 0.9 | -27.4% |

Example E5. Exemplary coating of amine-functionalized sorbents using an aqueous formulation.

Film samples of sorbents functionalized with amines including no -OH groups were prepared using the following aqueous formulation procedure and water-based epoxy binders. First, 0.2 g of Westcoat EC epoxy-based binder solution

(46 % solid content) was added to 2.5 g of water. The mixture was vortexed for 2 min before adding 0.5 g of sorbent. The slurry was vortexed sonicated for 10 min, which was then coated on a 1" by 1" aluminum coupon. The coated coupons were air-dried on the bench for 24 hours to self-cure followed by drying in the oven at 90 °C for one hour. The amine content in films was determine using 1H NMR as described earlier. Amine loadings present in the final coatings and their corresponding changes as results of the aqueous formulation process are summarized in Table 10. The pristine amine such as spermine has a 24.5% reduction in amine loading while both PLM and PSM modified amines including -OH groups exhibit almost no change in amine loading.

Table 10. Amine loading of exemplary sorbents in epoxy-based aqueous coating, including pre-loading modification (PLM) sorbents and post-synthesis modification (PSM) sorbents.

| Sorbent ID | Amine | PLM or PSM | Epoxide | O/N ratio | Amine loading | | Amine changes due to aqueous coating |
|---|---|---|---|---|---|---|---|
| | | | | | As made | In aqueou s based coating | |
| GE5-A369 | Spermine | N/A | N/A | 0 | 1.02 | 0.77 | -24.5 % |
| GE308-A385B | Amine 2-3-2 | PLM | TFEO | 0.36 | 1.06 | 1.05 | 0% |
| GE318-PSM | Spermine | PSM | TFEO | 0.18 | 1.08 | 1.08 | 0% |

Example E6. Desorption temperature.

$CO_2$ desorption properties were studied by monitoring $CO_2$ desorption signals while the test bed temperature was increased stepwise (Figures 41-46). For each experiment, the sorbent was subjected to adsorption to full equilibrium under the DAC relevant condition, i.e. 25°C, 400vppm$CO_2$ and 50%RH. As shown in Figure 41, the MOF-based sorbent functionalized with pure spermine (GE5-A369) exhibits multiple desorption peaks corresponding to desorption temperatures up to 100°C. The MOF-based sorbent functionalized with -OH containing spermine modified by either 1,2-epoxybutane (GE296-A366A) (Figure 42) or 1,2-epoxyoctane (GE301-A370A) (Figure 43) can be fully desorbed at lowered temperature of 80°C. Similar reduction in desorption temperature was also observed for MOF-based sorbents functionalized with -OH containing Amine 2-3-2 both in powder (Figure 45) and film format (Figure 46) with respect to pristine amine (Figure 44).

Summary.

The significant advantages in functionalizing sorbents with at least one functionalization ligand including a polyamine including at least one oxygen-containing unit selected from the group consisting of carbonyl units, hydroxyl units, and combinations thereof are described herein. In addition, incorporation of -OH groups, regardless of PLM or PSM, leads to a number of unexpected results disclosed herein. The materials and methods of the present disclosure are broadly applicable to a wide variety of sorbents and functionalization ligands.

Definitions.

As used herein, references to "example embodiment" or "one embodiment" or "some embodiments" of the present disclosure are not intended to be interpreted as excluding the existence of additional embodiments that also incorporate the recited features.

When introducing elements of various embodiments disclosed herein, the articles "a," "an," "the," and "said" are intended to mean that there are one or more of the elements. The terms "comprising," "including," and "having" are intended to be inclusive and mean that there may be additional elements other than the listed elements.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

Unless otherwise indicated, approximating language, such as "generally," "substantially," and "about," as used

herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. **In** at least some instances, the approximating language may correspond to the precision of an instrument for measuring the value. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

As used herein, the term "isomer", refers to molecules with identical molecular formulas but distinct arrangements of atoms in space. Isomers include structural isomers and stereoisomers. Stereoisomers include (R)- and (S)-enantiomers and cis/trans diastereomers. Each compound disclosed in the present disclosure, regardless of whether a particular isomer is depicted, discloses all of the individual isomers as well as every mixture of isomers.

As used herein, the term "alkyl", used either alone or in compound words such as "haloalkyl" includes straight-chain or branched alkyl such as methyl, ethyl, n-propyl and i-propyl, or the different butyl, pentyl or hexyl isomers. An alkyl defined by a number of carbon atoms, e.g. $C_6$ alkyl, is understood to have that many carbon atoms but is not otherwise limited.

As used herein, the term "heteroalkyl" denotes an alkyl chain wherein at least one of the atoms forming the chain backbone is other than carbon.

As used herein, "aminoalkyl" includes an N radical substituted with straight-chain or branched alkyl.

As used herein, the term "halogen" or "halide" either alone or in compound words such as "haloalkyl", includes fluorine, chlorine, bromine or iodine. Further, when used in compound words such as "haloalkyl", said alkyl may be partially or fully substituted with halogen atoms which may be the same or different. Examples of "haloalkyl" include $F_3C$, $ClCH_2$, $CF_3CH_2$ and $CF_3CCl_2$. The term "haloalkoxy", and the like, are defined analogously to the term "haloalkyl". Examples of "haloalkoxy" include $CF_3O$, $CCl_3CH_2O$, $F_2CHCH_2CH_2O$ and $CF_3CH_2O$.

As used herein, the term "heterocycle" denotes a ring wherein at least one of the atoms forming the ring backbone is other than carbon. Unless otherwise indicated, a heterocycle can be a saturated, partially unsaturated, or fully unsaturated ring. When a fully unsaturated heterocyclic ring satisfies Hiickel's rule, then said ring is also called a "heteroaryl" or aromatic heterocyclic ring. "Saturated heterocyclic ring" refers to a heterocyclic ring containing only single bonds between ring members.

As used herein, the term "aminosilicone group" includes functional groups that include both an amine group and a siloxane group (also called a disiloxane group) including a Si-O-Si linkage.

Ring-shaped cyclic units can be divided into two categories: alicyclic units and aromatic units. A cyclic unit refers to any chemical species that has at least three atoms bonded to each other, forming an enclosed ring structure. Some cyclic units are considered as alicyclic because they are both aliphatic and cyclic at the same time. Aromatic units are also cyclic compounds having an enclosed ring structure. However, the key differences between alicyclic and aromatic units are that aromatic units are composed of $sp^2$ hybridized atoms incorporated into planar and conjugated ring systems via delocalized pi-electrons whereas alicyclic units are composed of sp, $sp^2$, or $sp^3$ hybridized atoms that do not contain delocalized pi-electrons around the ring. Further, aromatic units or compounds generally follow the Huckel rule, i.e., the total number of pi-electrons belonging to a ring-shaped cyclic unit or molecule can be equated to the formula of "4N+2" where N can be any integer with a positive value.

As used herein, the term "polyamine" refers to chemical compounds having at least two amine groups. Polyamines may therefore include diamines, triamines, tetra-amines, penta-amines, hexa-amines, and combinations thereof.

As used herein, the term "hydroxyl unit" refers to an -OH group. The -OH group may be a primary -OH group in which the -OH group is bound to a primary carbon atom to form a primary alcohol, a secondary -OH group in which the - OH group is bound to a secondary carbon atom to form a secondary alcohol, or a tertiary -OH group in which the -OH group is bound to a tertiary carbon atom to form a tertiary alcohol.

As used herein, the term "carbonyl unit" refers to a C=O group. The C=O group is not limited by the surrounding bonds and functional groups and may form a portion of another functional group. For example, the C=O group may be present as part of an amide group, aldehyde group, ketone group, thiocarboxylic acid group, or a carboxylic acid group.

$^1H$ NMR spectra are reported in ppm downfield from tetramethylsilane; "s" means singlet, "d" means doublet, "dd" means doublet of doublets, "ddd" means doublet of doublet of doublets, "t" means triplet, "m" means multiplet, and "br s" means broad singlet.

Although specific features of various embodiments of the invention may be shown in some drawings and not in others, this is for convenience only. In accordance with the principles of the invention, any feature of a drawing may be referenced and/or claimed in combination with any feature of any other drawing.

While the invention has been described in terms of various specific embodiments, those skilled in the art will recognize that the invention can be practiced with modification within the spirit and scope of the claims.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

It is readily understood by those skilled in the art that some substituents of the present disclosure depend on the presence of other substituents and are therefore optional. For example, in Formula A-I, when $R_9$ is a direct bond, $R_1$ and $R_2$ are optional substituents not present in the compound. Similarly, in Formula A-I, when n is 0, there is a direct bond between $R_9$ and $R_{10}$, and $R_3$, $R_4$, and $R_{11}$ are optional substituents not present in the compound. The optionality of a substituent in one embodiment is non-limiting regarding the presence of the substituent in another embodiment.

Further aspects of the invention are provided by the subject matter of the following clauses:

Clause 1. A functionalized sorbent including a sorbent and at least one functionalization ligand. The functionalization ligand includes a polyamine including at least one oxygen-containing unit selected from the group consisting of carbonyl units, hydroxyl units, and combinations thereof.

Clause 2. The functionalized sorbent of the preceding clause, wherein the at least one oxygen-containing unit is selected from the group consisting of primary hydroxyl units, secondary hydroxyl units, tertiary hydroxyl units, and combinations thereof.

Clause 3. The functionalized sorbent of any preceding clause, wherein the polyamine includes at least one amine selected from the group consisting of primary amines, secondary amines, tertiary amines, and combinations thereof.

Clause 4. The functionalized sorbent of any preceding clause, wherein the polyamine includes at least one amine selected from the group consisting of di-amines, tri-amines, tetra-amines, penta-amines, hexa-amines, hepta-amines, octa-amines, and combinations thereof.

Clause 5. The functionalized sorbent of any preceding clause, wherein the sorbent includes a metal-organic framework (MOF).

Clause 6. The functionalized sorbent of any preceding clause, wherein the sorbent includes a mesoporous oxide support.

Clause 7. The functionalized sorbent of any preceding clause, including at least one functionalization ligand not including a polyamine including at least one oxygen-containing unit.

Clause 8. The functionalized sorbent of any preceding clause, wherein the sorbent has an aspect ratio of $\geq 0.2$.

Clause 9. The functionalized sorbent of any preceding clause, wherein the sorbent has an average particle length $\leq 3$ $\mu m$.

Clause 10. The functionalized sorbent of any preceding clause, wherein the functionalized sorbent has a class-II, or class-III or class-IV isotherm for pure water.

Clause 11. The functionalized sorbent of any preceding clause, wherein the at least one functionalization ligand including a polyamine including at least one oxygen-containing unit selected from the group consisting of carbonyl units, hydroxyl units, and combinations thereof has a LogP of -1.0 or greater.

Clause 12. The functionalized sorbent of any preceding clause, wherein the sorbent is in a form selected from the group consisting of powders, pellets, composites, composites mixed with binders, films, coatings, aqueous coatings, packed beds, columns, monoliths, and combinations thereof.

Clause 13. A sorbent system including the functionalized sorbent of any preceding clause.

Clause 14. A method of making a functionalized sorbent. The method includes: (I) forming a mixture including: a sorbent; at least one functionalization ligand including a polyamine including at least one oxygen-containing unit selected from the group consisting of carbonyl units, hydroxyl units, and combinations thereof; optionally at least one

functionalization ligand not including a polyamine including at least one oxygen-containing unit selected from the group consisting of carbonyl units, hydroxyl units, and combinations thereof; optionally a solvent; and optionally a non-solvent; and (II) functionalizing the sorbent.

Clause 15. The method of any preceding clause, wherein the solvent includes an aqueous solvent.

Clause 16. A method of modifying a functionalized sorbent. The method includes: (I) forming a mixture including: a sorbent functionalized with at least one functionalization ligand not including a polyamine including at least one oxygen-containing unit selected from the group consisting of carbonyl units, hydroxyl units, and combinations thereof; and a reaction agent; and (II) reacting the reaction agent with the sorbent functionalized with at least one functionalization ligand not including a polyamine including at least one oxygen-containing unit selected from the group consisting of carbonyl units, hydroxyl units, and combinations thereof to produce a sorbent functionalized with at least one functionalization ligand including a polyamine including at least one oxygen-containing unit selected from the group consisting of carbonyl units, hydroxyl units, and combinations thereof.

Clause 17. The method of any preceding clause, wherein the reaction agent includes at least one functional group selected from the group consisting of epoxide groups, epoxide groups including a fluorine atom, 3-membered ring epoxide groups, mono-epoxide groups, di-epoxide groups, oxetane groups, 4-membered ring oxetane groups, and combinations thereof.

Clause 18. A method of capturing at least one gas. The method includes: (I) receiving a gas source including the at least one gas at a functionalized sorbent, wherein the functionalized sorbent includes a sorbent and at least one functionalization ligand including a polyamine including at least one oxygen-containing unit selected from the group consisting of carbonyl units, hydroxyl units, and combinations thereof; and (II) capturing an amount of the at least one gas with the functionalized sorbent.

Clause 19. The method of any preceding clause, wherein the gas source is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

Clause 20. The method of any preceding clause, wherein the at least one gas is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

Clause 21. A method of collecting at least one gas from a gas source, the method including:

capturing the at least one gas according to the method of any preceding clause, and

(III) releasing the at least one gas from the functionalized sorbent.

## Claims

**1.** A functionalized sorbent comprising:

a sorbent; and
at least one functionalization ligand comprising a polyamine comprising at least one oxygen-containing unit selected from the group consisting of carbonyl units, hydroxyl units, and combinations thereof.

**2.** The functionalized sorbent of claim 1, wherein

(a) the at least one oxygen-containing unit is selected from the group consisting of primary hydroxyl units, secondary hydroxyl units, tertiary hydroxyl units, and combinations thereof; and/or
(b) the polyamine comprises at least one amine selected from the group consisting of primary amines, secondary amines, tertiary amines, and combinations thereof.

3. The functionalized sorbent of any preceding claim, wherein the polyamine comprises at least one amine selected from the group consisting of di-amines, tri-amines, tetra-amines, penta-amines, hexa-amines, hepta-amines, octa-amines, and combinations thereof.

4. The functionalized sorbent of any preceding claim, wherein the sorbent comprises a metal-organic framework (MOF).

5. The functionalized sorbent of any preceding claim, wherein the sorbent comprises a mesoporous oxide support.

6. The functionalized sorbent of any preceding claim, comprising at least one functionalization ligand not comprising a polyamine comprising at least one oxygen-containing unit.

7. The functionalized sorbent of any preceding claim, wherein the sorbent

(a) has an aspect ratio of $\geq 0.2$; and/or
(b) the sorbent has an average particle length $\leq 3\ \mu m$.

8. The functionalized sorbent of any preceding claim, wherein

(a) the functionalized sorbent has a class-II, or class-III or class-IV isotherm for pure water; and/or
(b) the at least one functionalization ligand comprising a polyamine comprising at least one oxygen-containing unit selected from the group consisting of carbonyl units, hydroxyl units, and combinations thereof has a LogP of -1.0 or greater; and/or
(c) the sorbent is in a form selected from the group consisting of powders, pellets, composites, composites mixed with binders, films, coatings, packed beds, columns, monoliths, and combinations thereof.

9. A sorbent system comprising the functionalized sorbent of any of claims 1 to 8.

10. A method of making a functionalized sorbent, the method comprising:

(I) forming a mixture comprising:

a sorbent;
at least one functionalization ligand comprising a polyamine comprising at least one oxygen-containing unit selected from the group consisting of carbonyl units, hydroxyl units, and combinations thereof;
optionally at least one functionalization ligand not comprising a polyamine comprising at least one oxygen-containing unit selected from the group consisting of carbonyl units, hydroxyl units, and combinations thereof;
optionally a solvent; and
optionally a non-solvent; and

(II) functionalizing the sorbent.

11. A method of modifying a functionalized sorbent, the method comprising:

(I) forming a mixture comprising:

a sorbent functionalized with at least one functionalization ligand not comprising a polyamine comprising at least one oxygen-containing unit selected from the group consisting of carbonyl units, hydroxyl units, and combinations thereof; and
a reaction agent; and

(II) reacting the reaction agent with the sorbent functionalized with at least one functionalization ligand not comprising a polyamine comprising at least one oxygen-containing unit selected from the group consisting of carbonyl units, hydroxyl units, and combinations thereof to produce a sorbent functionalized with at least one functionalization ligand comprising a polyamine comprising at least one oxygen-containing unit selected from the group consisting of carbonyl units, hydroxyl units, and combinations thereof.

12. The method of claim 11, wherein the reaction agent comprises at least one functional group selected from the group

consisting of epoxide groups, epoxide groups comprising a fluorine atom, 3-membered ring epoxide groups, mono-epoxide groups, di-epoxide groups, oxetane groups, 4-membered ring oxetane groups, and combinations thereof.

**13.** A method of capturing at least one gas, the method comprising:

(I) receiving a gas source comprising the at least one gas at a functionalized sorbent, wherein the functionalized sorbent according to any of claims 1 to 8; and
(II) capturing an amount of the at least one gas with the functionalized sorbent.

**14.** The method of claim 13, wherein

(a) the gas source is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof; and/or
(b) the at least one gas is selected from the group consisting of air, flue gas, post-combustion gas, natural gas, syngas, carbon dioxide, carbon monoxide, water vapor, hydrogen, nitrogen, oxygen, methane, olefin gases, nitrogen oxides, sulfur dioxide, ammonia, hydrogen sulfide, and combinations thereof.

**15.** A method of collecting at least one gas from a gas source, the method comprising:

capturing the at least one gas according to the method of claim 14(a), and
(III) releasing the at least one gas from the functionalized sorbent.

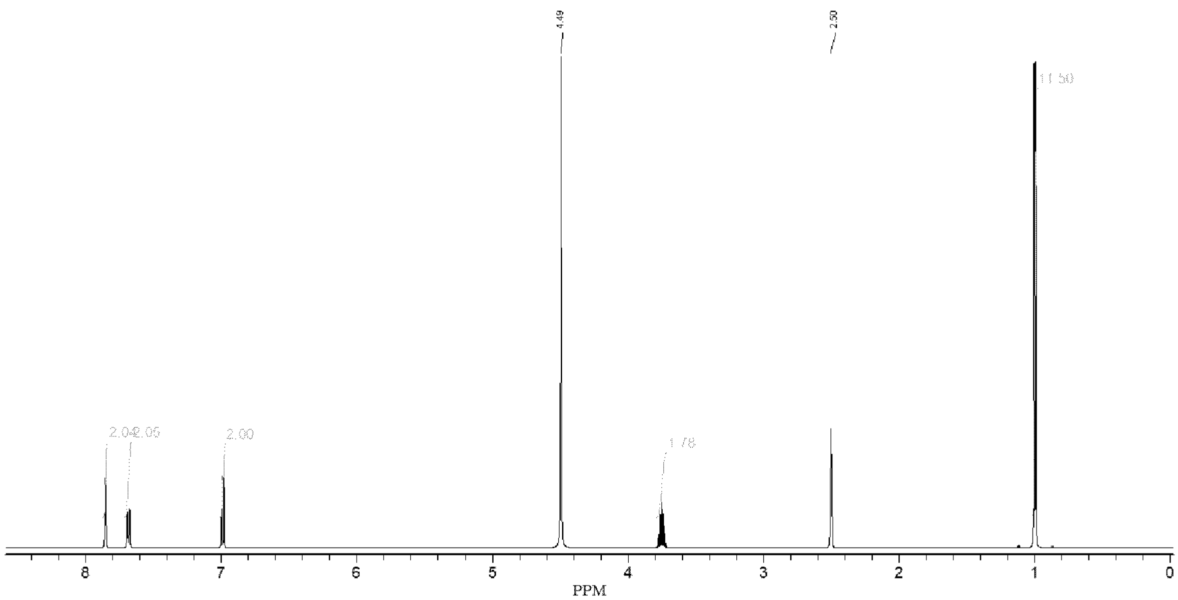


FIG. 1

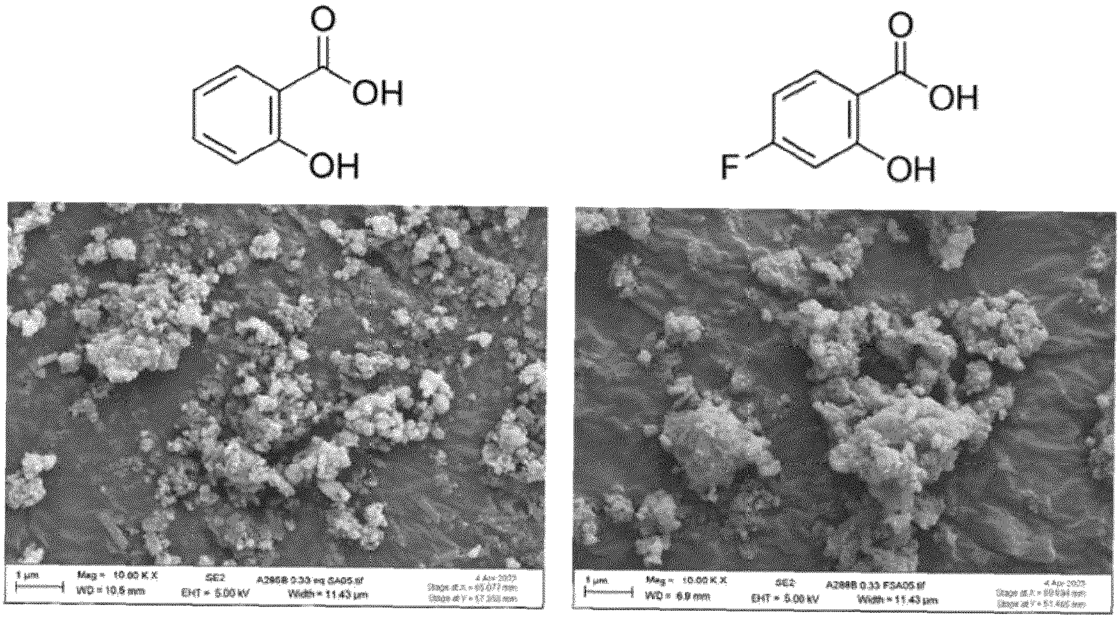
1 µm
Mag = 10.00 K X
WD = 10.5 mm
SE2
EHT = 5.00 kV
Width = 11.43 µm
1 µm
Mag = 10.00 K X
WD = 6.9 mm
SE2
EHT = 5.00 kV
Width = 11.43 µm

FIG. 2

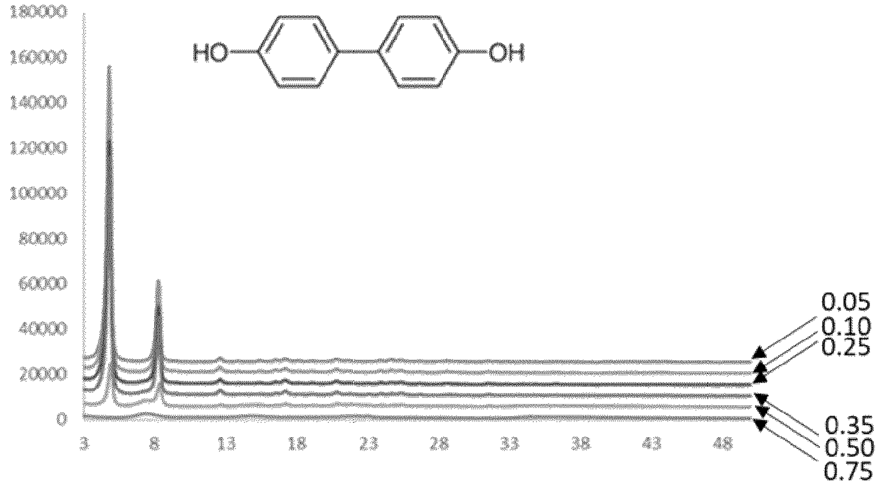
180000
160000
140000
120000
100000
80000
60000
40000
20000
0
3
8
13
18
23
28
33
38
43
48
0.05
0.10
0.25
0.35
0.50
0.75

FIG. 3

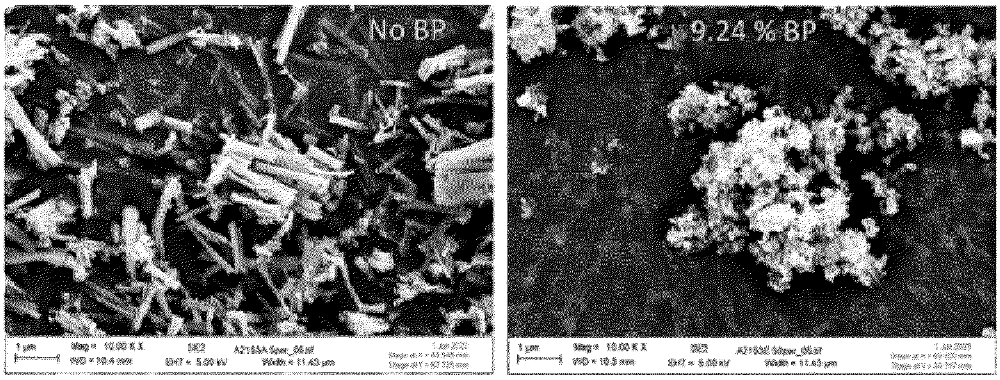


FIG. 4

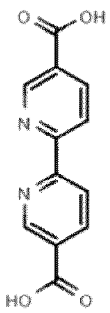

bpydc

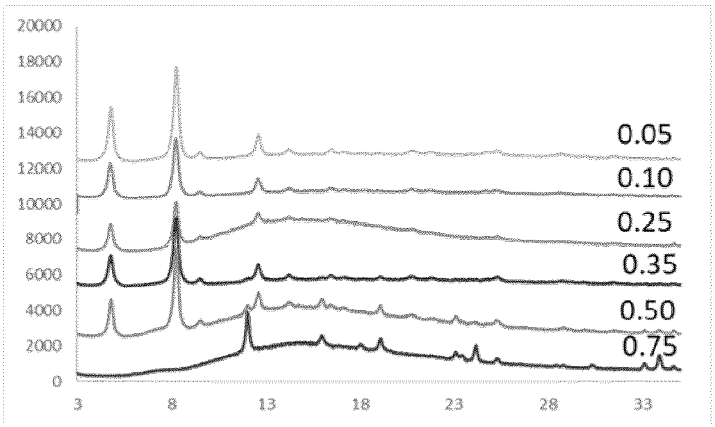
20000
18000
16000
14000
12000
10000
8000
6000
4000
2000
0
3
8
13
18
23
28
33
0.05
0.10
0.25
0.35
0.50
0.75

FIG. 5

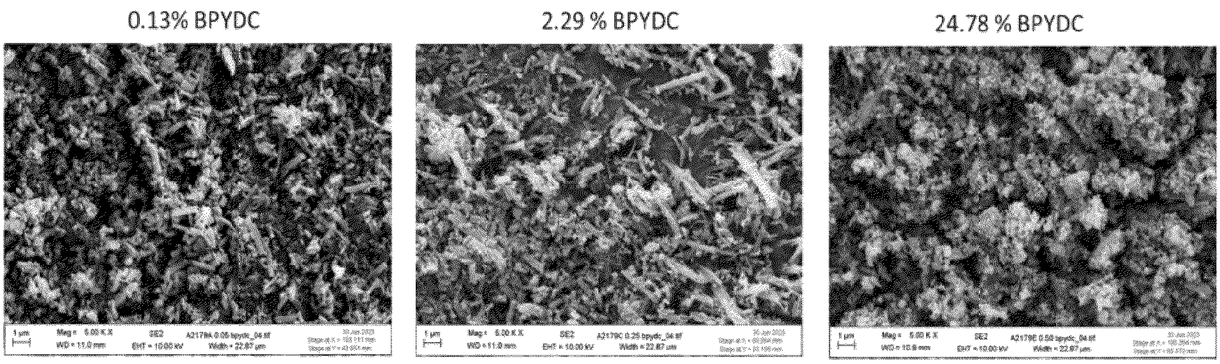


FIG. 6

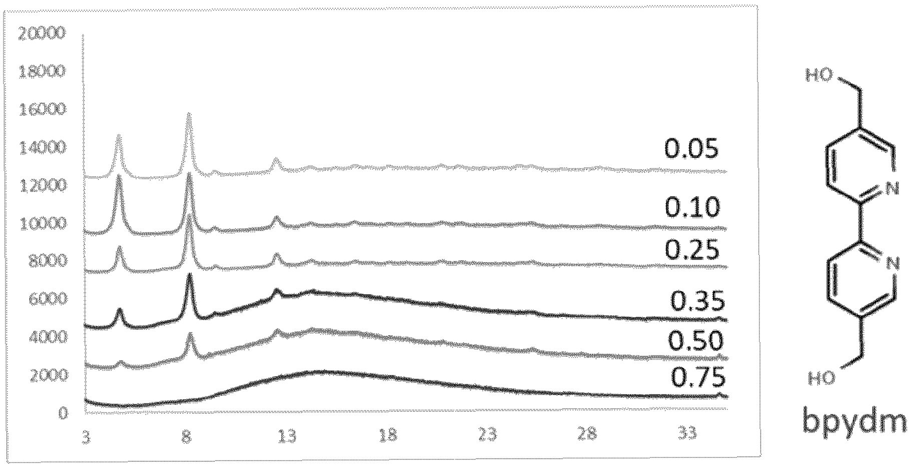
20000
18000
16000
14000
12000
10000
8000
6000
4000
2000
0
3
8
13
18
23
28
33
0.05
0.10
0.25
0.35
0.50
0.75
bpydm

FIG. 7

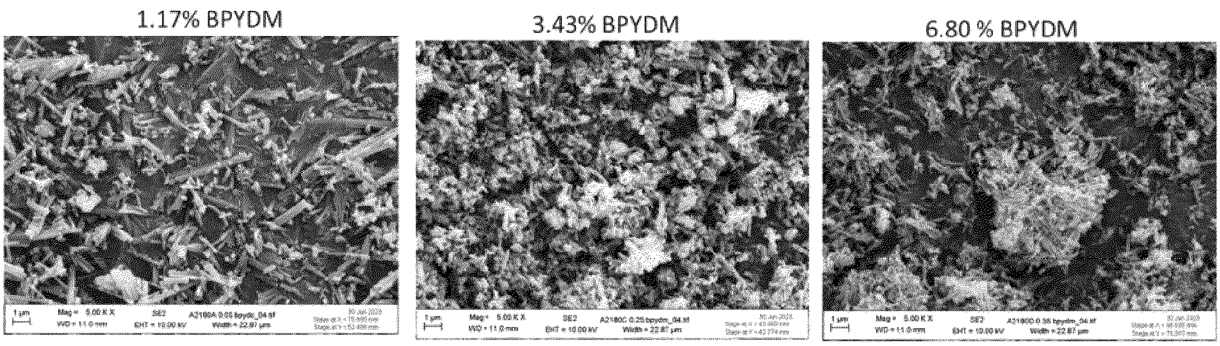


FIG. 8

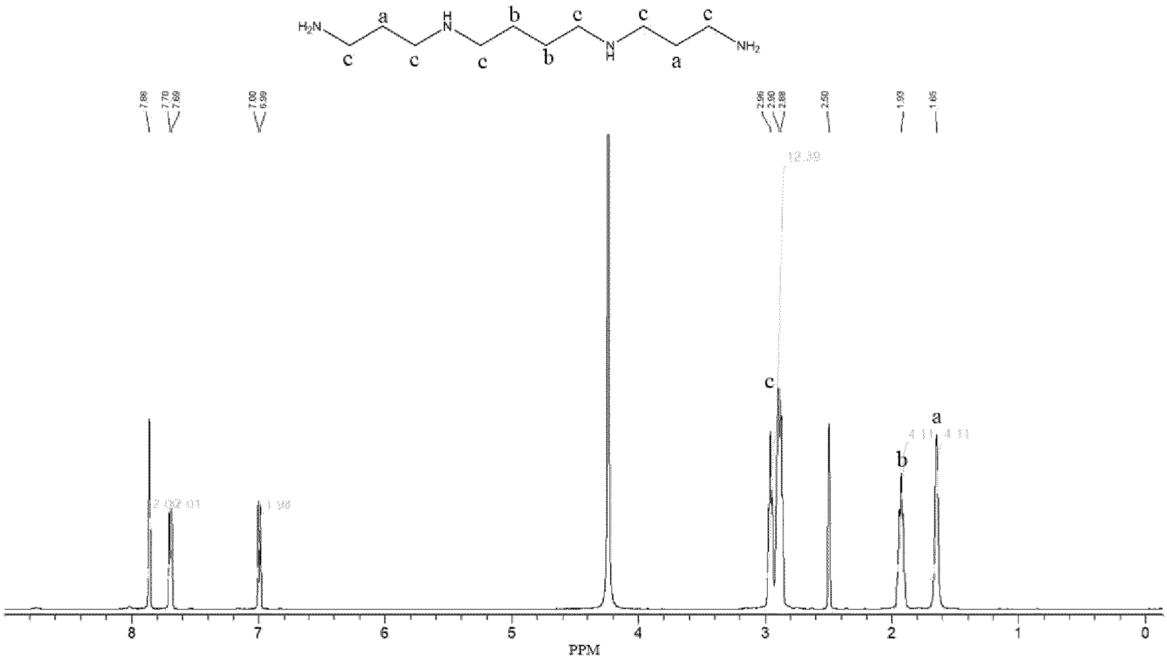


FIG. 9

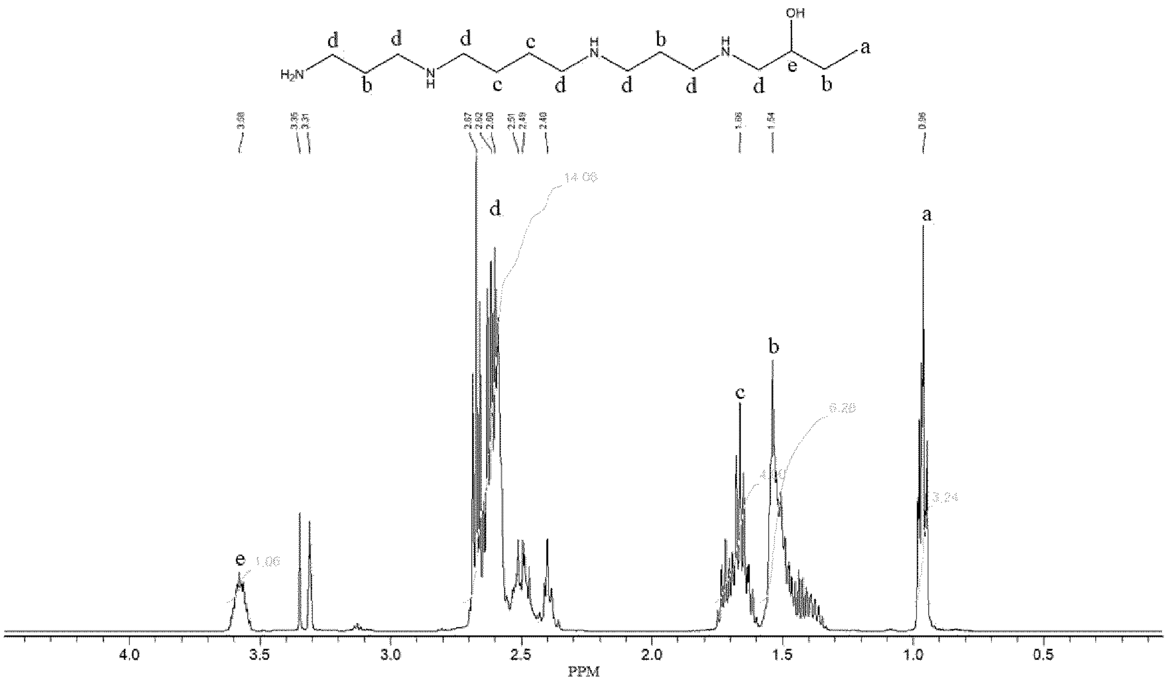


FIG. 10

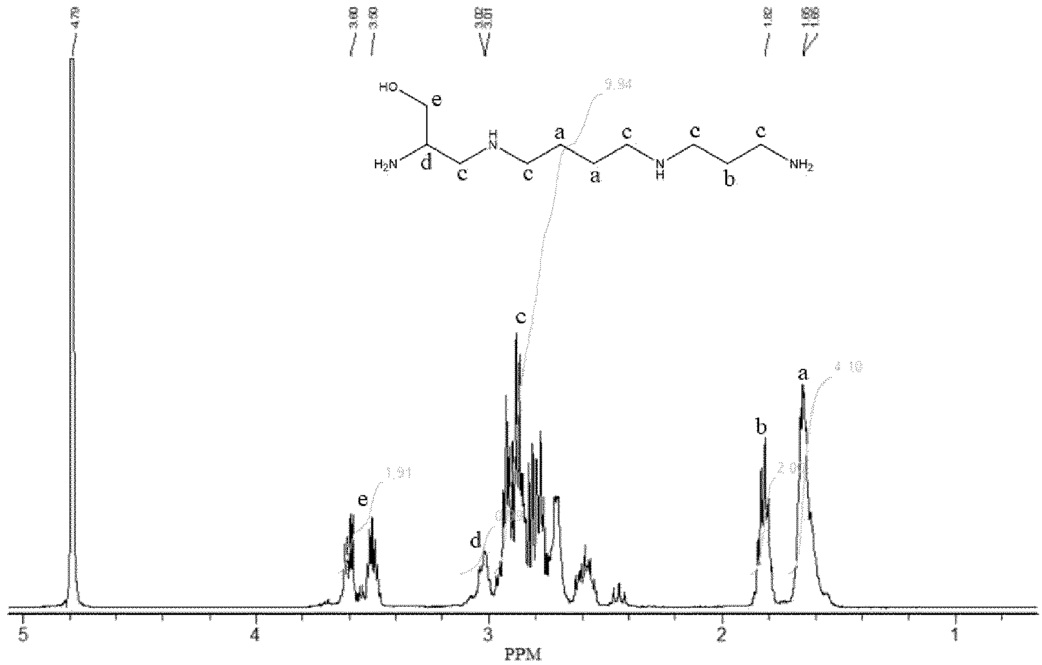

FIG. 11

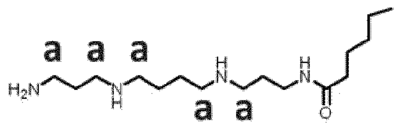

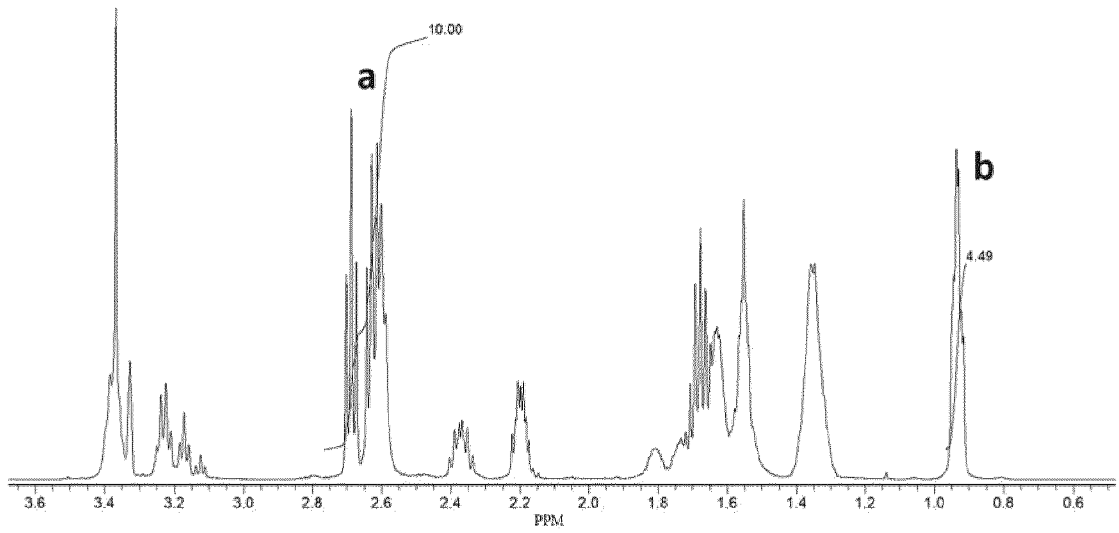


FIG. 12

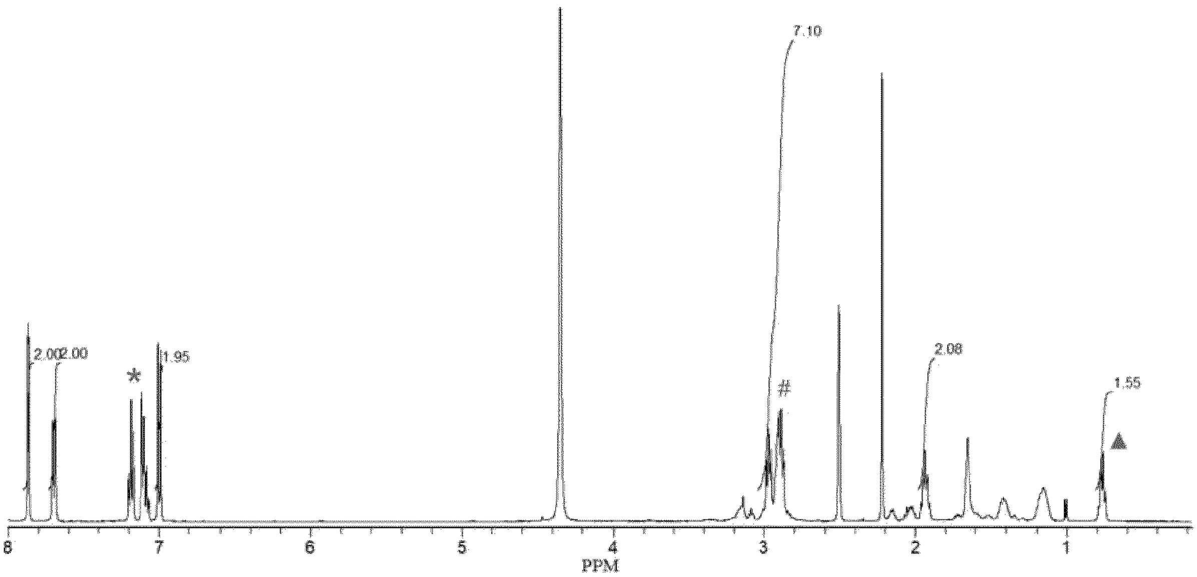


FIG. 13

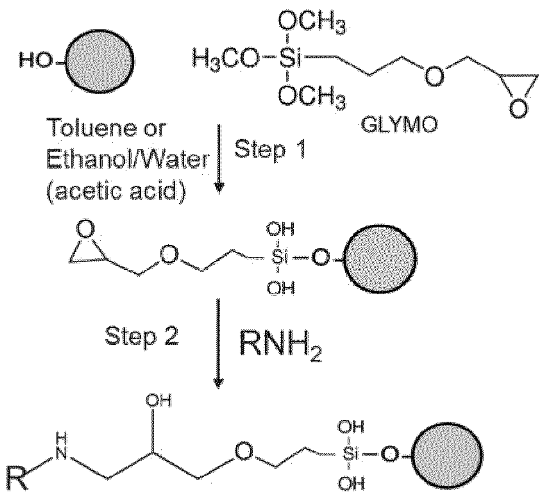
Toluene or
Ethanol/Water
(acetic acid)
Step 1
GLYMO
Step 2
$RNH_2$

FIG. 14

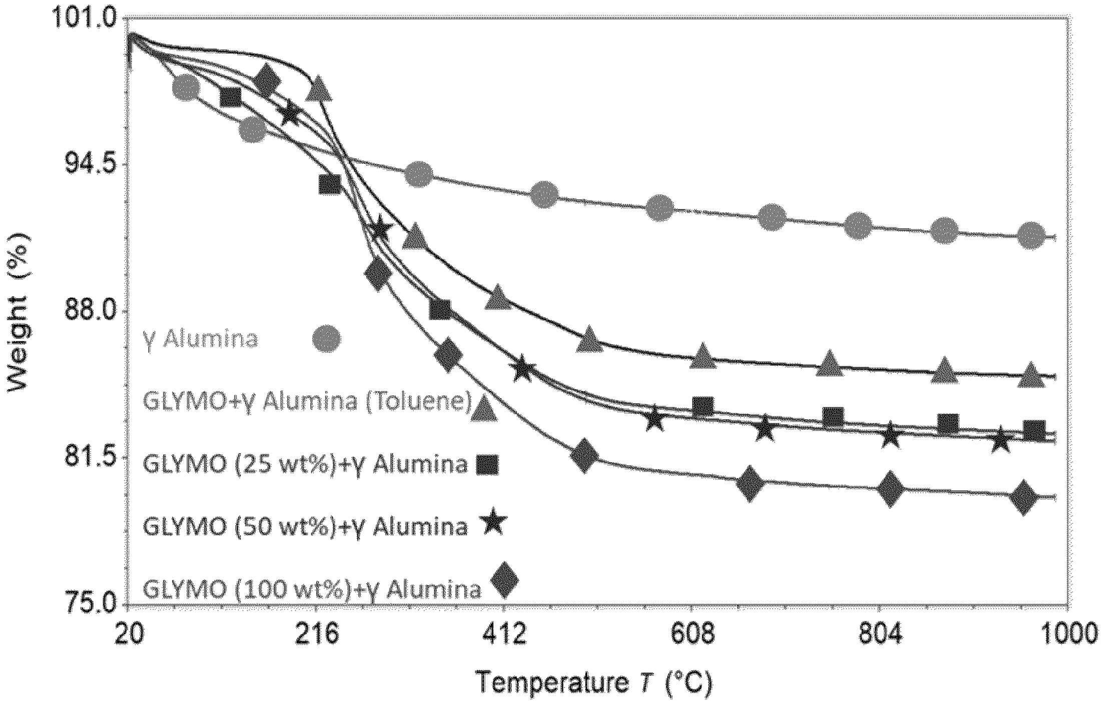
101.0
94.5
88.0
81.5
75.0
Weight (%)
20
216
412
608
804
1000
Temperature T (°C)
γ Alumina
GLYMO+γ Alumina (Toluene)
GLYMO (25 wt%)+γ Alumina
GLYMO (50 wt%)+γ Alumina
GLYMO (100 wt%)+γ Alumina

FIG. 15

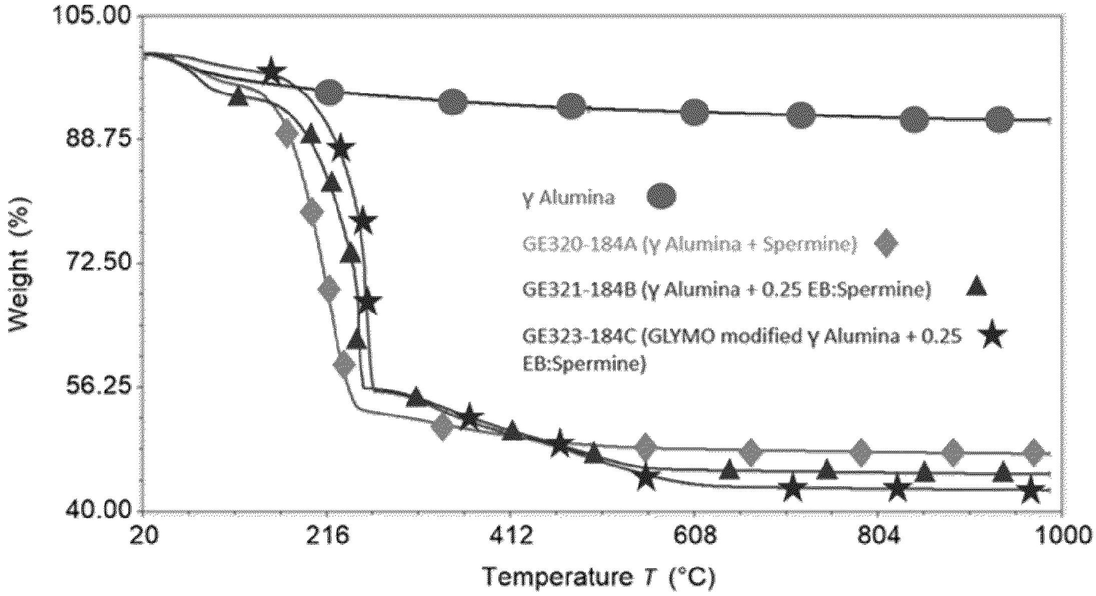
105.00
88.75
72.50
56.25
40.00
Weight (%)
20
216
412
608
804
1000
Temperature T (°C)
γ Alumina
GE320-184A (γ Alumina + Spermine)
GE321-184B (γ Alumina + 0.25 EB:Spermine)
GE323-184C (GLYMO modified γ Alumina + 0.25 EB:Spermine)

FIG. 16

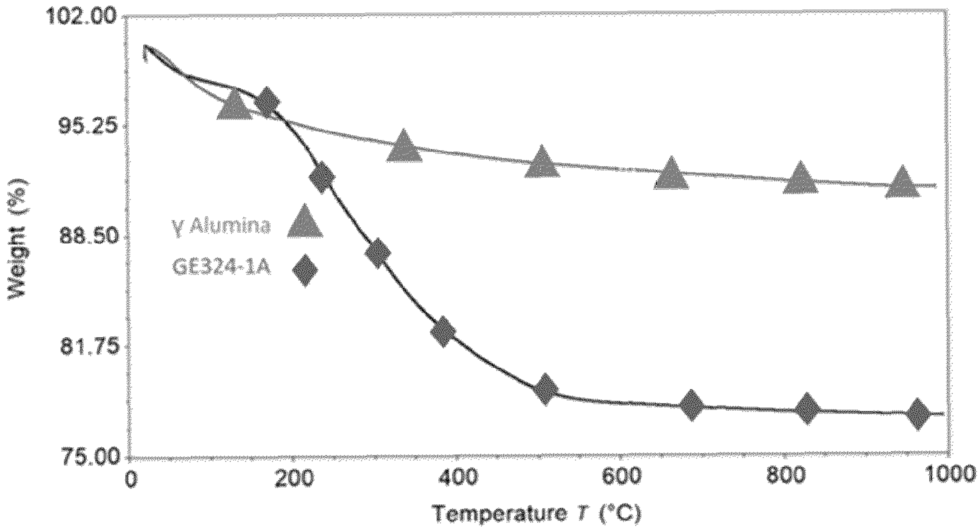
102.00
95.25
88.50
81.75
75.00
Weight (%)
γ Alumina
GE324-1A
0
200
400
600
800
1000
Temperature T (°C)

FIG. 17

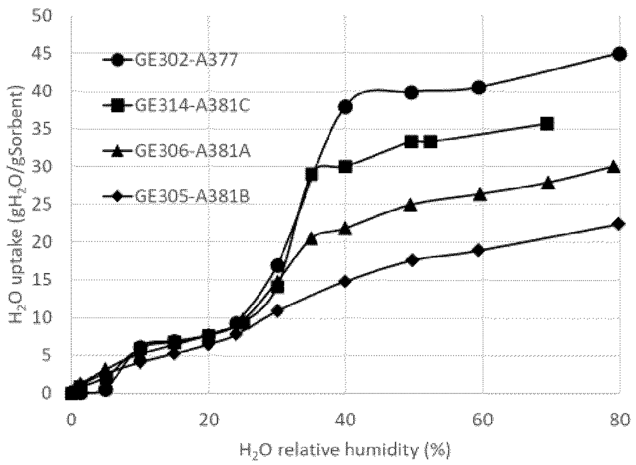
50
45
40
35
30
25
20
15
10
5
0
GE302-A377
GE314-A381C
GE306-A381A
GE305-A381B
$H_2O$ uptake ($gH_2O$/gSorbent)
0
20
40
60
80
$H_2O$ relative humidity (%)

FIG. 18

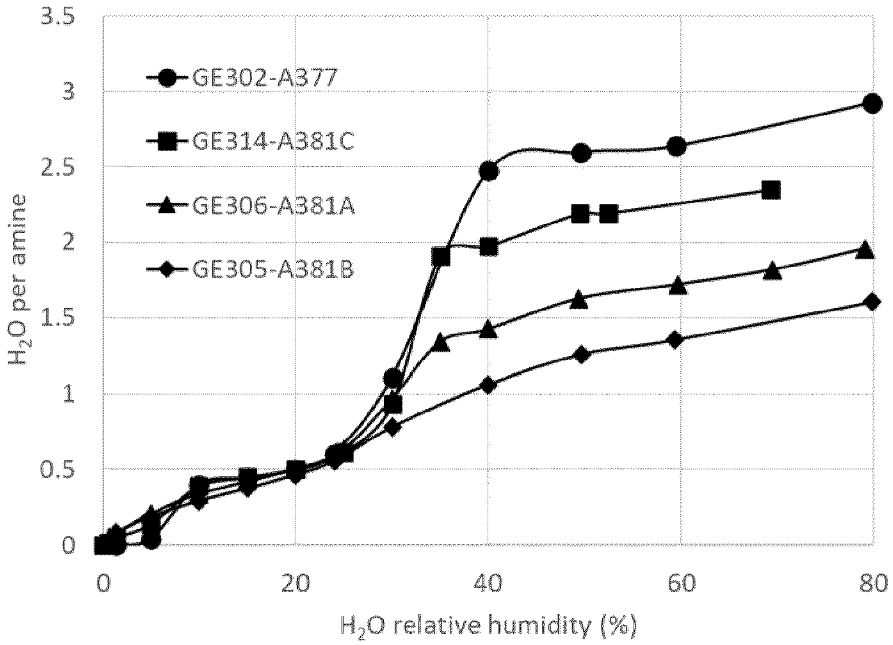
GE302-A377
GE314-A381C
GE306-A381A
GE305-A381B
3.5
3
2.5
2
1.5
1
0.5
0
$H_2O$ per amine
0
20
40
60
80
$H_2O$ relative humidity (%)

FIG. 19

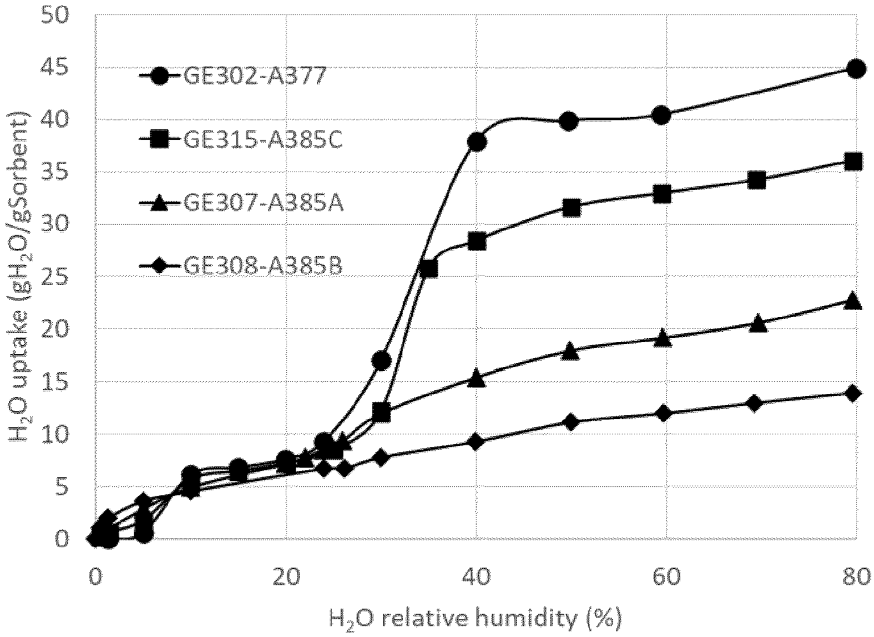
50
45
40
35
30
25
20
15
10
5
0
GE302-A377
GE315-A385C
GE307-A385A
GE308-A385B
$H_2O$ uptake ($gH_2O/gSorbent$)
0
20
40
60
80
$H_2O$ relative humidity (%)

FIG. 20

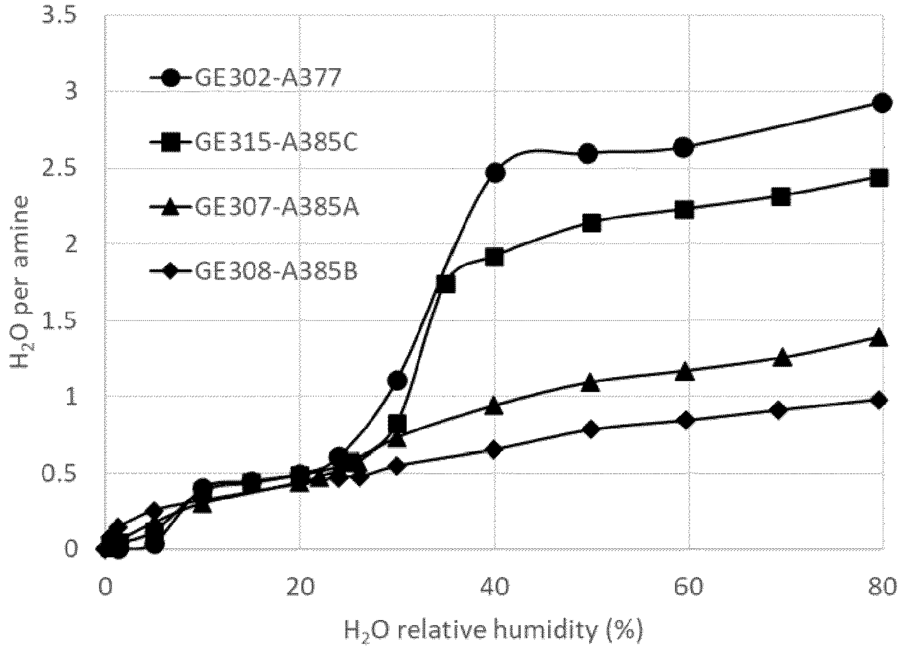
3.5
3
2.5
2
1.5
1
0.5
0
0
20
40
60
80
GE302-A377
GE315-A385C
GE307-A385A
GE308-A385B
H2O per amine
H2O relative humidity (%)

FIG. 21

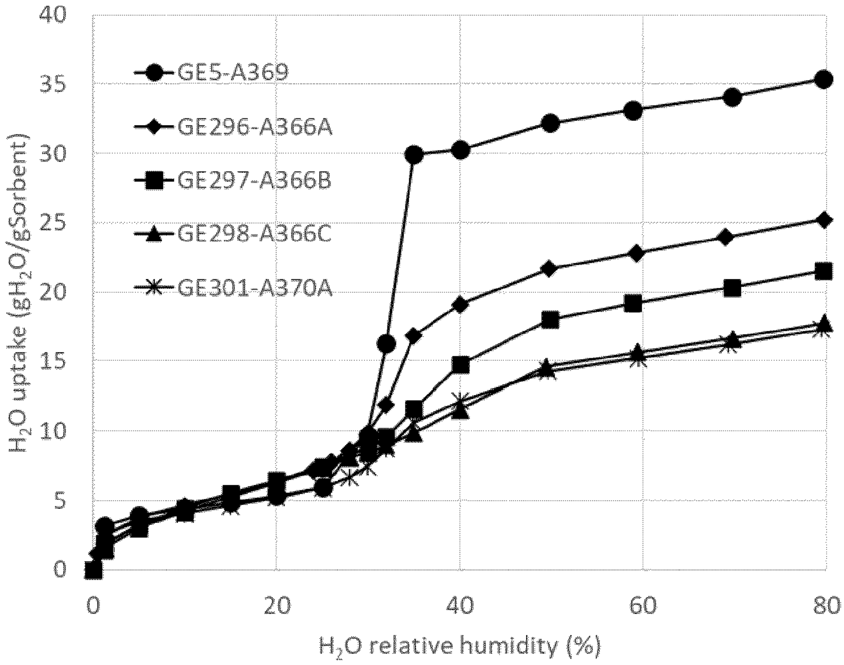
GE5-A369
GE296-A366A
GE297-A366B
GE298-A366C
GE301-A370A
H2O uptake (gH2O/gSorbent)
H2O relative humidity (%)
0
5
10
15
20
25
30
35
40
0
20
40
60
80

FIG. 22

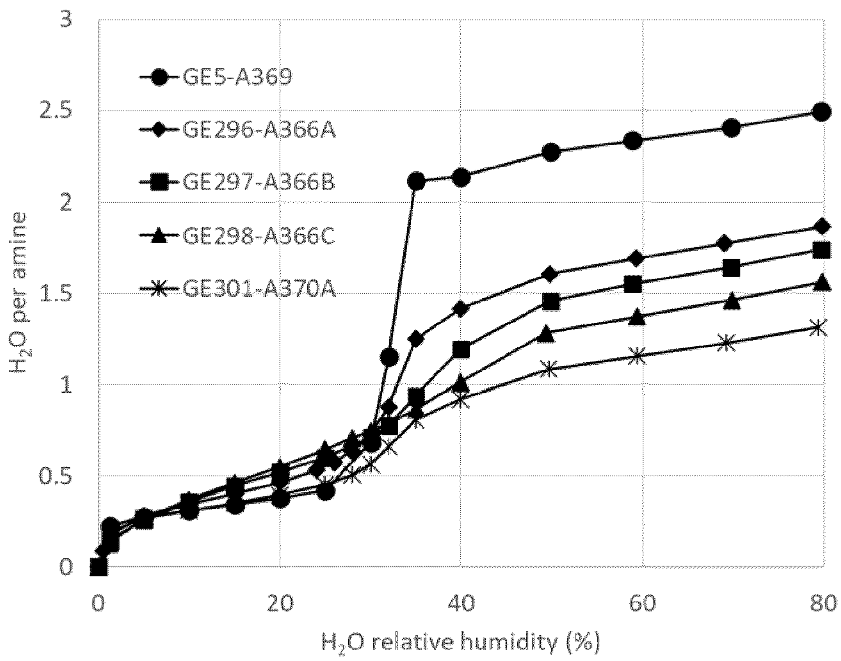
3
2.5
2
1.5
1
0.5
0
0
20
40
60
80
$H_2O$ per amine
$H_2O$ relative humidity (%)
GE5-A369
GE296-A366A
GE297-A366B
GE298-A366C
GE301-A370A

FIG. 23

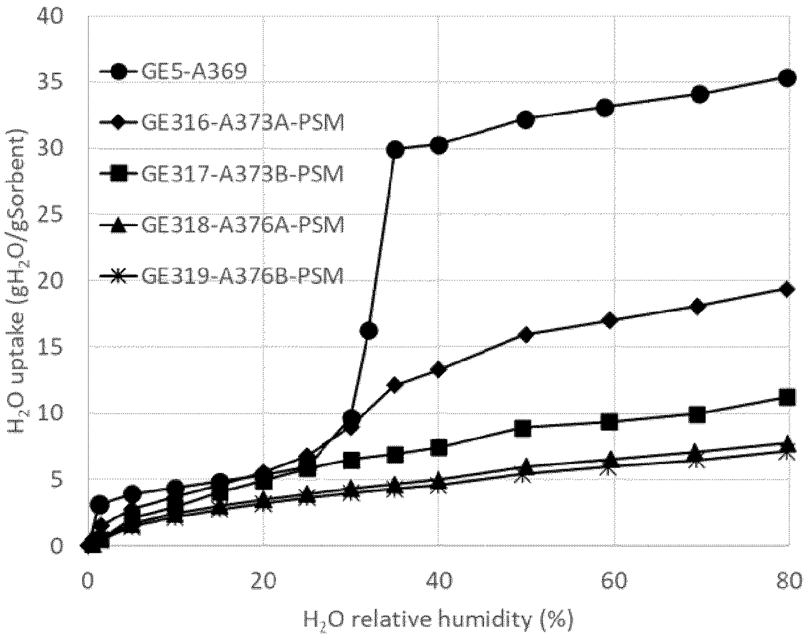
40
35
30
25
20
15
10
5
0
0
20
40
60
80
GE5-A369
GE316-A373A-PSM
GE317-A373B-PSM
GE318-A376A-PSM
GE319-A376B-PSM
H₂O uptake (gH₂O/gSorbent)
H₂O relative humidity (%)

FIG. 24

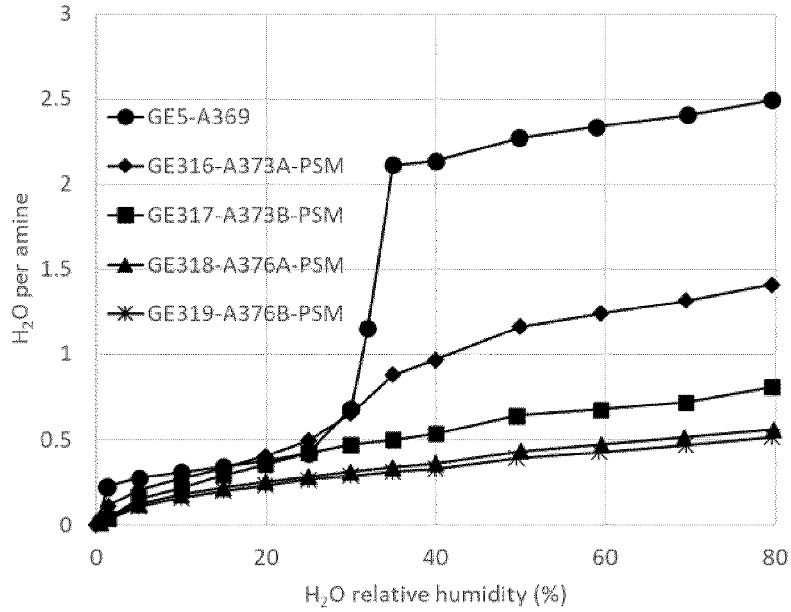

GE5-A369
GE316-A373A-PSM
GE317-A373B-PSM
GE318-A376A-PSM
GE319-A376B-PSM
$H_2O$ per amine
$H_2O$ relative humidity (%)
0
0.5
1
1.5
2
2.5
3
0
20
40
60
80


FIG. 25

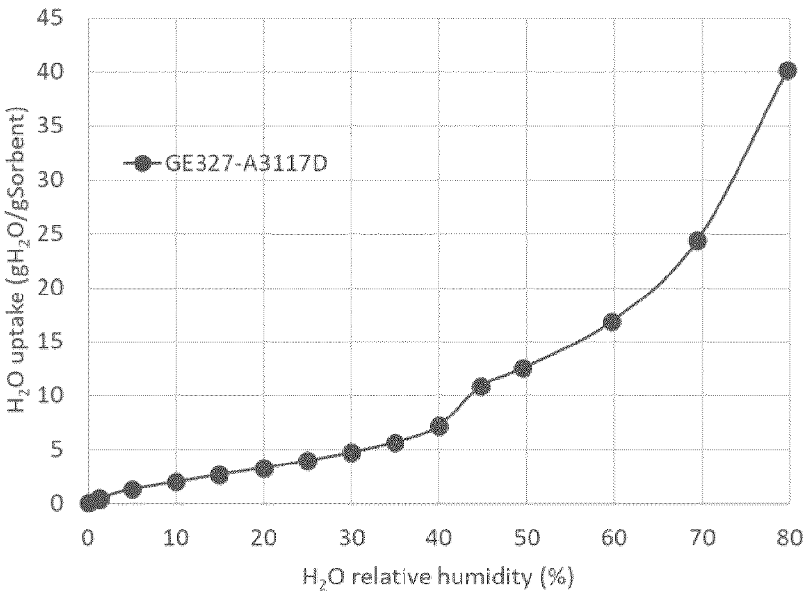
45
40
35
30
25
20
15
10
5
0
H2O uptake (gH2O/gSorbent)
GE327-A3117D
0
10
20
30
40
50
60
70
80
H2O relative humidity (%)

FIG. 26

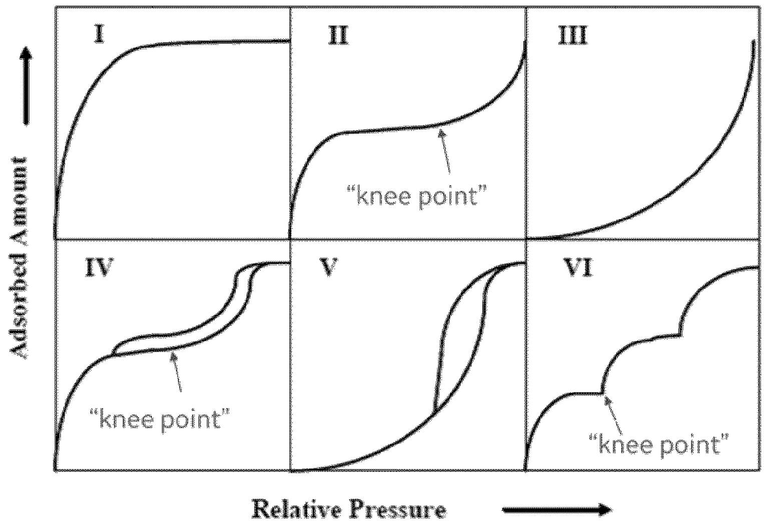
I
II
III
IV
V
VI
"knee point"
"knee point"
"knee point"
Adsorbed Amount
Relative Pressure

FIG. 27

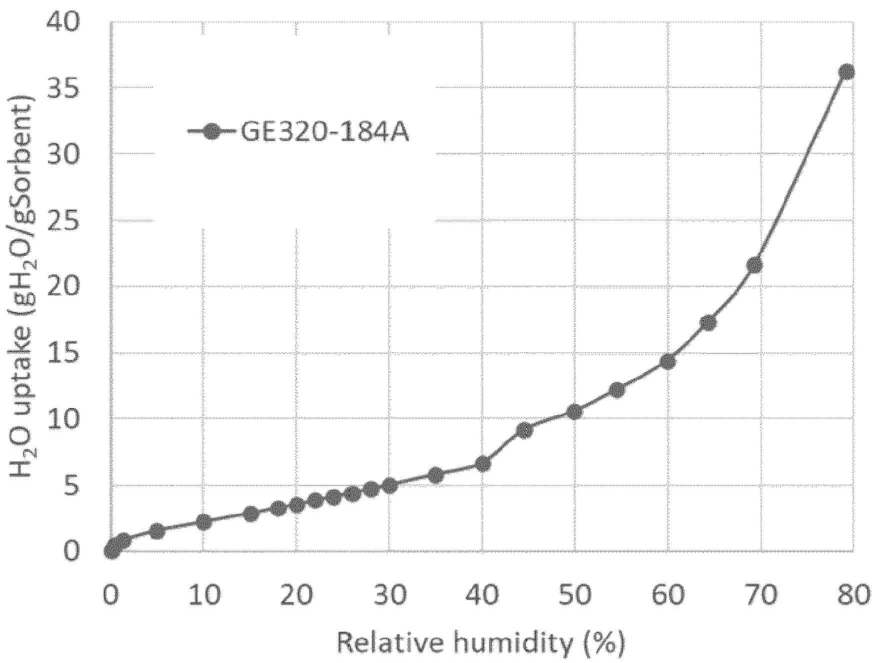

40
35
30
25
20
15
10
5
0
H2O uptake (gH2O/gSorbent)
GE320-184A
0
10
20
30
40
50
60
70
80
Relative humidity (%)


FIG. 28

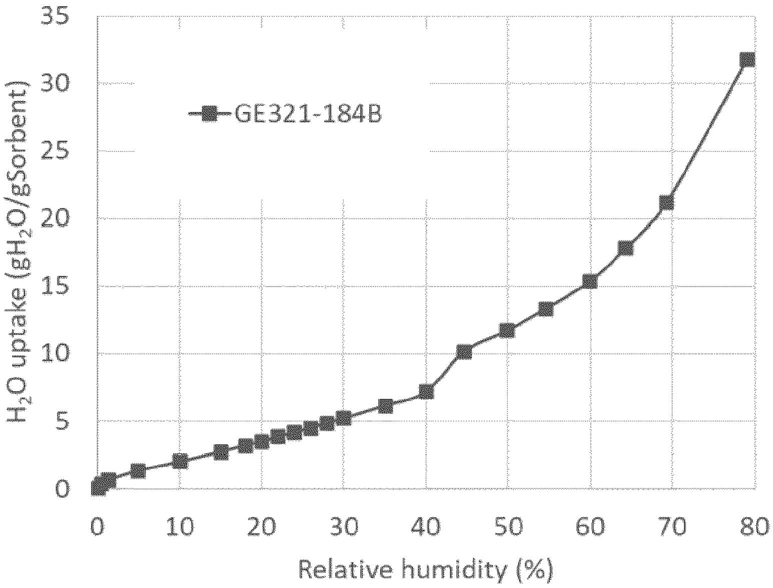
35
30
25
20
15
10
5
0
H2O uptake (gH2O/gSorbent)
GE321-184B
0
10
20
30
40
50
60
70
80
Relative humidity (%)

FIG. 29

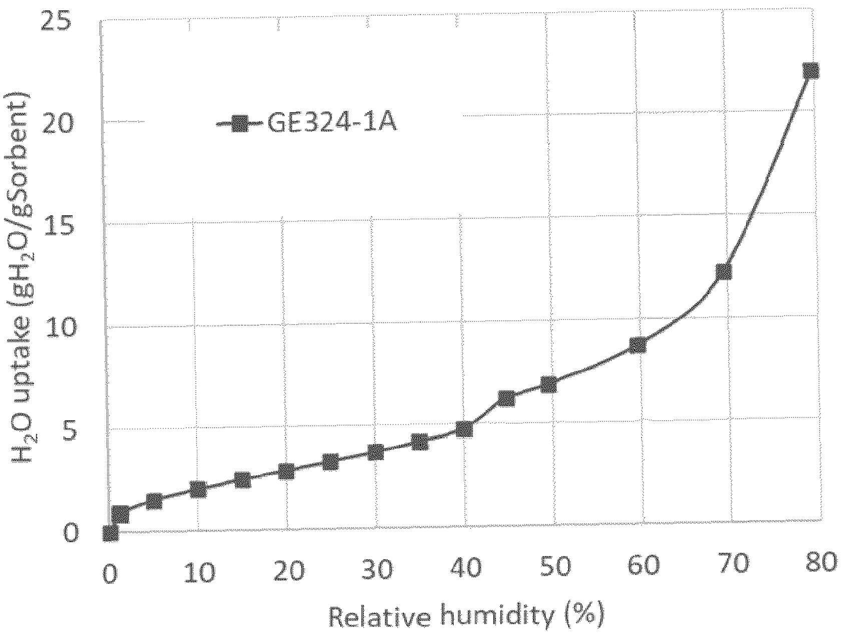
25
20
15
10
5
0
H2O uptake (gH2O/gSorbent)
GE324-1A
0
10
20
30
40
50
60
70
80
Relative humidity (%)

FIG. 30

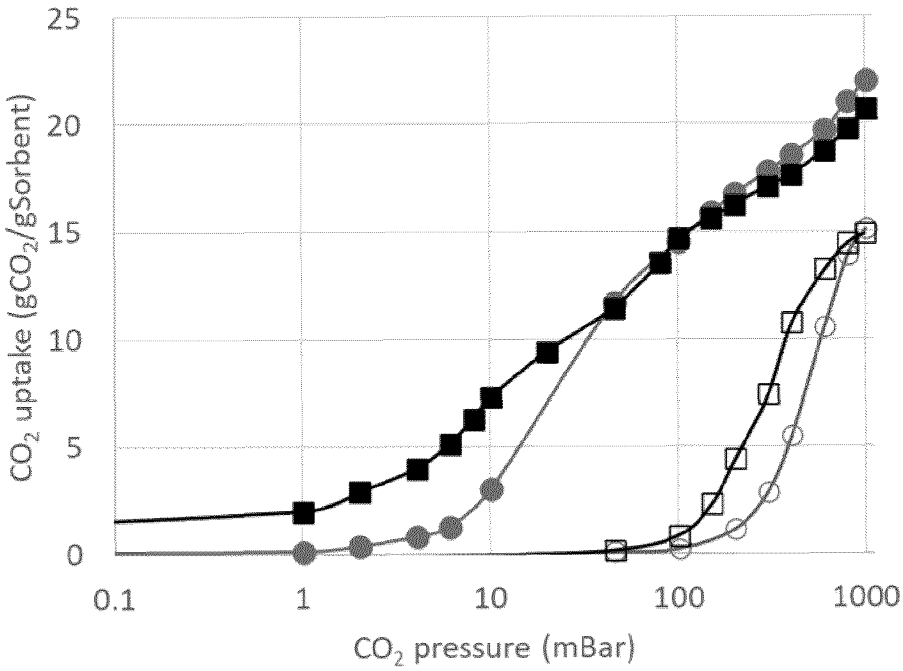
25
20
15
10
5
0
0.1
1
10
100
1000
$CO_2$ uptake ($gCO_2$/gSorbent)
$CO_2$ pressure (mBar)

FIG. 31

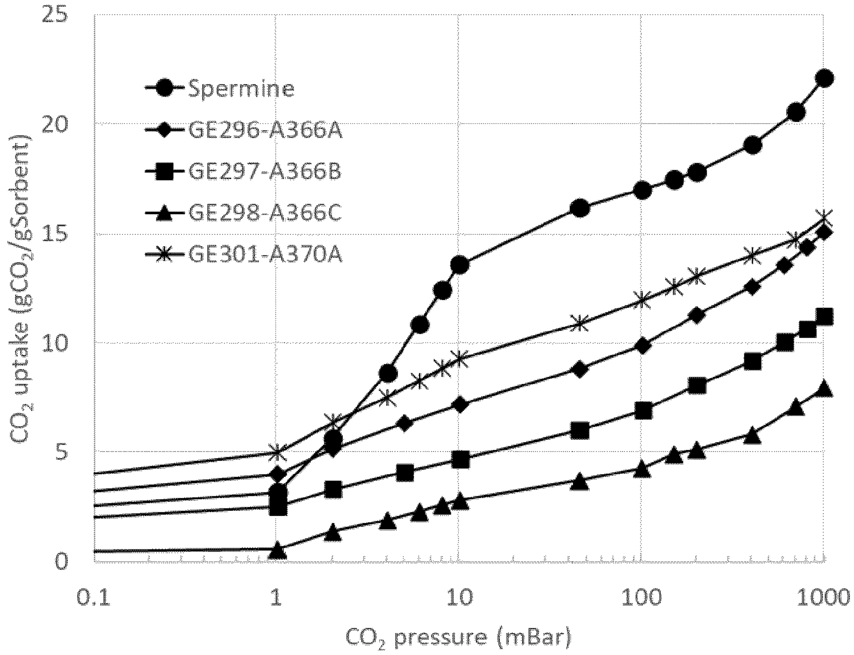
Spermine
GE296-A366A
GE297-A366B
GE298-A366C
GE301-A370A
CO2 uptake (gCO2/gSorbent)
CO2 pressure (mBar)
0
5
10
15
20
25
0.1
1
10
100
1000

FIG. 32

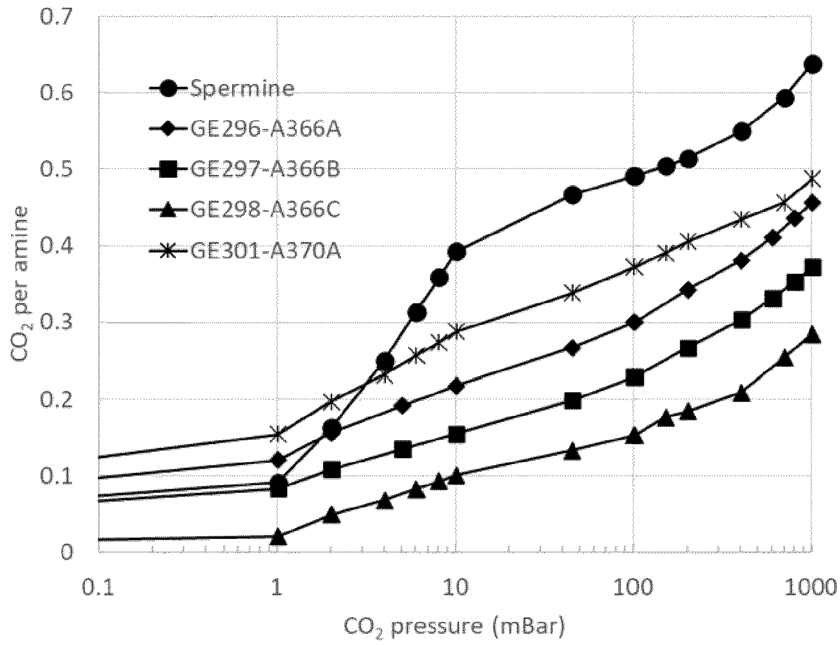

0.7
0.6
0.5
0.4
0.3
0.2
0.1
0
0.1
1
10
100
1000
Spermine
GE296-A366A
GE297-A366B
GE298-A366C
GE301-A370A
CO2 per amine
CO2 pressure (mBar)


FIG. 33

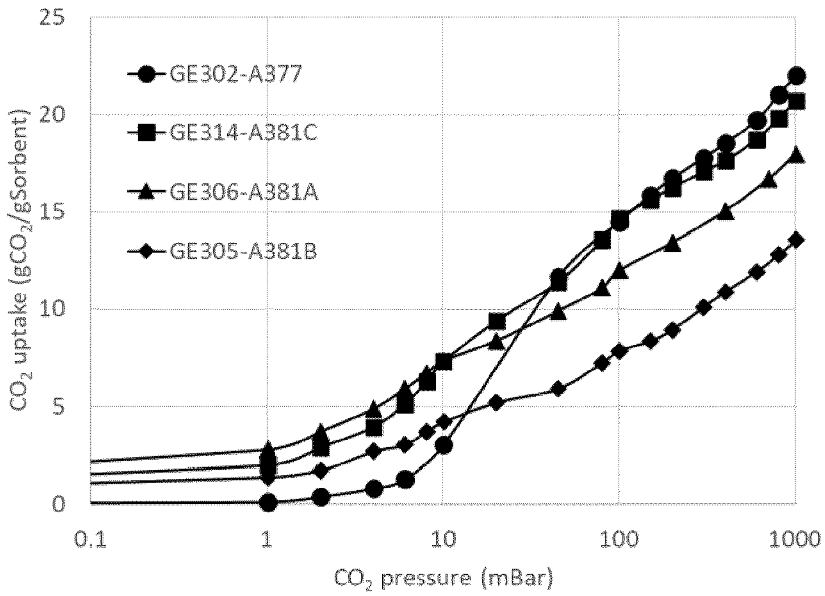
25
20
15
10
5
0
0.1
1
10
100
1000
GE302-A377
GE314-A381C
GE306-A381A
GE305-A381B
CO2 uptake (gCO2/gSorbent)
CO2 pressure (mBar)

FIG. 34

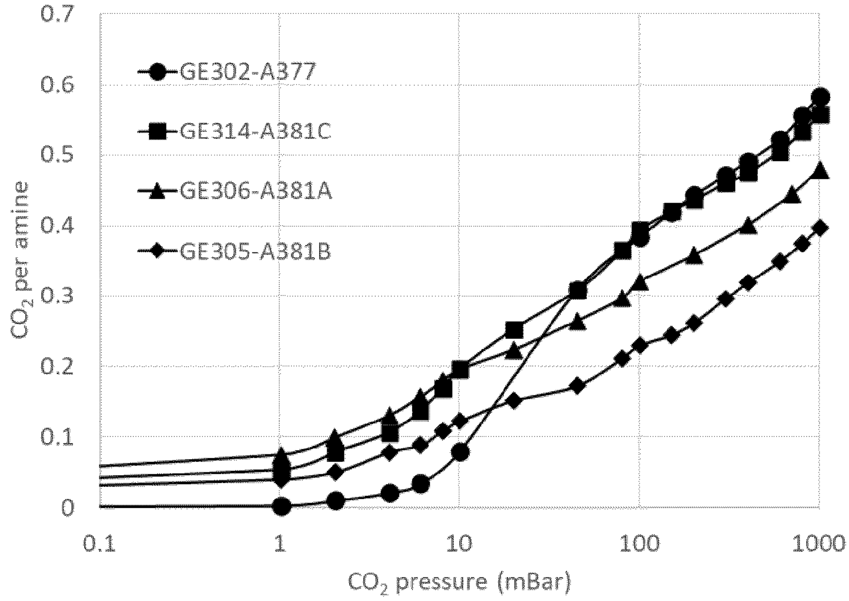
0.7
0.6
0.5
0.4
0.3
0.2
0.1
0
0.1
1
10
100
1000
GE302-A377
GE314-A381C
GE306-A381A
GE305-A381B
CO2 per amine
CO2 pressure (mBar)

FIG. 35

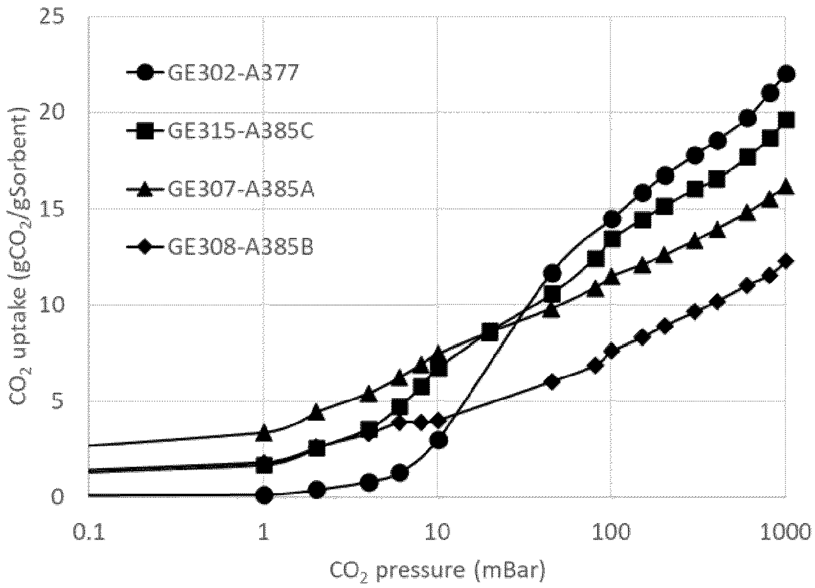
GE302-A377
GE315-A385C
GE307-A385A
GE308-A385B
$CO_2$ uptake (g$CO_2$/gSorbent)
$CO_2$ pressure (mBar)
0
5
10
15
20
25
0.1
1
10
100
1000

FIG. 36

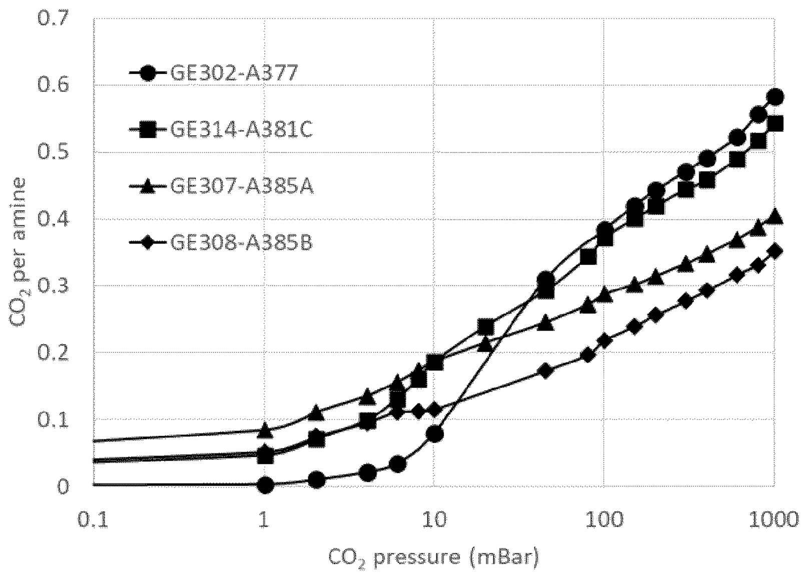
0.7
0.6
0.5
0.4
0.3
0.2
0.1
0
GE302-A377
GE314-A381C
GE307-A385A
GE308-A385B
$CO_2$ per amine
0.1
1
10
100
1000
$CO_2$ pressure (mBar)

FIG. 37

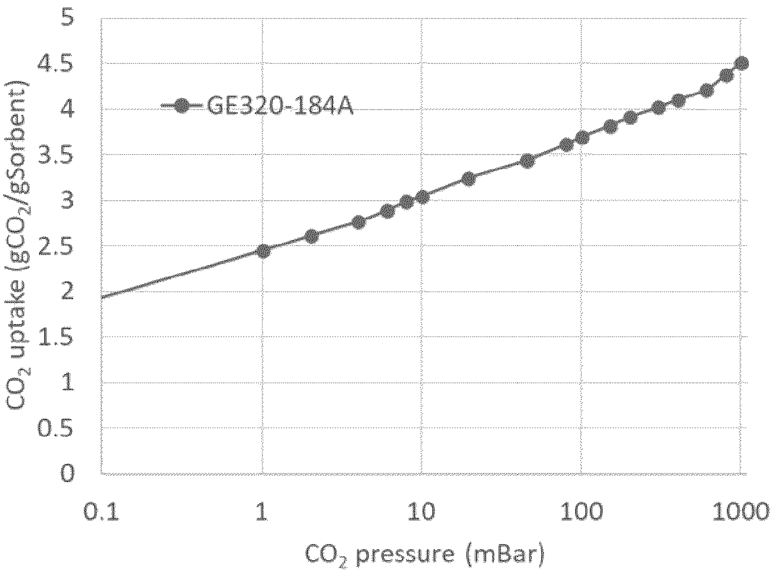
GE320-184A
CO2 uptake (gCO2/gSorbent)
0
0.5
1
1.5
2
2.5
3
3.5
4
4.5
5
0.1
1
10
100
1000
CO2 pressure (mBar)

FIG. 38

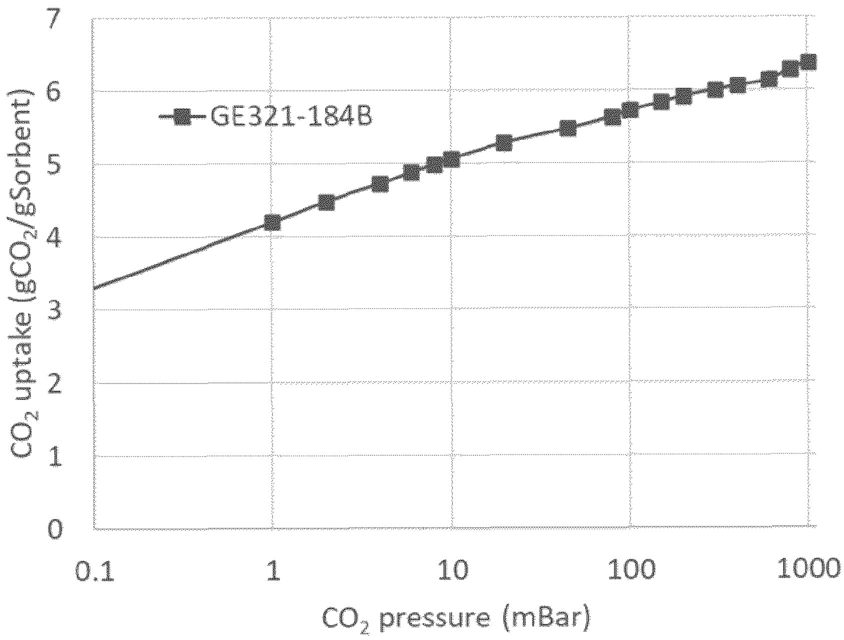
7
6
5
4
3
2
1
0
0.1
1
10
100
1000
GE321-184B
CO2 uptake (gCO2/gSorbent)
CO2 pressure (mBar)

FIG. 39

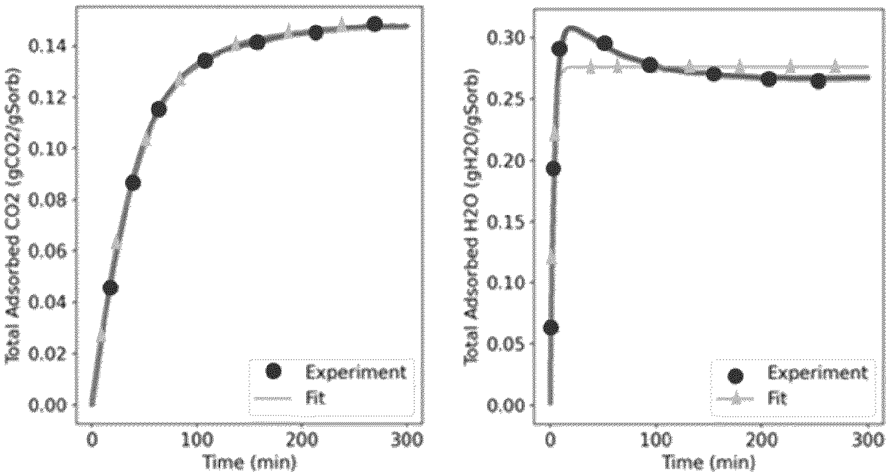

Total Adsorbed CO2 (gCO2/gSorb)
0.14
0.12
0.10
0.08
0.06
0.04
0.02
0.00
0
100
200
300
Time (min)
Experiment
Fit
Total Adsorbed H2O (gH2O/gSorb)
0.30
0.25
0.20
0.15
0.10
0.05
0.00
0
100
200
300
Time (min)
Experiment
Fit


FIG. 40

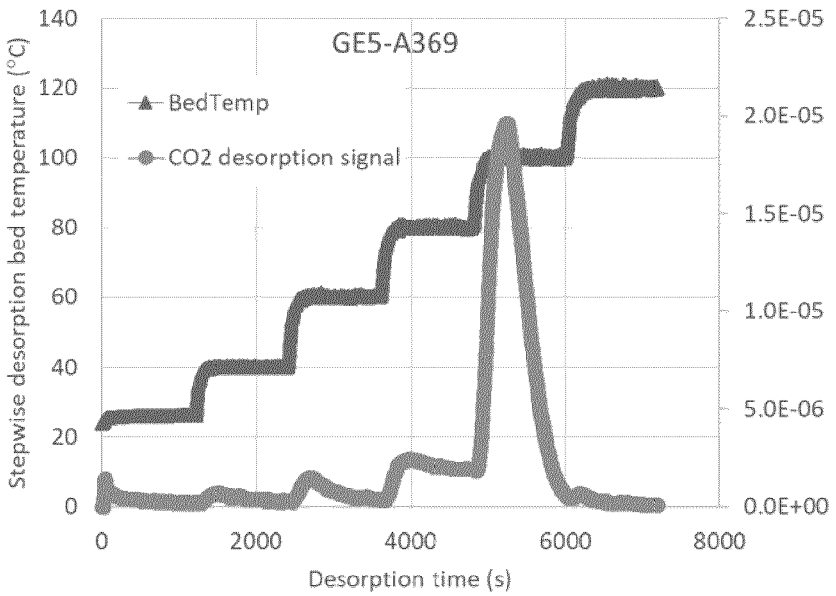
GE5-A369
BedTemp
CO2 desorption signal
Stepwise desorption bed temperature (°C)
Desorption CO2 signal (a.u.)
Desorption time (s)
140
120
100
80
60
40
20
0
2.5E-05
2.0E-05
1.5E-05
1.0E-05
5.0E-06
0.0E+00
0
2000
4000
6000
8000

FIG. 41

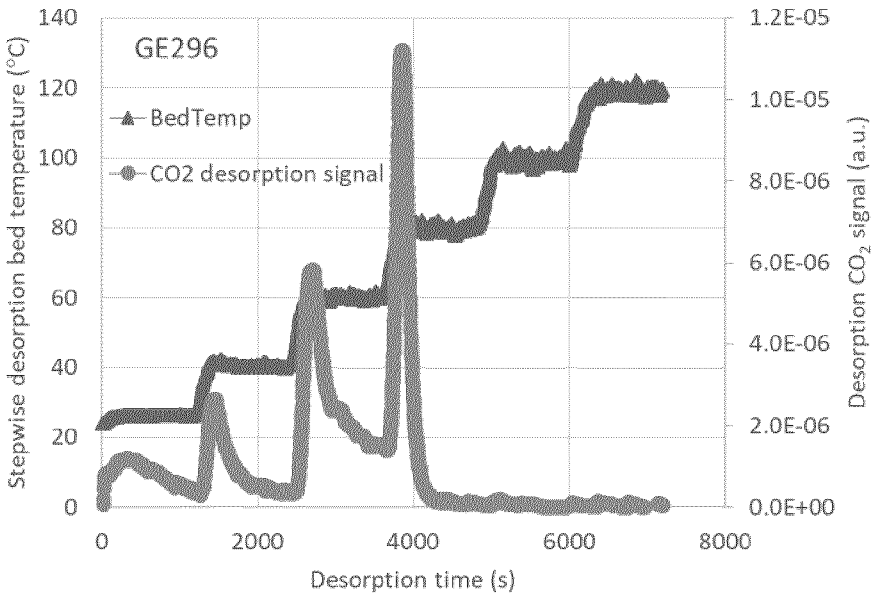
GE296
BedTemp
CO2 desorption signal
Stepwise desorption bed temperature (°C)
Desorption $CO_2$ signal (a.u.)
Desorption time (s)
0
20
40
60
80
100
120
140
0.0E+00
2.0E-06
4.0E-06
6.0E-06
8.0E-06
1.0E-05
1.2E-05
0
2000
4000
6000
8000

FIG. 42

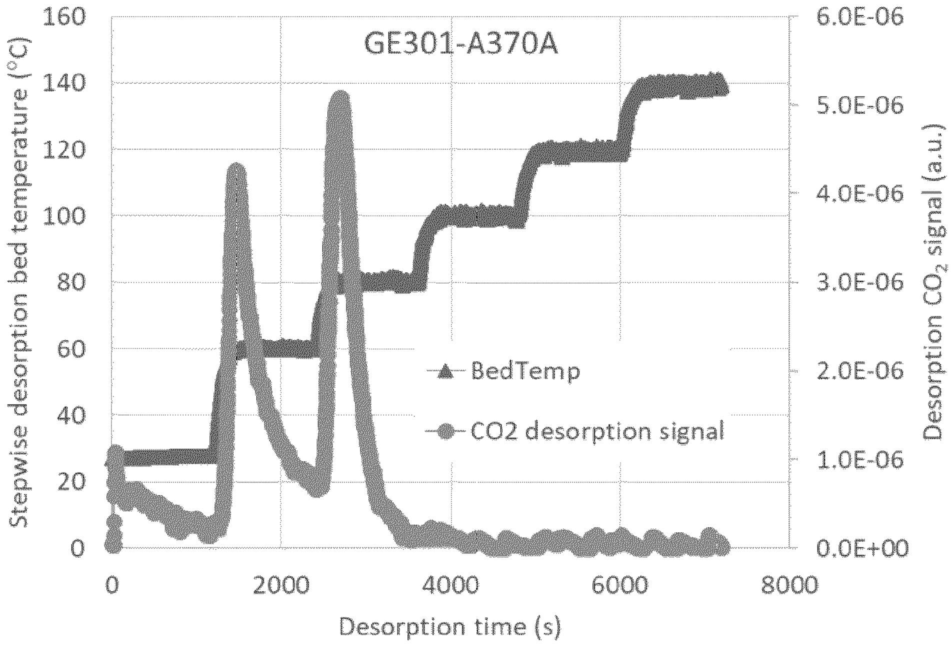
GE301-A370A
Stepwise desorption bed temperature (°C)
160
140
120
100
80
60
40
20
0
6.0E-06
5.0E-06
4.0E-06
3.0E-06
2.0E-06
1.0E-06
0.0E+00
Desorption CO2 signal (a.u.)
BedTemp
CO2 desorption signal
0
2000
4000
6000
8000
Desorption time (s)

FIG. 43

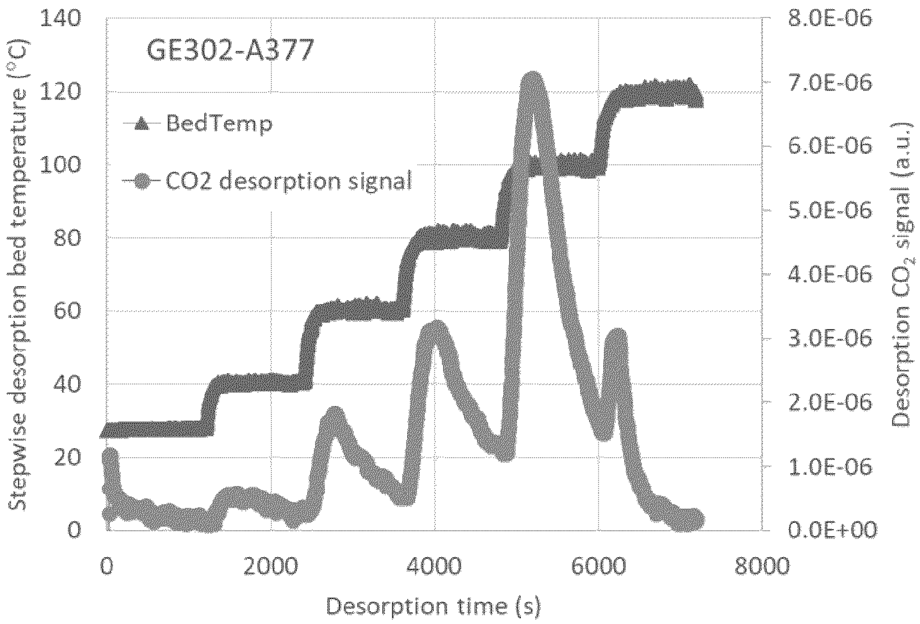
GE302-A377
BedTemp
CO2 desorption signal
Stepwise desorption bed temperature (°C)
Desorption CO2 signal (a.u.)
Desorption time (s)
140
120
100
80
60
40
20
0
8.0E-06
7.0E-06
6.0E-06
5.0E-06
4.0E-06
3.0E-06
2.0E-06
1.0E-06
0.0E+00
0
2000
4000
6000
8000

FIG. 44

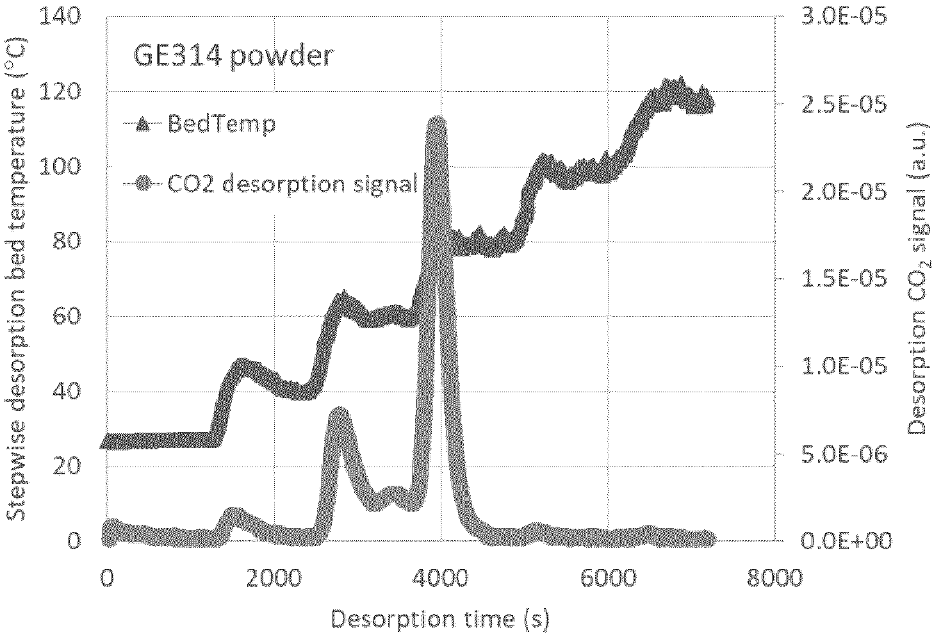
GE314 powder
BedTemp
CO2 desorption signal
Stepwise desorption bed temperature (°C)
Desorption CO2 signal (a.u.)
Desorption time (s)
0
20
40
60
80
100
120
140
0.0E+00
5.0E-06
1.0E-05
1.5E-05
2.0E-05
2.5E-05
3.0E-05
0
2000
4000
6000
8000

FIG. 45

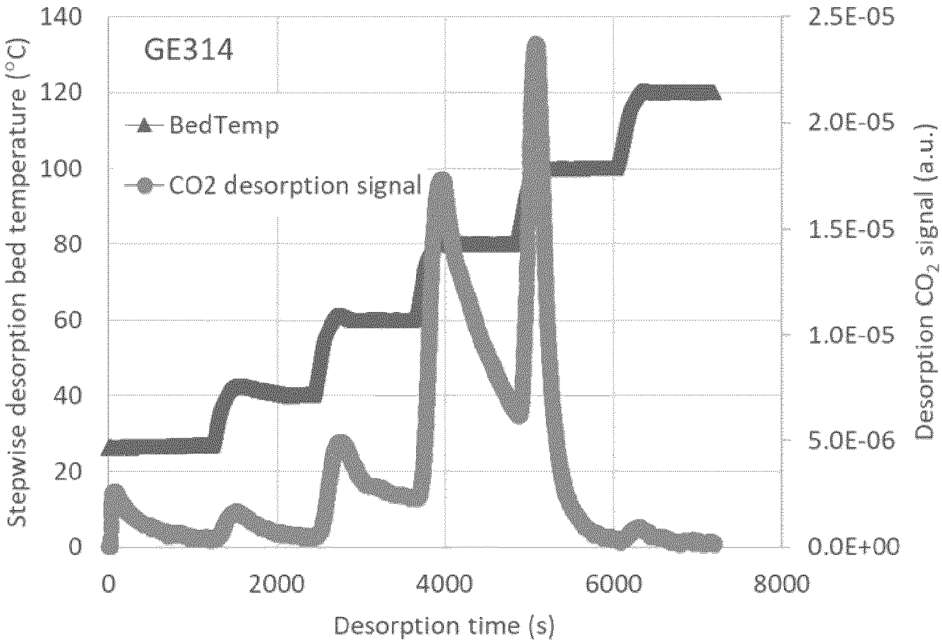
GE314
BedTemp
CO2 desorption signal
Stepwise desorption bed temperature (°C)
Desorption $CO_2$ signal (a.u.)
Desorption time (s)
140
120
100
80
60
40
20
0
2.5E-05
2.0E-05
1.5E-05
1.0E-05
5.0E-06
0.0E+00
0
2000
4000
6000
8000

FIG. 46

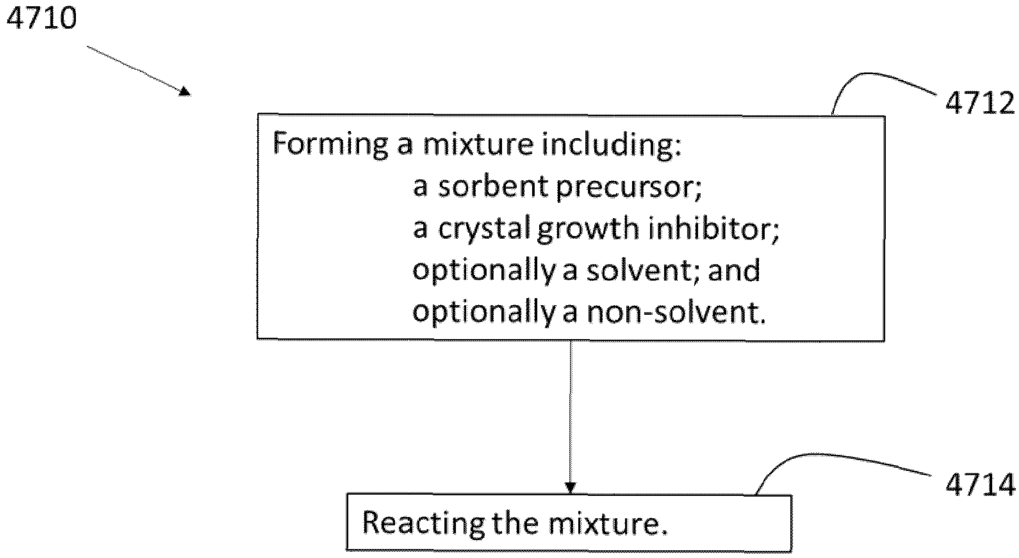
4710
4712
Forming a mixture including:
a sorbent precursor;
a crystal growth inhibitor;
optionally a solvent; and
optionally a non-solvent.
4714
Reacting the mixture.

FIG. 47

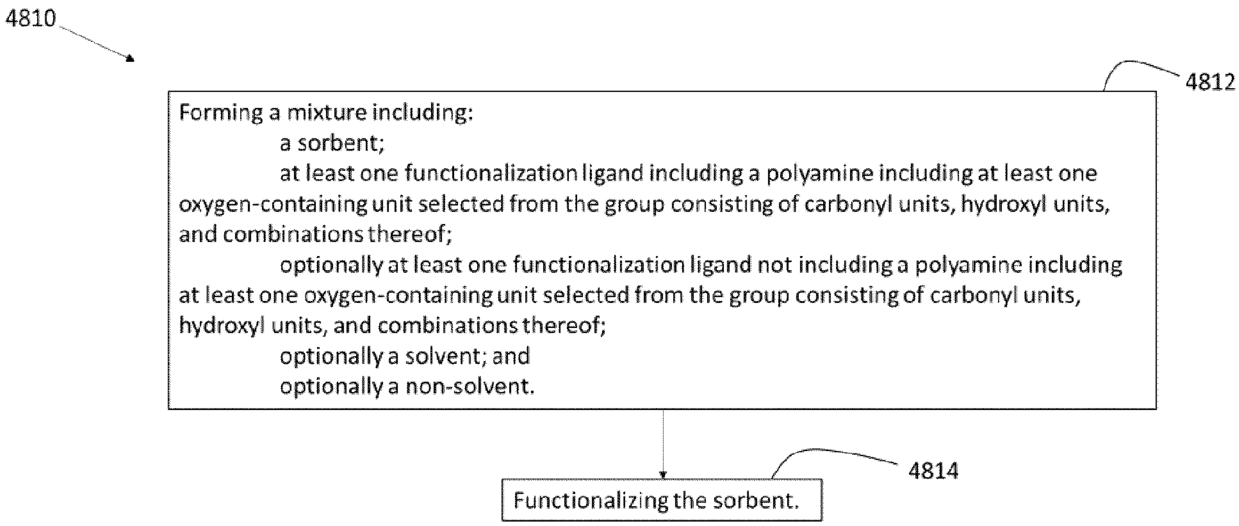
4810
4812
Forming a mixture including:
a sorbent;
at least one functionalization ligand including a polyamine including at least one oxygen-containing unit selected from the group consisting of carbonyl units, hydroxyl units, and combinations thereof;
optionally at least one functionalization ligand not including a polyamine including at least one oxygen-containing unit selected from the group consisting of carbonyl units, hydroxyl units, and combinations thereof;
optionally a solvent; and
optionally a non-solvent.
4814
Functionalizing the sorbent.

FIG. 48

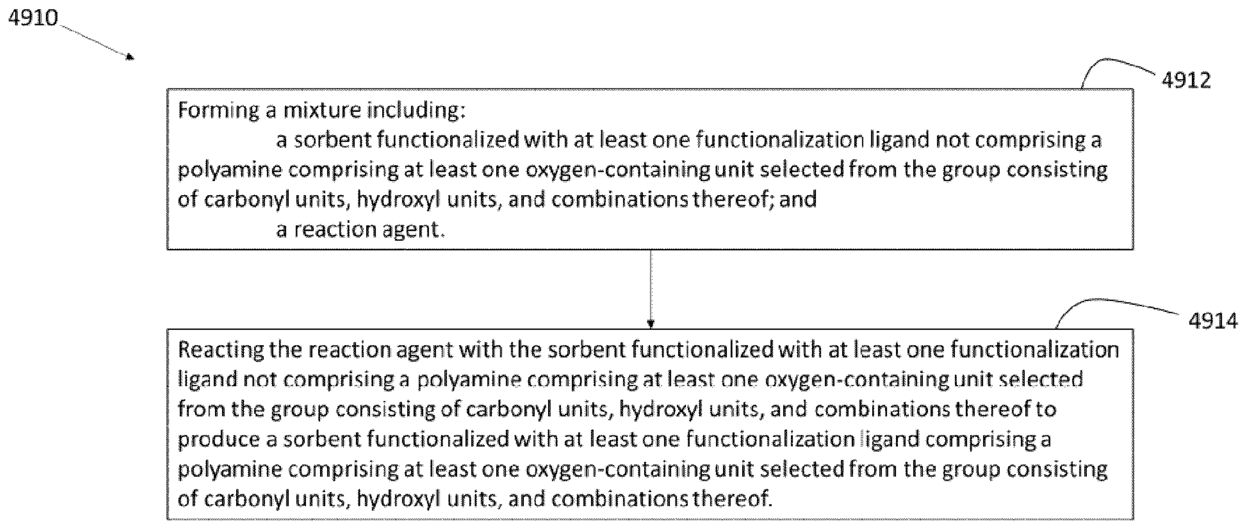
4910
4912
Forming a mixture including:
a sorbent functionalized with at least one functionalization ligand not comprising a polyamine comprising at least one oxygen-containing unit selected from the group consisting of carbonyl units, hydroxyl units, and combinations thereof; and
a reaction agent.
4914
Reacting the reaction agent with the sorbent functionalized with at least one functionalization ligand not comprising a polyamine comprising at least one oxygen-containing unit selected from the group consisting of carbonyl units, hydroxyl units, and combinations thereof to produce a sorbent functionalized with at least one functionalization ligand comprising a polyamine comprising at least one oxygen-containing unit selected from the group consisting of carbonyl units, hydroxyl units, and combinations thereof.

FIG. 49

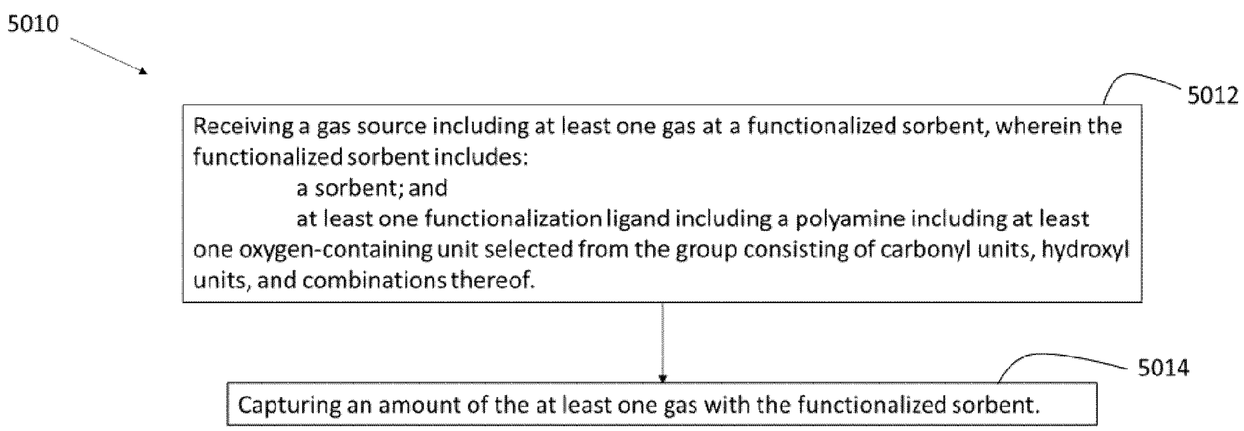
5010
5012
Receiving a gas source including at least one gas at a functionalized sorbent, wherein the functionalized sorbent includes:
a sorbent; and
at least one functionalization ligand including a polyamine including at least one oxygen-containing unit selected from the group consisting of carbonyl units, hydroxyl units, and combinations thereof.
5014
Capturing an amount of the at least one gas with the functionalized sorbent.

FIG. 50

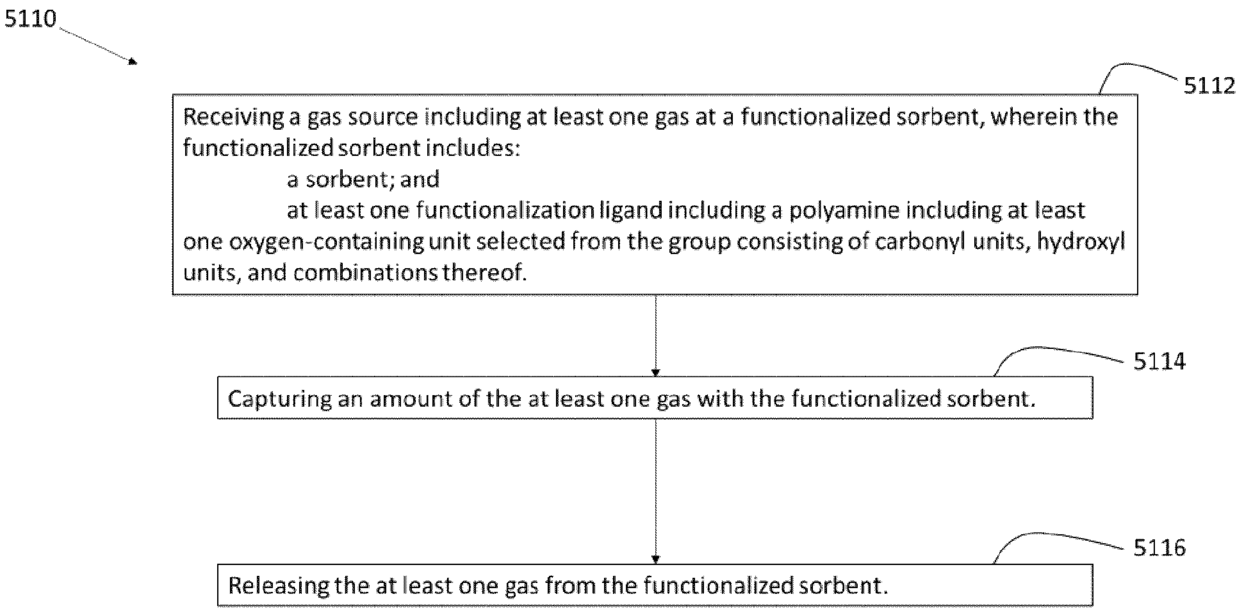
5110
5112
Receiving a gas source including at least one gas at a functionalized sorbent, wherein the functionalized sorbent includes:
a sorbent; and
at least one functionalization ligand including a polyamine including at least one oxygen-containing unit selected from the group consisting of carbonyl units, hydroxyl units, and combinations thereof.
5114
Capturing an amount of the at least one gas with the functionalized sorbent.
5116
Releasing the at least one gas from the functionalized sorbent.

FIG. 51

Europäisches Patentamt
European Patent Office
Office européen des brevets

# EUROPEAN SEARCH REPORT

Application Number
EP 25 15 8468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WOOSUNG CHOI ET AL: "Epoxide-functionalization of polyethyleneimine for synthesis of stable carbon dioxide adsorbent in temperature swing adsorption", NATURE COMMUNICATIONS, vol. 7, no. 1, 30 August 2016 (2016-08-30), XP055655369, DOI: 10.1038/ncomms12640 * figures 1-4 * | 1-10, 13-15 | INV. B01J20/08 B01D53/02 B01J20/10 B01J20/22 B01J20/28 B01J20/32 B01J20/34 |
| X | JUNG HYUNCHUL ET AL: "Effect of crosslinking on the CO2adsorption of polyethyleneimine-impregnated sorbents", CHEMICAL ENGENEERING JOURNAL, ELSEVIER, AMSTERDAM, NL, vol. 307, 3 September 2016 (2016-09-03), pages 836-844, XP029774771, ISSN: 1385-8947, DOI: 10.1016/J.CEJ.2016.09.005 * Abstract, point 2.2; figures 6-7 * | 1-10, 13-15 | TECHNICAL FIELDS SEARCHED (IPC) |
| X | CN 115 350 685 A (UNIV QINGHAI NORMAL) 18 November 2022 (2022-11-18) * paragraph [0012]; claims 1-3; example 6 * | 1-3,8,9, 11 | B01J B01D |
| A | ZHU XUANCAN ET AL: "Recent advances in direct air capture by adsorption", CHEMICAL SOCIETY REVIEWS, vol. 51, no. 15, 1 August 2022 (2022-08-01), pages 6574-6651, XP093273866, UK ISSN: 0306-0012, DOI: 10.1039/d1cs00970b * figure 46 * | 1-15 | |

-/--

The present search report has been drawn up for all claims

2

| Place of search | Date of completion of the search | Examiner |
|---|---|---|
| The Hague | 31 July 2025 | Mc Donnell, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 15 8468

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/046271 A1 (LEE JOO-YOUP [US] ET AL) 16 February 2023 (2023-02-16)<br>* paragraph [0120] - paragraph [0122] *<br>----- | 1-15 | |
| A | US 2021/197172 A1 (GOEPPERT ALAIN [US] ET AL) 1 July 2021 (2021-07-01)<br>* [0082];<br>paragraph [0026] - paragraph [0031] *<br>----- | 1-15 | |

TECHNICAL FIELDS SEARCHED (IPC)

The present search report has been drawn up for all claims

2

| Place of search | Date of completion of the search | Examiner |
|---|---|---|
| The Hague | 31 July 2025 | Mc Donnell, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 25 15 8468

This annex lists the patent family members relating to the patent documents cited in the above-mentioned European search report. The members are as contained in the European Patent Office EDP file on
The European Patent Office is in no way liable for these particulars which are merely given for the purpose of information.

31-07-2025

| Patent document cited in search report | | Publication date | Patent family member(s) | | | Publication date |
|---|---|---|---|---|---|---|
| CN 115350685 | A | 18-11-2022 | NONE | | | |
| US 2023046271 | A1 | 16-02-2023 | NONE | | | |
| US 2021197172 | A1 | 01-07-2021 | AU | 2016207044 | A1 | 03-08-2017 |
| | | | CA | 2973572 | A1 | 21-07-2016 |
| | | | EP | 3244993 | A1 | 22-11-2017 |
| | | | JP | 6663918 | B2 | 13-03-2020 |
| | | | JP | 2018509280 | A | 05-04-2018 |
| | | | KR | 20170127416 | A | 21-11-2017 |
| | | | US | 2016199810 | A1 | 14-07-2016 |
| | | | US | 2019168185 | A1 | 06-06-2019 |
| | | | US | 2021197172 | A1 | 01-07-2021 |
| | | | WO | 2016114991 | A1 | 21-07-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2023082729 W
- US 2022082243 W